# EUROPÄISCHE PATENTSCHRIFT

(11) **EP 4 479 479 B1**
(45) Veröffentlichungstag und Bekanntmachung des Hinweises auf die Patenterteilung: **13.08.2025**
(21) Anmeldenummer: 22730132.2
(22) Anmeldetag: 17.05.2022
(51) Int. Cl.: C08L 83/16, C09D 183/16

(54) **SILPHENYLENPOLYMERE**
SILPHENYLENE POLYMERS
POLYMÈRES DE SILPHÉNYLÈNE

(43) Veröffentlichungstag der Anmeldung: 25.12.2024
(73) Patentinhaber: Wacker Chemie AG, 81671 München (DE)
(72) Erfinder: SANDMEYER, Frank, 84508 Burgkirchen (DE); KNÖR, Sebastian, 84547 Emmerting (DE); KOCH, Vanessa, 81379 München (DE)
(74) Vertreter: Wimmer, Andreas
(86) Internationale Anmeldenummer: PCT/EP2022/063332
(87) Internationale Veröffentlichungsnummer: WO 2023/222203

(56) Entgegenhaltungen:
- EP-A2- 0 913 420
- EP-B1- 3 133 106
- US-B2- 9 359 478

## Beschreibung

Die vorliegende Erfindung betrifft radikalisch härtbare Silphenylenpolymere, ein Verfahren zu deren Herstellung und deren Verwendung als Bindemittel in Hochfrequenzanwendungen.

### Stand der Technik:

Mit der fortschreitenden Erschließung der Hochfrequenz-technologie für die drahtlose Kommunikation steigt der Bedarf an Materialien, die zu ihrer Realisierung geeignet sind. Dies betrifft alle Bereiche von Materialien wie Kupferfolien, Bindemittel, Glasfasern, etc. Bei den Bindemitteln sind die klassischer Weise für die Herstellung von kupferkaschierten Laminaten bzw. infolge zur Platinenherstellung verwendeten Epoxidharze aufgrund zu hoher dielektrischer Verlustfaktoren nicht mehr einsetzbar. Polytetrafluorethylen, das einen sehr niedrigen dielektrischen Verlustfaktor besitzt und für Hochfrequenzanwendungen unter diesem Aspekt gut einsetzbar ist, besitzt andere Nachteile, insbesondere die schlechte Verarbeitbarkeit und schlechte Haftungseigenschaften, die eine Alternative wünschenswert machen. Polyphenylenether werden derzeit als Bindemittel für dieses Anwendungsgebiet intensiv genutzt, da sie niedrige dielektrische Verlustfaktoren mit guten mechanischen und thermischen Eigenschaften und Wasserabweisung verbinden. Daneben werden derzeit auch andere organische Polymere in den aktuellen Entwicklungstätigkeiten für dieses Anwendungsfeld berücksichtigt, wie beispielsweise Bismaleimidpolymere, Bismaleimid Triazin Copolymere und Kohlenwasserstoffharze, wobei diese Aufzählung durch weitere ergänzt werden könnte.

Polyorgansiloxane besitzen grundsätzlich exzellente Hitzefestigkeit, Bewitterungsstabilität und Hydrophobie, sind flammfest und verfügen über niedrige dielektrische Verlustfaktoren.

Diese Eigenschaftsprofile qualifizieren sowohl die genannten organischen Polymere als auch die Polyorganosiloxane für den Einsatz als Bindemittel für die Herstellung von hochfrequenzfähigen kupferkaschierten Laminaten und Bauteilen, wie Platinen und Antennen. Daher ist es naheliegend, die positiven Eigenschaften dieser Materialklassen für moderne Hochfrequenzanwendungen zu nutzen, wobei sie jeweils sowohl alleine als auch in Kombination miteinander verwendet werden können, um ihre Leistungsfähigkeit symbiotisch zu erhöhen. Entsprechende Versuche sind bereits im Stand der Technik dokumentiert.

Polare Substituenten sind dabei unerwünscht, da sie den dielektrischen Verlustfaktor in die Höhe treiben. In diesem Zusammenhang besitzen Polyorganosiloxane einen inhärenten Nachteil gegenüber den anderen organischen Bindemitteln, da ihr Gerüst aus Siliziumatomen und Sauerstoffatomen aufgebaut ist, die sich in der Regel abwechseln. Der Unterschied in der Elektronegativität zwischen Silizium und Sauerstoff beträgt nach der Elektronegativitätsskala von Allred und Rochow 3,50 - 1,74 = 1,76. Dabei ist der Elektronegativitätswert für Silizium 1,74 und 3,5 ist der Elektronegativitätswert für Sauerstoff. Im Gegensatz dazu beträgt die Elektronegativitätsdifferenz zwischen Kohlenstoff und Sauerstoff lediglich 3,5 - 2,5 = 1,0, wobei 2,5 der Elektronegativitätswert für Kohlenstoff ist. Nun ist bekannt, dass Elektronegativitätsunterschiede sterisch abgeschirmt werden können und nach außen nicht in Erscheinung treten, wie etwa bei Polytetrafluorethylen, das trotz einer Elektronegativitätsdifferenz zwischen Kohlenstoff und Fluor von 1,67 ausgezeichnete dielektrische Eigenschaften aufweist. Eine ähnliche abschirmende Wirkung könnte man symmetrischen Polydiorganosiloxanen, beispielsweise Polydimethylsiloxanen unterstellen. Im Gegensatz zu Polytetrafluorethylen besitzen Polydimethylsiloxane jedoch keine geeigneten Verarbeitungseigenschaften für die Verwendung als Bindemittel für Hochfrequenzanwendungen. Beispielsweise ist mit Polydiorganosiloxanen die Herstellung von Prepregs und deren nachfolgende Aushärtung nicht möglich und es werden keine ausreichend hohen Viskositäten erreicht, die ein Wegfließen der Polydiorganosiloxane unter dem Einfluss der Hitze von geschmolzenem Zinn im Rahmen eines Lötvorganges verhindern. Auch durch Vernetzung, wie beispielsweise die für die Herstellung von metallkaschierten Laminaten vorzugsweise angewandte radikalische Polymerisation der verwendeten Bindemittel, können Polydiorganosiloxane keine ausreichende mechanische Festigkeit unter Hitzebelastung erreichen. Anstelle hochvernetzter auch unter Temperaturbelastung formstabiler Körper, wie es dem Bedarf dieser Anwendung entspricht, werden aus Polyorganosiloxanen nach deren Vernetzung unter dem Einfluss von Hitze gegebenenfalls reversibel verformbare, also elastomere Polymerisate erhalten. Außerdem sind Polydiorganosiloxane mit organischen Polymeren unverträglich, so dass die Möglichkeiten geeignete Bindemittelmischungen zu formulieren erheblich eingeschränkt ist, wenn nicht sogar ausgeschlossen.

Als Bindemittel für Hochfrequenzanwendungen kommen Polyorganosiloxane in Frage, die über eine dreidimensionale Gerüststruktur verfügen und die darüber hinaus chemisch zu Duromeren vernetzbar sind. Entsprechende Beispiele sind in der Patentliteratur bekannt, siehe etwa in US 2016/0244610 (Zusammensetzungen aus Mischungen von olefinisch ungesättigten MQ-Harzen mit ungesättigt modifizierten Polyphenylenethern), US 2018/0220530 (Zusammensetzungen aus Gemischen von Polyphenylenethern mit MT, MDT, MDQ und MTQ Siliconharzen) oder US 2018/0215971 (Zusammensetzungen aus Gemischen von Polyphenylenethern mit TT und TQ Siliconharzen).

In diesen Erfindungen werden dielektrischen Verlustfaktoren von < 0,007 angestrebt. Diese Anforderung wird mit frisch hergestellten Probekörpern aus den dort beschriebenen Materialien erreicht, wenngleich auch nicht signifikant unterschritten, so dass diese Stände der Technik deutlichen Raum für Verbesserungen offenlassen, da sie von den dielektrischen Eigenschaften von Polytetrafluorethylenen, die dielektrische Verlustfaktoren im Bereich 0,0001 erreichen, deutlich entfernt sind. Da in Polyorganosiloxanen mit dreidimensionaler Gerüststruktur eine vollständige Abschirmung der Polaritäten der Si-O-Si-Gerüsteinheiten nicht möglich ist, wird dieses Strukturelement zum inhärenten Nachteil für Polyorganosiloxane und wird sie stets daran hindern niedrigere dielektrische Verlustfaktoren zu erreichen.

Versuche Teile des Polyorganosiloxangerüstes durch andere verbrückende Einheiten als durch Si-O-Si-Einheiten zu ersetzen sind beispielsweise dokumentiert in US 3395168. Diesen Erfindungen gemeinsam ist jedoch, dass signifikante Anteile des Polyorganosiloxangerüstes trotzdem erhalten bleiben.

US 6072016 lehrt lineare kondensationsvernetzende Silphenylenpolymere als Teil einer kondensationshärtenden Siliconzubereitung. Die dort beschriebenen linearen kondensationsvernetzenden Silphenylenpolymere selbst sind durch hydrolysierbare Endgruppen kondensierbar. Grundsätzlich können diese linearen kondensationsvernetzenden Silphenylenpolymere frei sein von Si-O-Si-Einheiten, jedoch entstehen aus ihnen bestimmungsgemäß durch die Aushärtung Polyorganosiloxane, in denen teilweise anstelle von Si-O-Si-Einheiten andere Verknüpfungen benachbarter Siliziumatome vorliegen, wobei die die Si-Atome verbrückenden Einheiten Si-C-gebunden vorliegen. Die Silphenylenpolymeren enthalten neben Silphenyleneinheiten auch Silalkyleneinheiten, was ein unvermeidbarer Nebeneffekt ihrer Herstellung durch Hydrosilylierungsreaktionen von olefinisch ungesättigt terminierten Silphenylenbausteinen ist. Reine Polysilphenylene sind auf diese Weise nicht zugänglich und werden in US 6072016 auch nicht gelehrt. Außerdem ist anzumerken, dass die Ausgangsmaterialien, die zur Hydrosilylierung in US 6072016 nur durch metallvermittelte Kopplungsreaktionen zugänglich sind, wie etwa der Grignardreaktion oder einer Kopplung nach Wurtz. Dies sind in technischem Maßstab zwar umsetzbare jedoch herausfordernde Syntheseverfahren, so dass der gesamte Aufwand zur Realisierung dieser Technologie so erheblich ist, dass man davon ausgehen muss, dass sich diese Technologie aufgrund fehlender Wirtschaftlichkeit nicht oder nur in extrem hochpreisigen und entsprechend kleinstvolumigen Märkten durchsetzen kann. Hinsichtlich der dielektrischen Eigenschaften ist zu erwarten, dass aufgrund von Platinresten im Produkt aus der Hydrosilylierung erhöhte dielektrische Verlustfaktoren zu erwarten sind, so dass ein weiterer Schritt notwendig wäre, um die ohnehin bereits aufwändig Technologie für Hochfrequenzanwendungen nutzbar zu machen. D.h. der Stand der Technik gemäß US 6072016 müsste zunächst weiterentwickelt werden, um technisch in der Zielanwendung der vorliegenden Erfindung einsetzbar zu sein, abgesehen von den zusätzlichen wirtschaftlichen Nachteilen, die daraus erwachsen.

US 10982053 beschreibt Polymere, umfassend mit Silphenyleneinheiten modifizierte lineare aliphatische Polyether. Die dort beschriebenen Polymere können Phenol- oder Epoxidgruppen tragen. Die dort beschriebenen Copolymere werden durch Hydrosilylierung olefinisch ungesättigter Polyether mit Si-H-funktionellen Silphenyleneinheiten erhalten. Der Lehre von US 10982053 folgend sind reine Silphenylenpolymere nicht erhältlich. Die wesentliche Struktureinheit der Polymeren gemäß US 10982053 ist die Polyethereinheit.

US 2011/0275768 vertritt eine ähnliche Lehre wie US 10982053, wobei die organischen Einheiten, die zwischen den individuellen Silphenyleneinheiten sitzen, sich von den Polyethereinheiten gemäß US 10982053 unterscheiden. Auch im Falle von US 2011/0275768 sind siliziumorganische Polymere ausschließlich oder überwiegend aus Silphenyleneinheiten nicht durch den Gegenstand der dort beschriebenen Lehre abgedeckt.

EP 0913420 lehrt alternierend aufgebaute Silphenylensilalenpolymere, die durch Hydrosilylierungsreaktionen von olefinisch ungesättigten Silphenylenbausteinen mit Si-H-terminalen Silphenylenbausteinen erhalten werden, ähnlich wie US 6072016. Hinsichtlich der Wirtschaftlichkeit gelten hier die gleichen Aussagen, wie sie bereits für US 6072016 dargestellt wurden. Auch hier werden aufwändige metallvermittelte Kopplungsreaktionen benötigt, um die erforderlichen Ausgangsmaterialien herzustellen. Im Anschluss kann erst die Hydrosilylierung erfolgen, die selbst aufgrund des verwendeten Platinkatalysators wiederum eine teure Synthese ist. Das Platin verbleibt im Produkt und erhöht den dielektrischen Verlustfaktor. Platin müsste erst abgetrennt werden, um hochfrequenztaugliche dielektrischen Eigenschaften zu erreichen. Das erfordert einen weiteren Schritt und eine Verbesserung des Standes der Technik gemäß EP 0913420, die über die Lehre von EP 0913420 hinausgeht.

In den Copolymeren gemäß EP 0913420 wechseln sich wie die Bezeichnung als Silphenylensilalkylenpolymere bereits suggeriert Phenylen- und Alkylenverbrückung regelmäßig ab. Dies ist dadurch unvermeidbar, dass aus den zum Polymeraufbau benötigten Vinylgruppen, die durch Hydrosilylierung mit Si-H-Einheiten verbrückende Alkandiyleinheiten werden, die sich im fertigen Polymergerüst regelmäßig mit den Phenyleneinheiten abwechseln. Die Si-Atome verbrückenden Phenyleneinheiten ihrerseits sind wie oben beschrieben nur durch metallvermittelte Kopplungsreaktionen erhältlich, sei es die Grignard Reaktion oder eine Kopplung nach Art einer Wurtz Reaktion. In den Silphenylen Silalkylen Copolymeren gemäß EP 0913420 sind daher 50% der verbrückenden Reste, die benachbarte Si-Atome verbrücken Arylenreste und 50% sind Alkylenreste, bzw. Alkandiylreste. Da ausschließlich symmetrisch zweifach funktionalisierte Ausgangsbausteine eingesetzt werden, werden hochmolekulare lineare Polymere erhalten, die mit den restlichen Si-H bzw. den olefinischen Gruppen terminiert sind. Dabei sind anstelle von zweifach olefinisch ungesättigten Silphenylenbausteinen auch zweifach hydrosilylierbare rein organische Ausgangsbausteine verwendbar, wie etwa Diolefine oder Acetylene. Ausreichend gut löslich, um in der Zielanwendung als Beschichtungsstoffe verwendet werden zu können, sind die dort beschriebenen Silphenylensilalkylenpolymeren nur, wenn ein Mindestanteil von 20 mol% siliziumgebundenen Phenylsubstituenten vorliegt. Statistisch aufgebaute Silphenylenpolymere, sind in EP 0913420 weder beschrieben, noch sind sie durch die in EP 0913420 beschriebenen Verfahren zugänglich. Die Bandbreite der Strukturchemie, die gemäß diesem Stand der Technik zugänglich ist, ist daher sehr eingeschränkt. Einen generellen Zugang zu beliebigen Silphenylenpolymeren lehrt EP 0913420 damit nicht. Die Mitverwendung von aliphatischen Einheiten in den Silphenylen-Silalkylen Copolymeren gemäß EP 0913420 ist unvermeidbar. Es ist bekannt, dass mit aliphatischen siliziumgebundenen Einheiten geringere thermische Stabilitäten erreicht werden als mit aromatischen siliziumgebundenen Resten. Ersetzt man in den Silphenylen-Silalkylen Copolymeren gemäß EP 0913420 die Silalkyleneinheiten mit Siloxaneinheiten so sind hohe thermische Stabilitäten realisierbar, wie in den bereits zitierten Ständen der Technik teilweise beschrieben. Da sich hierdurch allerdings Nachteile hinsichtlich der erreichbaren dielektrischen Eigenschaften ergeben, wird durch die bekannten Stände der Technik stets entweder eine reduzierte thermische Stabilität oder eine verringerte Leistungsfähigkeit hinsichtlich der dielektrischen Eigenschaften erreicht. Die Kombination aus hoher thermischer Beständigkeit, wie sie aus reinen Silphenylen Polymeren zu erwarten ist und den bestmöglichen elektrisch isolierenden Eigenschaften, erhältlich in einem wirtschaftlichen Verfahren ist aus dem bestehenden Stand der Technik noch nicht herzuleiten. Dieser Aufgabe widmet sich die vorliegende Erfindung.

US 9751989 lehrt kondensationsvernetzbare Polyorganosiloxane mit Oligosilphenyleneinheiten für die Verwendung als Verkapselungsmaterial von LEDs. US 2017/051114 lehrt hydrosilylierungshärtende Zubereitungen enthaltend Si-H-terminierte Oligosilphenylene und alkenylfunktionelle Polyorganosiloxane. In beiden Fällen werden bei bestimmungsgemäßer Verwendung als Endprodukt Polyorganosiloxane erhalten, die sowohl Polyorganosiloxaneinheiten als auch Oligosilphenyleneinheiten aufweisen. Olefinisch ungesättigte radikalisch härtbare Silphenylenpolymere sind nicht Bestandteil der Lehre dieser beiden Schriften.

Das Dokument EP 3 133 106 B1 offenbart Silphenylenalkylenpolymere mit Vinylgruppen.

### Aufgabe und Gegenstand der Erfindung:

Es bestand die Aufgabe darin durch radikalische Polymerisation vernetzbare Polymere bereitzustellen, die die vorteilhaften Eigenschaften dreidimensional vernetzbarer Polyorganosiloxane wie exzellente Hitzefestigkeit, Bewitterungsstabilität, Hydrophobie und Flammfestigkeit mit verbesserten dielektrischen Eigenschaften, insbesondere niedrigeren dielektrischen Verlustfaktoren kombinieren, die für die Verwendung als Bindemittel für metallplattierte Schichtstoffe für elektronische Anwendungen geeignet und wirtschaftlich zugänglich sind.

Dazu gehört, dass sie als reines Bindemittel bei 10 GHz einen dielektrischen Verlustfaktor von nicht mehr 0,0030 besitzen, gegebenenfalls vorhandene den dielektrischen Verlustfaktor senkende Füllstoffe gut benetzen, die Herstellung klebfreier Prepregs gestatten, mit organischen Polymeren verträgliche Zubereitungen ergeben, unter dem Einfluss von Hitze zu formstabilen Formkörpern aushärtbar sind und in den anwendungstypischen Lösemitteln gut löslich sind. Die Aufgabe wird durch die Erfindung gelöst.

Gegenstand der Erfindung sind Silphenylenpolymere der Formel (I)

RₐR¹₄Si[Y[(SiR²_{c}R³_{d})ₑ]_{f}]_{g}YSiRₐR¹_{b} (I),

wobei
R gleiche oder verschiedene Reste sein können und einen Wasserstoffrest oder einen olefinisch oder acetylenisch ungesättigten aliphatischen oder cycloaliphatischen Kohlenwasserstoffrest bedeuten,
R² unabhängig voneinander gleiche oder verschiedene Reste bedeuten, wobei R² einen Wasserstoffrest oder einen gesättigten oder olefinisch oder acetylenisch ungesättigten Si-C gebundenen C₁ - C₁₈ Kohlenwasserstoffrest bedeuten kann, der mit Heteroatomen substituiert sein kann, wobei als Heteroatome Sauerstoffatome und Siliziumatome bevorzugt sind, wobei die mehrere Sauerstoffatome im gleichen Rest R² stets durch Kohlenwasserstoffeinheiten voneinander getrennt vorliegen und Sauerstoffatome und Siliziumatome nicht miteinander zu Si-O-Einheiten verbunden vorliegen sofern beide Heteroatomarten gleichzeitig in einem Rest R² vorliegen, sondern diese sind stets durch Kohlenwasserstoffeinheiten voneinander getrennt sind, wohingegen mehrere Si-Atome im gleichen Reste R² gegebenenfalls durch direkt Si-Si-Bindungen miteinander verbunden vorliegen können und die Si-Atome stets vierwertig sind und die verbliebenen Valenzen der Si-Atome durch weitere Si-C-gebundene Substituenten, vorzugsweise C₁ - C₁₂ Alkyl-, Cycloalkyl- oder Arylreste abgesättigt sind, wobei diese olefinisch oder acetylenisch ungesättigt sein können,
und R² auch olefinisch oder acetylenisch ungesättigte funktionelle Gruppen umfassen kann, die ebenfalls Heteroatome enthalten können, wobei R² auch ein Hydroxyrest oder ein durch ein Sauerstoffatom an das Siliziumatom gebundener einwertiger aliphatischer, cycloaliphatischer oder aromatischer Si-C gebundener, unsubstituierter oder mit Heteroatomen substituierter organischer Kohlenwasserstoffrest mit 1 bis 18 C-Atomen sein kann.

Der Rest R² kann insbesondere auch einen Rest der Formel (II) [Y[(SiR²_{c}R³_{d})ₑ]_{f}]_{g}YSiRₐR¹_{b} bedeuten, wobei Y, R, R¹, R², R³, a, b, c, d, e, f und g die im Text angegebenen Bedeutungen haben.

R¹ und R³ können unabhängig voneinander gleiche oder verschiedene Reste sein und entweder einen Wasserstoffrest oder einen einwertigen aliphatischen, cycloaliphatischen oder aromatischen Si-C gebundenen, unsubstituierten oder mit Heteroatomen substituierten organischen Kohlenwasserstoffrest mit 1 bis 18 C-Atomen bedeuten, der auch ein ungesättigter Kohlenwasserstoffrest sein kann, wobei R¹ und R³ auch ein Hydroxyrest oder ein durch ein Sauerstoffatom an das Siliziumatom gebundener einwertiger aliphatischer, cycloaliphatischer oder aromatischer Si-C gebundener, unsubstituierter oder mit Heteroatomen substituierter organischer Kohlenwasserstoffrest mit 1 bis 18 C-Atomen sein können.

Es ist eine erfindungsgemäße Bedingung, dass stets immer mindestens ein olefinisch oder acetylenisch ungesättigter Rest R, R¹, R² oder R³ je Silphenylenpolymer der Formel (I) vorliegen muss. Vorzugsweise liegen mindestens zwei solcher olefinisch oder acetylenisch ungesättigter Reste R, R¹, R² oder R³ je Silphenylenpolymer der Formel (I) vor. Die olefinisch oder acetylenisch ungesättigten Reste R und R¹ liegen dabei stets terminal gebunden vor, die olefinisch oder acetylenisch ungesättigten Reste R² und R³ liegen stets an Si-Atome gebunden vor, die im inneren des Polymergerüstes (= innenständig) liegen. Es gibt keine besondere Einschränkung hinsichtlich dessen, ob die olefinisch oder acetylenisch ungesättigten Gruppen terminal oder innenständig vorliegen. Beides ist möglich, gegebenenfalls auch als Mischform. Es ist jedoch eine erfindungsgemäße Bedingung, dass die bevorzugt mindestens 2 olefinisch oder acetylenisch ungesättigten Gruppen an verschiedenen Si-Atomen vorliegen und nicht am selben Si-Atom gebunden sind.

Hinsichtlich der Anzahl der sauerstoffgebundenen Reste R, R¹, R² und R³ ist zu beachten, dass die Summe aller an Si-Atomen durch ein Sauerstoffatom gebundenen organischen Reste bezogen auf die Summe aller Si-gebundenen Reste R, R¹, R² und R³ als 100 mol% höchstens 10 mol-% betragen darf, besonders bevorzugt höchstens 8 mol-%, insbesondere höchstens 5 mol-%, ganz besonders bevorzugt weniger als 1 mol-%. Es ist dabei zu berücksichtigen, dass durch Sauerstoffatome an Si-Atome gebundenen Reste in den erfindungsgemäßen Silphenylenpolymeren der Formel (I) nicht erwünscht sind. Sie tragen nicht zu einer besseren Leistungsfähigkeit der erfindungsgemäßen Silphenylenpolymeren bei, sondern bewirken im Gegenteil eine reduzierte Leistungsfähigkeit. Es ist daher am meisten bevorzugt, dass in den erfindungsgemäßen Silphenylenpolymeren keine an Si-Atomen durch Sauerstoffatome gebundene Reste vorliegen. Allerdings kann deren Bildung aufgrund von Nebenreaktionen während der Synthese nicht immer vollständig unterdrückt werden. Daher sind begrenzte Mengen als erfindungsgemäß zugelassen, wenn auch nicht bevorzugt. Die beste Leistungsfähigkeit wird erreicht bei vollständiger Vermeidung jeglicher Si-O-Bindungen in den erfindungsgemäßen Silphenylenpolymeren.

Die erfindungsgemäßen Silphenylenpolymere enthalten vorzugsweise weniger als 10 mol-% Si-O-verknüpfte Baugruppen, besonders bevorzugt weniger als 8 mol-% Si-O-verknüpfte Baugruppen, insbesondere weniger als 5% Si-O-verknüpfte Baugruppen, ganz besonders bevorzugt weniger als 1% Si-O-verknüpfte Baugruppen. Unter Si-O-verknüpften Baugruppen werden dabei sowohl Si-O-Si-Gerüsteinheiten als auch Si-O-Einheiten verstanden, bei denen das Sauerstoffatom nur an einer Seite an ein Siliziumatom gebunden vorliegt und der zweite sauerstoffgebundene Rest nicht durch ein Siliziumatom an den Sauerstoff gebunden vorliegt. Insbesondere ist es bevorzugt, dass die erfindungsgemäßen Silphenylenpolymere frei von Si-O-Si-Einheiten sind. Die erfindungsgemäßen Silphenylen Polymere können mit Polyorganosiloxanen und/oder Polysiloxan-Polysilphenylen- Copolymeren und/oder organischen Polymeren abgemischt und gegebenenfalls zusammen mit diesen verwendet werden, sofern dies für die gewählte Anwendung vorteilhaft ist. Solche Gemische, ebenso wie solche, die neben den erfindungsgemäßen Silphenylenpolymeren organische Polymere, Additive, Füllstoffe, Pigmente, etc. enthalten, sind ebenfalls erfindungsgemäß.

Y bedeutet eine chemische Bindung oder einen zwei- bis zwölfwertigen aromatischen, alkylaromatischen, cycloalkylaromatischen oder einen zwei- bis zwölfwertigen aliphatischen oder cycloaliphatischen Rest mit 1 bis 48 C-Atomen, dessen Hauptkette frei ist von Heteroatomen, so dass die Hauptkette also beispielsweise keine Ether- oder Polyetherstruktur aufweist, sondern diese gegebenenfalls nur als seitenständiger Rest an der Hauptkette gebunden vorliegen können, wobei Y auch olefinisch oder acetylenisch ungesättigte funktionelle Gruppen enthalten kann, die außer Kohlenstoffatomen auch Heteroatome, wie N, P, O und S-Atome umfassen können, wobei Sauerstoffatome als Heteroatome in den funktionellen Gruppen besonders bevorzugt sind, wobei es ausgeschlossen ist, dass mehrere Sauerstoffatome unmittelbar aneinander gebunden vorliegen.

Der Rest Y, sofern er keine chemische Bindung bedeutet, ist stets durch Si-C-Verknüpfung an die durch ihn verbrückten Siliziumatome gebunden. Y bedeutet vorzugsweise einen zweibis zwölfwertigen aromatischen, alkylaromatischen, cycloalkylaromatischen Rest. Es ist eine erfindungsgemäße Bedingung, dass stets eine größere Anzahl solcher zwei- bis zwölfwertigen aromatischen, alkylaromatischen und cycloalkylaromatischen Reste vorliegen als zwei- bis zwölfwertige aliphatische oder cycloaliphatische Reste und die zwei- bis zwölfwertigen aliphatischen oder cycloaliphatischen Reste sich mit den zweibis zwölfwertigen aromatischen, alkylaromatischen, cycloalkylaromatischen Resten statistisch abwechseln und nicht in einer regelmäßigen Folge. Das bedeutet auch, dass die zweibis zwölfwertigen aromatischen, alkylaromatischen, cycloalkylaromatischen Reste und die zwei- bis zwölfwertigen aliphatischen oder cycloaliphatischen Reste in Blöcken vorliegen können, aus jeweils einer größeren Anzahl zwei- bis zwölfwertigen aromatischen, alkylaromatischen, cycloalkylaromatischen Resten bzw. zwei- bis zwölfwertigen aliphatischen oder cycloaliphatischen Resten.

Es ist eine weitere Bedingung an die erfindungsgemäßen Silphenylenpolymere, dass stets eine größere Zahl an Resten Y vorliegt, die einen zwei- bis zwölfwertigen aromatischen, alkylaromatischen und cycloalkylaromatischen Rest bedeuten, als Reste Y vorliegen, die eine chemische Bindung bedeuten. Bezogen auf alle verbrückenden Reste Y als 100 mol-% sind mindestens 55 mol-% Reste Y, die einen zwei- bis zwölfwertigen aromatischen, alkylaromatischen und cycloalkylaromatischen Rest bedeuten, bevorzugt mindestens 60 mol-%, besonders bevorzugt mindestens 70 mol-%, insbesondere mindestens 80 mol-%. In einer besonders bevorzugten Form der Erfindung sind alle Reste Y solche, die einen zwei- bis zwölfwertigen aromatischen, alkylaromatischen und cycloalkylaromatischen Rest bedeuten.

Die Silphenylen Polymere der Erfindung sind beliebig zusammengesetzt, d.h. statistisch zusammengesetzt. Die Bedingung der statistischen Zusammensetzung wird zwanglos durch das zur Synthese angewandte Verfahren erreicht, das die Bildung von Silphenylenpolymeren mit sich regelmäßig abwechselnden aromatischen Einheiten enthaltenen Resten Y mit aliphatischen oder cycloaliphatischen Resten Y nicht begünstigt.

Mehrere Reste Y können ihre Bedeutung unabhängig voneinander haben, so dass mehrere Reste Y im Rahmen der angegebenen Bedeutungen in einem Silphenylenpolymer der Formel (I) unterschiedliche Reste sein können.

Die Indices haben folgende Bedeutung:
a bedeutet eine Zahl im Wert von 1 oder 2, vorzugsweise 1.
b bedeutet eine Zahl im Wert von 1 oder 2, vorzugsweise 2, wobei die Summe a + b = 3 ist.
c bedeutet eine Zahl im Wert von 0, 1 oder 2.
d bedeutet eine Zahl im Wert von 0, 1 oder 2,
   wobei die Summe c + d = 2 ist.
e bedeutet eine Zahl von 1 bis 12, vorzugsweise von 1 bis 6, besonders bevorzugt 1 bis 3, insbesondere 1. Falls e in [(SiR²_{c}R³_{d})ₑ] eine Zahl größer als 1 bedeutet, dann liegen mehrere Einheiten der Formel (SiR²_{c}R³_{d}) über Si-Si-Bindungen aneinander gebunden vor, so dass Disilan-, Trisilan- etc. bis hin zu Polysilaneinheiten erhalten werden, je nach Wert von e.
f bedeutet eine Zahl im Wert von 1 bis 12, insbesondere 1.
g bedeutet eine Zahl im Wert von 3 bis 250, besonders bevorzugt von 4 bis 150, insbesondere von 5 bis 50.

Beispiele für Reste R außer dem Wasserstoffatom sind Alkenylreste, wie der 7-Octenyl-, 5-Hexenyl-, 3-Butenyl-, Allyl- und der Vinylrest. Darüber hinaus sind Acryloyloxy-, bzw. Methacryloyloxyreste von Acrylsäure oder Methacrylsäure sowie den Acrylsäureestern oder Methacrylsäureestern von unverzweigten oder verzweigten Alkoholen mit 1 bis 15 C-Atomen enthalten. Bevorzugte solche Reste sind diejenigen, die sich aus Methylacrylat, Methylmethacrylat, Ethylacrylat, Ethylmethacrylat, Propylacrylat, Propylmethacrylat, n-Butylacrylat, n-Butylmethacrylat, iso-Butylacrylat, iso-Butylmethacrylat, t-Butylacrylat, t-Butylmethacrylat, 2-Ethylhexylacrylat und Norbornylacrylat ableiten. Besonders bevorzugt sind Methylacrylat, Methylmethacrylat, n-Butylacrylat, iso-Butylacrylat, t-Butylacrylat, 2-Ethylhexylacrylat, und Norbornylacrylat. Diese Reste sind vorzugsweise nicht direkt an das Siliziumatom gebunden, sondern sind über einen Kohlenwasserstoffspacer gebunden, der 1 bis 12 Kohlenstoffatome umfassen kann, wobei er vorzugsweise 1 oder 3 Kohlenstoffatome umfasst und außer den Heteroatomen, die im Acryloyloxy- bzw. Methacryloyloxyrest enthalten sind, keine weiteren Heteroatome umfasst.

Beispiele für Reste R¹, R² und R³ außer dem Wasserstoffatom sind gesättigte oder ungesättigte Kohlenwasserstoffreste, die aromatische oder aliphatische Doppelbindungen enthalten können, z. B. Alkylreste, wie der Methyl-, Ethyl-, n-Propyl-, iso-Propyl-, n-Butyl-, iso-Butyl-, tert.- Butyl-, n-Pentyl-, iso-Pentyl-, neo-Pentyl- und der tert.- Pentylrest, Hexylreste, wie der n-Hexylrest, Heptylreste, wie der n-Heptylrest, Octylreste, wie der n-Octylrest und iso- Octylreste, wie der 2, 2, 4-Trimethylpentyl- und der 2- Ethylhexylrest, Nonylreste, wie der n-Nonylrest, Decylreste, wie der n-Decylrest, Dodecylreste, wie der n-Dodecylrest, Tetradecylreste, wie der n-Tetradecylrest, Hexadecylreste, wie der n-Hexadecylrest und Octadecylreste, wie der n-Octadecylrest, Cycloalkylreste, wie Cyclopentyl-, Cyclohexyl- und 4-Ethylcyclohexylrest, Cycloheptylreste, Norbornylreste und Methylcyclohexylreste, Arylreste, wie der Phenyl-, Biphenyl-, Naphthyl- und Anthryl- und Phenanthrylrest; Alkaryl- reste, wie o-, m-, p-Tolylreste, Xylylreste und Ethylphenyl- reste; Aralkylreste, wie der Benzylrest, Alkenylreste, wie der 7-Octenyl-, 5-Hexenyl-, 3-Butenyl-, Allyl- und der Vinylrest sowie der alpha- und der ß-Phenylethylrest.

Bevorzugte Heteroatome, die in den Resten R¹, R² und R³ enthalten sein können, sind Sauerstoffatome.

Darüber hinaus sind auch Stickstoffatome, Phosphoratome, Schwefelatome und Halogenatome wie Chloratome und Fluoratome möglich, aber nicht bevorzugt.

Beispiele für bevorzugte Heteroatome enthaltende organische Reste R¹, R² und R³ sind die Acryloyloxy-, bzw. Methacryloyloxyreste von Acrylsäure oder Methacrylsäure sowie den Acrylsäureestern oder Methacrylsäureestern von unverzweigten oder verzweigten Alkoholen mit 1 bis 15 C-Atomen enthalten. Bevorzugte solche Reste sind diejenigen, die sich aus Methylacrylat, Methylmethacrylat, Ethylacrylat, Ethylmethacrylat, Propylacrylat, Propylmethacrylat, n-Butylacrylat, n-Butylmethacrylat, iso-Butylacrylat, iso-Butylmethacrylat, ^{tert.}Butylacrylat, ^{tert.}Butylmethacrylat, 2-Ethylhexylacrylat und Norbornylacrylat ableiten. Besonders bevorzugt sind Methylacrylat, Methylmethacrylat, n-Butylacrylat, iso-Butylacrylat, ^{tert.}Butylacrylat, 2-Ethylhexylacrylat, und Norbornylacrylat. Diese Reste sind vorzugsweise nicht direkt an das Siliziumatom gebunden, sondern sind über einen Kohlenwasserstoffspacer gebunden, der 1 bis 12 Kohlenstoffatome umfassen kann, wobei er vorzugsweise 1 oder 3 Kohlenstoffatome umfasst und außer den Heteroatomen, die im Acryloyloxy- bzw. Methacryloyloxyrest enthalten sind, keine weiteren Heteroatome umfasst. Vorzugsweise werden die Reste R¹, R² und R³ ausgewählt aus Methyl- Phenyl-, Vinyl-, Acryloyloxy- und Methacryloyloxyresten sowie den Acrylsäureestern oder Methacrylsäureestern von unverzweigten oder verzweigten Alkoholen mit 1 bis 15 C-Atomen.

Weitere bevorzugte Heteroatome umfassende Reste R¹, R² und R³ sind solche der Formel (III).

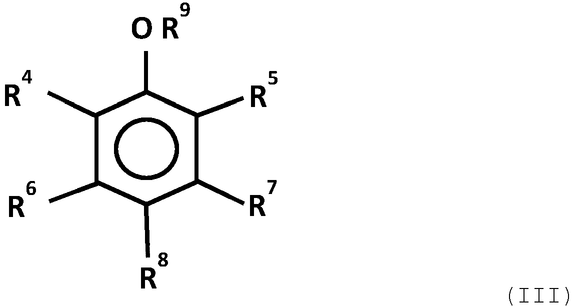

In Formel (III) bedeuten R⁴, R⁵, R⁶, R⁷, R⁸ und R⁹ unabhängig voneinander ein Wasserstoffradikal, eine Kohlenwasserstoffgruppe oder eine mit Fremdatomen substituierte Kohlenwasserstoffgruppe, wobei stets mindestens einer der Reste R⁴, R⁵, R⁶, R⁷, R⁸ und R⁹ eine Kohlenwasserstoffgruppe bedeutet, die über eine Si-C-Bindung an das Siliziumatome gebunden vorliegt, wobei es bevorzugt ist, dass diese Kohlenwasserstoffgruppe, über die der Rest der Formel (III) an ein Siliziumatom gebunden ist, eine C3-Kohlenwasserstoffgruppe ist, die keine Heteroatome enthält. Alternativ kann der Rest R⁴, R⁵, R⁶, R⁷, R⁸ und R⁹ auch eine chemische Bindung sein, so dass der Rest der Formel (III) über eine Si-C-Bindung zum aromatischen Ring direkt an das Siliziumatom gebunden vorliegt.

Beispiele für Reste R⁴, R⁵, R⁶, R⁷, R⁸ und R⁹ sind der Wasserstoffrest, gesättigte Kohlenwasserstoffreste wie der Methyl, Ethyl, n-Propyl, iso-Propyl, der primäre, sekundäre und tertiäre Butylrest, der Hydroxyethylrest, aromatische Reste wie der Phenylethylrest, der Phenylrest, der Benzylrest, der Methylphenylrest, der Dimethylphenylrest, der Ethylphenylrest heteroatomhaltige Reste wie der Hydroxymethylrest, der Carboxyethylrest, der Methoxycarbonylethylrest und der Cyanoethylrest und Acrylat- und Methacrylatreste, wie Methylacrylat, Methylmethacrylat, Ethylacrylat, Ethylmethacrylat, Propylacrylat, Propylmethacrylat, n-Butylacrylat, n-Butylmethacrylat, iso-Butylacrylat, iso-Butylmethacrylat, t-Butylacrylat, t-Butylmethacrylat, 2-Ethylhexylacrylat und Norbornylacrylat, olefinisch oder acetylenisch ungesättigte Kohlenwasserstoffreste. Gegebenenfalls können die benachbarten Reste R⁴ und R⁶ sowie die benachbarten Reste R⁵ und R⁷ auch miteinander zu dem gleich cyclischen gesättigten oder ungesättigten Rest verbunden sein, so dass annelierte polycyclische Strukturen entstehen.

Beispiele für Phenolreste der Formel (III) sind der Phenolrest, der ortho-, meta- oder para-Cresolrest, 2,6-, 2,5-, 2,4- oder 3,5-Dimethylphenolrest, 2-Methyl-6-Phenylphenolrest, 2,6-Diphenylphenolrest, 2,6-Diethylphenolrest, 2-Methyl-6-ethylphenolrest, 2,3, 5-, 2,3,6- oder 2,4,6-Trimethylphenolrest, 3-Methyl-6-tertiär-Butylphenolrest, Thymolrest und 2-Methyl-6-allyl-phenolrest, die gegebenenfalls am Sauerstoffatom substituiert sein können.

Bevorzugte Beispiele für fluorhaltige Reste sind der Trifluorpropyl-, der Nonafluorhexyl- und der Heptadecafluoroctylrest.

Y ist vorzugsweise eine verbrückende organische vorzugsweise aromatische Einheit mit 1 bis 24 C-Atomen zwischen zwei bis zwölf Carbosilyleinheiten. Bevorzugt ist Y zwei-, drei- oder vierwertig, insbesondere zweiwertig.

Bevorzugte verbrückende aromatische Reste Y sind solche der Formel (IVa), (IVb) und (IVc) 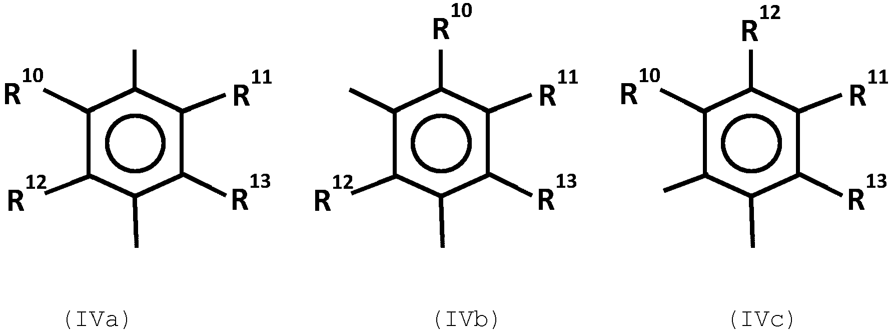 wobei die Reste R¹⁰, R¹¹, R¹² und R¹³ einen Wasserstoffrest bedeuten können oder einen gegebenenfalls substituierten Kohlenwasserstoffrest oder eine Gruppe der Formel OR¹⁴ wobei R¹⁴ einen Kohlenwasserstoffrest bedeutet. Dabei können benachbarte Reste wie beispielsweise R¹⁰ und R¹² oder R¹¹ und R¹³ in Formel (IVa) miteinander zu cylischen Resten gekoppelt vorliegen, so dass annelierte Ringsysteme entstehen. Analoges gilt für die benachbarten Reste in den Formel (IVb) und (IVc).

Typische Beispiele solcher verbrückender aromatischer Reste sind der p-, m- oder o-Phenylenrest, der 2-Methyl-1,4-Phenylenrest, der 2-methoxy-1,4-Phenylenrest, wobei der p-Phenylenrest besonders bevorzugt ist.

Gegebenenfalls, können auch mehrere solcher Reste miteinander gekoppelt sein, so dass beispielsweise zwei oder mehr Einheiten der Formeln (IVa), (IVb) und (IVc) miteinander gekoppelt vorliegen und dieses oligomere verbrückende Strukturelement durch Anbindung der entsprechenden Kohlenstoffatome der terminalen aromatischen Ringe an Siliziumatome vorliegt. Auch Mischformen sind dabei denkbar, also oligomere verbrückende Einheiten, die nicht nur aus Einheiten einer Art der Formeln (IVa), (IVb) oder (IVc) bestehen sondern aus mehreren, also zwei oder drei verschiedenen Arten von Wiederholungseinheiten, die den Formeln (IVa), (IVb) und (IVc) gehorchen. Die aromatischen Einheiten können dabei direkt aneinander gebunden vorliegen oder sie können durch eine verbrückende Gruppe wie eine Alkandiyleinheit, wie beispielsweise der Methylengruppe, der 1,2-Ethandiylgruppe, 1,1-Ethandiylgruppe, der 2,2-Dimethylpropylgruppe oder einer Sulfongruppe miteinander gekoppelt sein.

Weitere Beispiele für aromatische verbrückende Einheiten, die auch Heteroatome enthalten können, sind solche, bei denen zwei gegebenenfalls substituierte Phenolringe über eine Alkandiyl- oder andere Einheit verbrückt sind. Typische Vertreter sind am Phenolsauerstoff substituierte 2,2-Bis(4-hydroxyphenyl)propan-reste (substituierte Bisphenol A Reste), 2,2-Bis(4-hydroxyphenyl)methanreste (subsituierte Bisphenol F Reste), Bis(4-hydroxyphenyl)sulfonreste (Bisphenol S Reste) wobei die Phenolsauerstoffatome typischerweise mit Resten der Art -(C₃H₆)- substituiert sind, wobei die Reste -(C₃H₆)- an Siliziumatome Si-C gebunden sind, wodurch die Verbrückung entsteht.

Bevorzugte nicht durch eine aromatische Einheit verbrückte Reste Y sind außer der chemischen Bindung, Alkandiyl-, Alkendiyl- und Alkindiylreste, die gegebenenfalls Heteroatome enthalten können und die aromatische Gruppen als Substituenten enthalten können, die in diesen Resten jedoch nicht die Aufgabe der Verbrückung übernehmen oder dazu beitragen.

Typische Beispiele sind der Methylenrest, der Methinrest, der vierwertige Kohlenstoff, die 1,1-Ethandiyl- und die 1,2-Ethandiylgruppe, die 1,4 Butandiyl- und die 1,3- Butandiylgruppe, die 1,5 Pentandiyl-, 1,6-Hexandiyl, 1,7-Heptandiyl-, 1,8-Octandiyl-, 1,9-Nonadiyl-, 1,10-Decandiyl- 1,11-Undecandiyl- und die 1,12-Dodecandiylgruppe, die 1,2-Diphenylethandiylgruppe, die 1,2-Phenylethandiyolgruppe, die 1,2-Cyclohexylethandiylgruppe. Sofern eine lineare verbrückende Einheit mehr als ein Kohlenstoffatom besitzt und es das Substitutionsmuster zulässt, kann jede dieser Gruppen außer durch die alpha-omega Konnektivität, also die Verbrückung durch das jeweils erste und letzte Atom einer linearen Einheit auch durch jede andere Konnektivität, also die Verwendung anderer Ketten-C-Atome verbrückend wirken. Zudem sind typische Beispiele nicht nur die linearen Vertreter der genannten verbrückenden Kohlenwasserstoffe, sondern auch deren Isomere, die wiederum durch Anbindung unterschiedlicher C-Atome der Kohlenwasserstoffstruktur an Siliziumatome verbrückend wirken können.

Beispiele für insbesondere bevorzugte Reste aus der Gruppe der nicht aromatischen heteroatomfreien Kohlenwasserstoffreste sind -CH₂CH₂-, -CH(CH₃)-, -CH=CH-, -C(=CH₂)- und -C≡C-.

Beispiele für typische fluorsubstituierte verbrückende Reste Y sind der -C(CF₃)₂-, der -C(H)F-C(H)F- und der -C(F₂)-C(F₂)-Rest.

Beispiele für typische heteroatomhaltige nicht aromatische verbrückende Reste sind beispielsweise zweiwertige Kohlenwasserstoffreste, die sekundäre oder tertiäre Alkoholfunktionen, Keto- und Carbonsäure- und Esterfunktionen enthalten oder seitenständige Etherketten aufweisen. Seitenständig bedeutet dabei, dass der jeweilige Rest seinen Ursprung in einem C-Atom des Restes Y besitzt, das Ende des Restes allerdings nicht an ein Si-Atom gebunden ist, das über einen verbrückenden Rest an weitere Si-Atome gebunden ist. Dadurch leistet dieser Rest keinen Beitrag zu einer Netzwerksstruktur.

Alle Aufzählung sind nur beispielhaft und nicht einschränkend zu verstehen.

Wie später erklärt wird, besteht das bevorzugte Verfahren zur Herstellung der erfindungsgemäßen Silphenylenpolymere in der Anwendung einer Synthese nach Art einer Grignard Reaktion. Hier als Beispiele aufgezählte nicht gegen Magnesium inerte Reste würden in einer solchen Reaktion nicht toleriert und entsprechend umgewandelt. Um sie dennoch an den erfindungsgemäßen Silphenylenpolymeren zu erhalten, werden in der Grignard Reaktion zunächst nur gegen Magnesium inerte Reste eingesetzt, die in nachfolgenden Reaktionen gemäß bekannten Ständen der Technik in die aus den Grignard Reaktionen erhaltenen Vorstufen erzeugt werden. Solche Reste sind beispielsweise Carbonylgruppen enthaltende Reste wie Acryl- oder Methacryloxyreste.

Die erfindungsgemäßen Silphenylenpolymeren können in Abhängigkeit der durchschnittlichen Anzahl der sie bildenden Struktureinheiten pro Molekül in ihrer Viskosität über einen weiten Bereich variieren oder auch Feststoffe sein.

Flüssige erfindungsgemäße Silphenylenpolymere besitzen im unvernetzten Zustand bei 25°C Viskositäten von 20 bis 8 000 000 mPas, bevorzugt von 200 bis 5 000 000 mPas, insbesondere von 250 bis 3 000 000 mPas.

Feste erfindungsgemäße Silphenylenpolymere besitzen im unvernetzten Zustand Glasübergangstemperaturen im Bereich von 25°C bis 250°C, bevorzugt von 30°C bis 230°C, insbesondere von 30°C bis 200°C.

Die erfindungsgemäßen Silphenylenpolymere können grundsätzlich durch alle Verfahren erhalten werden, die zur Bindungsbildung zwischen Si-Atomen und Kohlenstoffatomen führen. Typische Vertreter für solche Reaktionen sind Grignardreaktionen, Kopplungsreaktionen nach Art der Wurtzsynthese, gegebenenfalls mit Anpassungen im Syntheseverlauf und Hydrosilylierungsreaktionen. Alle diese Reaktionstypen sind grundsätzlich Stände der Technik und dem Fachmann daher bekannt. Auf eine grundlegende Übersicht sowohl dieser als auch weiterer metallorganischer Reaktionen zur Si-C-Bindungsknüpfung sei auf das Modul Siliziumchemie der Universität Freiburg verweisen, zugänglich mit dem Link: https://tufreiberg.de/sites/default/files/media/institut-fueranorganische-chemie-10441/lehre/kroke/siliciumchemie5.pdf Hinweise und Informationen zur Vorgehensweise bei Grignardsynthesen sind beispielsweise Synthesis of Silphenylene-Containing Siloxane Resins Exhibiting Strong Hydrophobicity and High Water Vapor Barriers, Xunjun Chen, Minghao Yi, Shufang Wu, Lewen Tan, Yixin Xu, Zhixing Guan, Jianfang Ge and Guoqiang Yin, Coatings 2019, 9, 481 zu entnehmen.

Zur Herstellung der erfindungsgemäßen Silphenylenpolymere ist auf die geeignete Auswahl der Reaktionsbedingungen und der Rohstoffe zu achten.

Die Hydrosilylierungsreaktion ist, wie in der Diskussion des Standes der Technik bereits hingewiesen, nicht bevorzugt zur Herstellung der erfindungsgemäßen Silphenylenpolymeren. In EP 0913420 wird ausgeführt welche Rohstoffe zur Realisierung der Hydrosilylierungsreaktion zum Erhalt der in EP 0913420 beschriebenen Silphenylen-Silalkylen Polymere erforderlich sind. Es handelt sich dabei um Disilphenylene und olefinisch ungesättigt terminierte Silphenylene oder zweifach ungesättigte Silane. Die entsprechenden Silphenylene Ausgangsmaterialien sind wiederum durch Grignardreaktionen zugänglich. Dies wäre im Falle der hier vorliegenden erfindungsgemäßen Silphenylenpolymeren nicht anders. Das heißt die Hydrosilylierung bedeutet gegenüber einer Grignard- oder einer Wurtzsynthese oder gegebenenfalls einer anderen Vorgehensweise, die die erfindungsgemäßen Silphenylenpolymere direkt liefert, einen Nachteil durch zusätzliche Schritte, erhöhten Aufwand und damit reduzierte Wirtschaftlichkeit. Da es sich im Falle der vorliegenden Erfindung zudem nicht um sich regelmäßig abwechselnde Strukturelemente im Polymergerüst handelt, wie das in EP 0913420 der Fall ist, sondern um statistisch zusammengesetzte Polymere, wäre eine größere Anzahl geeigneter Rohstoffe für eine erfolgreiche Hydrosilylierungsroute zu den erfindungsgemäßen Silphenylenpolymeren erforderlich und gegebenenfalls spezielle Synthesestrategien, die die erfindungsgemäße Zusammensetzung zulassen. Insgesamt ist somit festzustellen, dass die Hydrosilylierungsreaktion grundsätzlich zum Erhalt der erfindungsgemäßen Silphenylenpolymeren zwar anwendbar ist, jedoch mit erheblichem zusätzlichem Aufwand gegenüber Verfahren wir etwa der Wurtz- oder Grignardsynthese verbunden ist.

Daher ist die Hydrosilylierungsreaktion als Syntheseweg zu den erfindungsgemäßen Silphenylenpolymeren im Gegensatz zu den im bekannten Stand der Technik beschriebenen Silphenylen-Silalkylen Polymeren und Silphenylen Siloxan Copolymeren nicht bevorzugt. Der hier beschriebene neue Stand der Technik wird am besten mit einem vom bevorzugten Verfahren gemäß bereits bekanntem Stand der Technik abweichenden Verfahren realisiert.

Bei dem bevorzugten Verfahren für die Herstellung der erfindungsgemäßen Silphenylenpolymeren handelt es sich um Magnesium vermittelte Si-C-Bindungsknüpfungen nach Art einer Grignard Reaktion. Durch dieses Verfahren ist es möglich die erfindungsgemäßen Silphenylenpolymeren in einem einzigen Verfahrensschritt und somit mit maximaler Wirtschaftlichkeit in erforderlicher Reinheit zu gewinnen.

Für das bevorzugte Verfahren zur Herstellung der erfindungsgemäßen Silphenylenpolymeren werden siliziumhaltige Verbindungen der Formeln (IV), (V) und (VI) verwendet,

R¹⁵ₕR¹⁶ᵢSi (IV),

R¹⁵ⱼR¹⁶ₖSi[SiRₗ¹⁷Rₘ¹⁸]ₙSiRⱼ¹⁵Rₖ¹⁶ (V),

R¹⁵ⱼR¹⁶ₖSi[SiRₗ¹⁷Rₘ¹⁸]ₙ-X¹-[SiRₗ¹⁷Rₘ¹⁸]ₙSiR¹⁵ⱼR¹⁶ₖ (VI),

wobei R¹⁵ ein Halogenatom oder eine C1 - C3 Alkoxygruppe bedeutet, vorzugsweise ein Chlor-, Brom- oder Iod-Atom oder einen Methoxyrest, insbesondere ein Cl-Atom oder einen Methoxyrest, wobei mehrere Reste R¹⁵ verschiedene Reste aus der angegebenen Gruppe bedeuten können, insbesondere können mehrere Reste R¹⁵ im gleichen Molekül sowohl einen Halogenrest als auch einen Alkoxyrest bedeuten und
R¹⁶, R¹⁷ und R¹⁸ können unabhängig voneinander Reste aus der Gruppe der Reste R, R¹, R² oder R³ bedeuten, jedoch keinen Rest der Formel (II) und R¹⁸ kann zusätzlich einen Halogenrest oder einen C1 - C3 Alkoxyrest bedeuten, wobei die Reste R¹⁶, R¹⁷ und R¹⁸ keine funktionellen Gruppen enthalten, die Carbonyl- oder Carboxylgruppen, Hydroxygruppen, doppelt gebundene Stickstoffatome, primäre, sekundäre oder tertiäre Amingruppen oder Thiolgruppen umfassen, so dass die Reste R¹⁶, R¹⁷ und R¹⁸ gegenüber Magnesium inert sind.

X¹ bedeutet eine chemische Bindung oder einen gegenüber Magnesium inerten zweiwertigen verbrückenden aliphatischen, cycloalkylaliphatischen, cycloalkylaromatischen oder einen alkylaromatischen Kohlenwasserstoffrest, der keine funktionellen Gruppen enthält, die Carbonyl- oder Carboxylgruppen, Hydroxygruppen, doppelt gebundene Stickstoffatome, primäre, sekundäre oder tertiäre Amingruppen oder Thiolgruppen umfassen, der durch Hydrosilylierung einer hydrosilylierbaren olefinisch oder acetylenisch ungesättigten Vorstufe Z der Formel R¹⁹-X²-R¹⁹ entstanden ist, in der R¹⁹ einen olefinisch oder acetylenisch ungesättigten hydrosilylierbaren C2 - C8-Rest bedeutet und X² den beidseitig um den C2 - C8 verkürzten Rest X¹ bedeutet. Beispiele für cycloaliphatische, cycloaromatische oder aromatische Kohlenwasserstoffreste X² sind solche wie für Y bereits aufgezählt mit der Einschränkung, dass für X² nur diejenigen Reste aus der Gruppe der Reste Y zulässig sind, die gegenüber Magnesium inert sind.
h bedeutet eine ganze Zahl im Wert von 1, 2, 3 oder 4, vorzugsweise 1, 2 oder 3 und
i eine ganze Zahl im Wert von 0, 1, 2 oder 3 und für die Summe h + i = 4 gilt.
j ist eine Zahl im Wert von 0, 1, 2 oder 3, wobei j an mindestens einem terminalen Si-Atom des Di-, Oligo- oder Polysilans der Formel (V) den Wert 1 besitzt, so dass stets mindestens ein Rest R¹⁵ je Molekül der Formel (V) vorhanden ist,
k ist eine ganze Zahl im Wert von 0, 1, 2 oder 3 ist,
wobei k + j = 3 ist.
l und m bedeuten jeweils eine Zahl im Wert von 0, 1 oder 2, wobei gilt l + m = 2.
n ist eine Zahl im Wert von 0 bis 50, vorzugsweise 0 - 30.

Die Verbindungen der Formel (VI), die einen Rest X¹ enthalten, der durch Hydrosilylierung an die ihn begrenzenden Si-Atome gebunden vorliegt, werden vorzugsweise erhalten durch Hydrosilylierung der Vorstufe Z mit Si-H-funktionellen siliziumhaltigen Verbindungen der Formel (VII),

R¹⁵ⱼR¹⁶ₖSi[SiRₗ¹⁷Rₘ¹⁸]ₙ-H (VII),

wobei R¹⁵, R¹⁶, R¹⁷ und R¹⁸, sowie j, k, l und m die oben angegebenen Bedeutungen haben und H ein Wasserstoffatom bedeutet. Für n = 0 ist (VII) ein halogeniertes Silan oder ein Alkoxysilan, für n > 0 ist (VII) ein halogeniertes oder ein alkoxyliertes Di-, Oligo oder Polysilan. Es sind auch Mischformen denkbar, wobei R¹⁵ sowohl einen Halogenrest als auch einen Alkoxyrest im gleichen Molekül bedeutet.

Außer als Rohstoff zur Herstellung von Verbindungen der Formel (VI) können die Verbindungen der Formel (VII) auch zur Herstellung der erfindungsgemäßen Silphenylenpolymeren verwendet werden, wobei sie durch die Halogenreste bzw. die Alkoxyreste an der vorzugsweise zur Herstellung der erfindungsgemäßen Silphenylenpolymeren verwendeten Grignardreaktion teilnehmen können.

Typische Beispiele für Silane der Formel (IV) sind Methyltrichlorsilan, Methyltrimethoxysilan, Methyltriethoxysilan, Dimethyldichlorsilan, Dimethyldichlorsilan, Dimethyldiethoxysilan, Trimethylchlorsilan, Trimethylmethoxysilan, Trimethylethoxysilan, Trimethylsilanol, Phenyltrichlorsilan, Phenyltrimethoxysilan, Phenyltriethoxysilan, Phenylmethyldichlorsilan, Phenylmethyldimethoxysilan, Phenylmethyldiethoxysilan, Diphenyldichlorsilan, Diphenyldimethoxysilan, Diphenyldiethoxysilan, Triphenylchlorsilan, Triphenylmethoxysilan, Triphenylethoxysilan, Diphenylmethylchlorsilan, Diphenylmethoxysilan, Diphenylmethyldiethoxysilan, Phenyldimethylchlorsilan, Phenyldimethylmethoxysilan, Phenyldimethylethoxysilan, Vinyltrichlorsilan, Vinyltrimethoxysilan, Vinyltriethoxysilan, Vinyldimethylchlorsilan, Vinyldimethylmethoxysilan und Vinyldimethylethoxysilan, Trichlorsilan, Trimethoxysilan, Triethoxysilan, Methyldichlorsilan, Methyldimethoxysilan, Methyldiethoxysilan, Dimethylchlorsilan, Dimethylmethoxysilan, Dimethylethoxysilan, Ethyltrichlorsilan, Ethyltrimethoxysilan, Ethyltriethoxysilan und Tetrachlorsilan. Besonders bevorzugte Silane der Formel (IV) sind Methyltrichlorsilan, Methytrimethoxysilan, Dimethyldichlorsilan, Dimethyldimethoxysilan, Vinyltrichlorsilan, Vinyltrimethoxysilan, Vinyldimethylchlorsilan, Vinyldimethylmethoxysilan, Phenyltrichlorsilan, Phenyltrimethoxysilan, Phenylmethyldichlorsilan und Phenylmethyldimethoxysilan. Die Silane der Formel (IV) können auch als Gemische eingesetzt werden. Es ist beispielsweise bevorzugt, dass Gemische aus Silanen eingesetzt werden, die zur Kettenbildung und Vernetzung gemischt mit terminierenden Silanen eingesetzt werden. Die Aufzählung der Beispiele ist illustrierend zu verstehen, nicht beschränkend.

Typische Beispiele für Di-, Oligo- und Polysilane der Formel (V) sind Hexachlordisilan, Hexamethoxydisilan, Hexaethoxydisilan, Dimethyltetrachlordisilan, Dimethyltetramethoxydisilan, Dimethyltetraethoxydisilan, Trimethyltrichlordisilan, Trimethyltrimethoxydisilan, Trimethyltriethoxydisilan, Tetramethyldichlordisilan, Tetramethyldimethoxydisilan, Tetramethyldiethoxydisilan, Dimethylvinyltrichlordisilan, Dimethylvinyltrimethoxydisilan, Dimethylvinyltriethoxydisilan, Diphenyltetrachlordisilan, Diphenyltrimethoxydisilan, Diphenyltetraethoxydisilan, Diphenylvinyltrichlordisilan, Diphenylvinyltrimethoxydisilan, Diphenylvinyltriethoxydisilan, Tetravinyldichlordisilan, Tetravinyldimethoxydisilan, Tetravinyldiethoxydisilan, Divinyltetrachlordisilan, Tetravinyldimethoxydisilan, Tetravinyldiethoxydisilan, Trimethyldichlordisilan, Trimethyldimethoxydisilan, Trimethyldiethoxydisilan, Octachlortrisilan, Octamethoxytrisilan, Octaethoxytrisilan, Tetramethyltetrachlortrisilan, Tetramethyltetramethoxytrisilan, Tetramethyltetraethoxytrisilan, Hexamethyldichlortrisilan, Hexamethyldimethoxytrisilan, Hexamethyldiethoxytrisilan, Pentamethyltrichlortrisilan, Pentamethyltrimethoxytrisilan, Pentamethyltriethoxytrisilan, Diphenyldivinyltetrachlortrisilan, Diphenyldivinyltetramethoxytrisilan, Diphenyldivinyltetraethoxytrisilan, Diphenyldimethylvinyltrichlortrisilan, Diphenyldimethylvinyltrimethoxytrisilan, Diphenyldimethylvinyltriehoxytrisilan, Tetramethyltrichlortrisilan, Tetramethyltrimethoxytrisilan, Tetramethyltriethoxytrisilan, Hexamethylchlortrisilan, Hexamethylmethoxytrisilan, Hexamethylethoxytrisilan, Pentamethyldichlortrisilan, Pentamethyldimethoxytrisilan, Pentamethyldiethoxytrisilan, Diphenyldivinyltrichlortrisilan, Diphenyldivinyltrimethoxytrisilan, Diphenyldivinyltriethoxytrisilan, Diphenyldimethylvinyldichlortrisilan, Diphenyldimethylvinyldimethoxytrisilan, Diphenyldimethylvinyldiehoxytrisilan, Nonamethylnonachloroctasilan, Nonamethylnonamethoxyoctasilan, Nonamethylnonaethoxyoctasilan, Heptamethyldiphenylnonachloroctasilan, Heptamethyldiphenylnonamethoxyoctasilan, Heptamethyldiphenylnonaethoxyoctasilan, Heptamethyldiphenyldivinylheptachloroctasilan, Heptamethyldiphenyldivinylheptamethoxyoctasilan, Heptamethyldiphenyldivinylheptaethoxyoctasilan, Heptamethyltetraphenylheptachloroctasilan, Heptamethyltetraphenylheptamethoxyoctasilan, Heptamethyltetraphenylheptaethoxyoctasilan, wobei die Methyl, Phenyl, Ethyl-, Vinyl- und Si-H-Gruppen und die Chlor-, bzw. Methoxy- und Ethoxygruppen statistisch auf die Siliziumatome verteilt sein können, unter Einhaltung der Regel, dass jedes Si-Atome vierwertig ist. Die Aufzählung ist illustrierend zu verstehen, nicht beschränkend. Anstelle nur rein durch Clatome, Methoxy- oder Ethoxygruppen substituierten Si-Atomen, sind in den Beispielmolekülen der Formel (V) auch gemischt Cl- , methoxy- und / oder ethoxyfunktionelle Vertreter möglich, die ebenfalls zu den typischen Beispielen gehören.

Typische Beispiele für Di-, Oligo- und Polycarbosilane der Formel (VI) sind Cl(CH₃)₂Si-CH₂CH₂-Si(CH₃)₂Cl, Cl₂(CH₃)Si-CH₂CH₂-Si(CH₃)₂Cl, Cl₂(CH₃)Si-CH₂CH₂-Si(CH₃)Cl₂, Cl₃Si-CH₂CH₂-SiCl₃, Cl(CH₃)₂Si-CH=CH-Si(CH₃)₂Cl, Cl₂(CH₃)Si-CH=CH-Si(CH₃)₂Cl, Cl₂(CH₃)Si-CH=CH-Si(CH₃)Cl₂, Cl₃Si-CH=CH-SiCl₃, Cl(CH₃)₂Si-(CH₂)₃(C₆H₄)(CH₂)₃-Si(CH₃)₂Cl, Cl₂(CH₃)Si-(CH₂)₃(C₆H₄)(CH₂)₃-Si(CH₃)₂Cl, Cl₂(CH₃)Si-(CH₂)₃(C₆H₄)(CH₂)₃-Si(CH₃)Cl₂, Cl₃Si-(CH₂)₃(C₆H₄)(CH₂)₃-SiCl₃, Cl(CH₃)Si-Si(CH₃)₂-(CH₂)₃(C₆H₄)(CH₂)₃-(CH₃)₂Si-Si(CH₃)₂Cl, Cl(CH₃)₂Si-(CH₂)₃(C₆H₄)-(C₆H₄)(CH₂)₃-Si(CH₃)₂Cl, Cl₂(CH₃)Si-(CH₂)₃(C₆H₄)-(C₆H₄)(CH₂)₃-Si(CH₃)₂Cl, Cl₂(CH₃)Si-(CH₂)₃(C₆H₄)-(C₆H₄)(CH₂)₃-Si(CH₃)Cl₂, Cl₃Si-(CH₂)₃(C₆H₄)-(C₆H₄)(CH₂)₃-SiCl₃, Cl(CH₃)₂Si-CH₂CH₂-Si(CH₃)(CH=CH₂)Cl, Cl(CH₃)(CH=CH₂)Si-CH₂CH₂-Si(CH₃)(CH=CH₂)Cl, Cl(CH₃)(CH=CH₂)Si-(CH₂)₃(C₆H₄)(CH₂)₃-Si(CH₃)(CH=CH₂)Cl, Cl(CH=CH₂)₂Si-(CH₂)₃(C₆H₄)(CH₂)₃-Si(CH=CH₂)₂Cl, Cl(CH₃)(H)Si-(CH₂)₃(C₆H₄)(CH₂)₃-Si(CH₃)(H)Cl, Cl(H)₂Si-(CH₂)₃(C₆H₄)(CH₂)₃-Si(H)₂Cl,
wobei jeweils anstelle der Chloratome Methoxygruppen oder Ethoxygruppen in den Beispielmolekülen der Formel (VI) enthalten sein können, gegebenenfalls können auch gemischt Cl-, methoxy- und / oder ethoxyfunktionelle Vertreter gebildet werden, die ebenfalls zu den typischen Beispielen gehören. Die Aufzählung ist illustrierend, nicht einschränkend zu verstehen.

Organische Rohstoffe, die zur Herstellung der erfindungsgemäßen Silphenylene geeignet sind, sind solche der Formel (VIII)

[Hal]ₒ-Y (VIII),

wobei Hal für ein Cl-, Br- oder Iodatom steht, vorzugsweise für ein Cl- oder ein Br-Atom, o eine Zahl von 2 bis 12 bedeutet, vorzugsweise 2 und Y die oben dafür angegebenen Bedeutungen hat.

Typische Beispiele für organische Rohstoffe der Formel (VIII) ergeben sich aus der Aufzählung der Beispiele für den Rest Y, indem die freien Valenzen mit Halogenatomen abgesättigt werden. Insbesondere bevorzugte Vertreter der Formel (VIII) sind Dihalogenbenzole, wie 1,4-Dibrombenzol, 1,4-Dichlorbenzol, 1,2-Dichlorbenzol, 1,2-Dibrombenzol, 1,2-Dichlorethan, 1,2-Dibromethan, 1,1-Dichlorethan, 1,1-Dibromethan, 1,4 Dichlorbutan, 1,4 Dibrombutan, 1,3-Dichlorbutan, 1,3-Dibrombutan, 1,5 Dichlorpentan, 1,5 Dibrompentan, 1,6-Dichlorhexan, 1,6-Dibromhexan, 1,7-Dichlorheptan, 1,7-Dibromheptan, 1,8-Dichloroctan, 1,8-Dibromoctan, 1,9-Dichlornonan, 1,9-Dibromnonan, 1,10-Dichlordecan, 1,10-Dibromdecan, 1,11-Dichlorundecan, 1,11-Dibromundecan, 1,12-Dichlordodecan, 1,12-Dibromdodecan, 1,2-Dichlordiphenylethan, 1,2-Dibromdiphenylethan, 1,2-Dichlorcyclohexylethan, 1,2-Dibromcyclohexylethan, 2-Methyl-1,4-Dichlorbenzol, 2-Methyl-1,4-Dibrombenzol, 2-Methoxy-1,4-Dichlorbenzol, 2-Methoxy-1,4-Dibrombenzol, 2-Ethyl-1,4-Dichlorbenzol, 2-Ethyl-1,4-Dibrombenzol, 2-Ethoxy-1,4-Dichlorbenzol, 2-Ethoxy-1,4-Dibrombenzol, 2-ⁿPropyl-1,4-Dichlorbenzol, 2-ⁿPropyl-1,4-Dibrombenzol, 2-ⁿPropoxy-1,4-Dichlorbenzol, 2-ⁿPropoxy-1,4-Dibrombenzol, 2-^{iso}Propyl-1,4-Dichlorbenzol, 2-^{iso}Propyl-1,4-Dibrombenzol, 2-ⁿButyl-1,4-Dichlorbenzol, 2-ⁿButyl-1,4-Dibrombenzol, 2-^{sec}Butyl-1,4-Dichlorbenzol, 2-^{sec}Butyl-1,4-Dibrombenzol, 2-^{tert.}Butyl-1,4-Dichlorbenzol, 2-^{tert.}Butyl-1,4-Dibrombenzol, polyhalogenierte Biphenylene wie Dibrombiphenyl, Tribrombiphenyl, Tetrabrombiphenyl, Pentabrombiphenyl, Hexabrombiphenyl, Heptabrombiphenyl, Octabrombiphenyl, Nonabrombiphenyl, Decabrombiphenyl und die entsprechenden mehrfach chlorierten Biphenylenanalogen, 4-Chlorbenzhydrylchlorid, 4-Brombenzhydrylbromid, Diphenyldichlormethan, Diphenyldibrommethan, 1,2-Diphenyl-1,2-dichlorethan, 1,2-Diphenyl-1,2-dibromethan, 1,1'-(2,2,2-Trichloroethan-1,1-diyl)bis(4-chlorobenzol), Hexachlorcyclohexan, 1,2,4,5,6,7,8,8-Octachlor-3a,4,7,7a-tetrahydro-4,7-methano-indan (Chlordan), 1,2,3,4,10,10-Hexachlor-6,7-epoxy-1,4,4a,5,6,7,8,8a-octahydro-1,4-endo-5,8-exo-dimethanonaphthalin (Dieldrin), 1-Brom-4-Chlorbenzol, 4,4'-(Propan-2,2-diyl)bis(2,6-dibromophenol) (Tetrabrombisphenol A), 3,5,3',5'-Tetrachlorobisphenol A.

Bevorzugte Vertreter der Formel (VIII) sind 1,4-Dibrombenzol, 1,4-Dichlorbenzol, 1,2-Dichlorethan und 1,2-Dibromethan. Gegebenenfalls können Gemische verschiedener Vertreter der Formel (VIII) verwendet werden.

Die Aufzählung ist wie alle übrigen Aufzählungen von typischen Beispielen illustrierend zu verstehen und nicht einschränkend. Das Magnesium wird als Metall zweckmäßig in Formen mit großer Oberfläche, d.h. in Gestalt beispielsweise von Spänen, Körnern oder Pulver eingesetzt. Das Magnesium wird vorzugsweise in einer Mindestmenge eingesetzt, die sich aus folgender Gleichung ergibt: p = (q/2)+r.

Dabei bedeutet p die Anzahl der Mole Magnesium, q die Anzahl der Halogen- und Alkoxyäquivalente aus den Verbindungen (IV), (V), (VI), (VII) und (VIII) und r einen Wert zwischen 0 und der Hälfte der jeweils angewandten Menge Halogen- und Alkoxyäquivalente aus den Verbindungen (IV), (V), (VI), (VII) und (VIII), wobei der Wert 0 für r nicht miteingeschlossen ist. D.h. r ist stets größer als Null und hat maximal den Wert q/2. Magnesium wird gegenüber der Anzahl der Halogenatome und Alkoxygruppen im Überschuss eingesetzt.

Zur Erleichterung der Umsetzung werden in dem bevorzugten Verfahren zur Herstellung der erfindungsgemäßen Silphenylenpolymere gegenüber den Reaktionsteilnehmern inerte Lösemittel eingesetzt. Dabei können grundsätzlich die üblicherweise bei der Reaktion von Metallen mit Organohalogenverbindungen als inerte Lösemittel eingesetzten Stoffe, die insbesondere Ether wie Diethylether, Di-ⁿbutylether, ^{tert.}Butylmethylether, Tetrahydrofuran, 1,4-Dioxan, oder Hexamethylphosphorsäuretriamid sind, verwendet werden, gegebenenfalls auch im Gemisch miteinander und gegebenenfalls auch im Gemisch mit weiteren inerten Lösemitteln wie Toluol, Xylol oder Ethylbenzol verwendet werden können. Dabei ist allerdings zu beachten, dass die verwendeten Lösemittel auch tatsächlich gegenüber den Reaktionsteilnehmern inert sind. Es wurde beispielsweise gefunden, dass Si-Cl-haltige Komponenten der Formeln (IV), (V), (VI) und (VII) mit THF unter Ringöffnung reagieren, wodurch sich Butoxygruppen bilden, die in die sich bildenden Silphenylenpolymere einreagieren und unerwünschte Alkoxygruppen bilden, die grundsätzlich zur Hydrolyse unter Bildung von Silanolgruppen reagieren können, die wiederum unter Ausbildung von ebenfalls unerwünschten Si-O-Si-Einheiten kondensieren können. Wie später zu sehen ist, wird die Aufarbeitung wässrig betrieben, gegebenenfalls unter Verwendung von Säuren wie Salzsäure, so dass diese Reaktion während der Aufarbeitung denkbar ist. Durch diese Nebenreaktion würden nicht erfindungsgemäße Silphenylen-Polysiloxan Copolymer erhalten.

Im Stand der Technik, der auf die Herstellung von Polysiloxaneinheiten enthaltenden Silphenylen-Polysiloxan Polymeren abzielt wie beispielsweise gemäß US3350350 A wird diesem Umstand keine Beachtung geschenkt, da die Bildung von Siloxaneinheiten dort der Erfindungsmäßigkeit nicht entgegensteht. Dies ist im vorliegenden Fall jedoch anders worin im Detail die Neuheitlichkeit des ausgewählten Verfahrens zur Herstellung der erfindungsgemäßen Silphenylenpolymere begründet liegt. Im vorliegenden Fall kommen zusammen mit Si-Cl-haltigen Komponenten der Formeln (IV), (V), (VI) und (VII) lediglich solche Lösemittel in Frage, die wie 1,4-Dioxan und Hexamethylphosphorsäuretriamid gegenüber Chlorsilanen inert sind. Die Verwendung von beispielsweise THF ist allerdings möglich, jedoch nur zusammen mit alkoxyfunktionellen Komponenten der Formeln (IV), (V), (VI) und (VII).

Vorzugsweise wird das bevorzugte Verfahren zur Herstellung der erfindungsgemäßen Silphenylenpolymeren bei Temperaturen von - 78°C bis 150°C unter Normaldruck ausgeführt. Gegebenenfalls können auch höhere oder niedrigere Drücke angewandt werden. Zweckmäßigerweise wird das Verfahren in einer gegenüber den Reaktionsteilnehmern inerten Atmosphäre aus Stickstoff oder Argon ausgeführt, wobei insbesondere der Zutritt von Wasser als Flüssigkeit, Dampf oder Überzug auf Gefäßen sowie dem Magnesium durch Anwendung geeigneter Maßnahmen gemäß Stand der Technik, wie beispielsweise Ausheizen unter Vakuum bestmöglich auszuschließen ist.

Vorzugsweise wird das bevorzugte Verfahren zur Herstellung der erfindungsgemäßen Silphenylenpolymeren stufenweise ausgeführt, indem zuerst die Komponente (VIII) mit Magnesium reagiert und im zweiten Schritt die jeweils benötigte Auswahl an Komponenten (IV), (V), (VI) und (VII). Das Verfahren kann allerdings auch in einem Schritt ausgeführt werden, indem man die Komponenten der Formel (VIII) in Gegenwart der benötigten Auswahl aus den Komponenten der Formel (IV), (V), (VI) und gegebenenfalls (VII) zur Reaktion bringt. Zur Aktivierung des Magnesiums wird vorteilhafterweise zuerst ein Teil der Komponente (VIII), beispielsweise 10-Gewichts% der Gesamtmenge der Komponente (VIII) mit dem Magnesium zusammengebracht.

Die Isolierung der in dem bevorzugten Verfahren erhaltenen Reaktionsprodukte kann auf die gleiche Weise erfolgen wie sie bei der Isolierung von bei metallorganischen Synthesen, insbesondere Grignard Synthesen erhaltenen Reaktionsprodukten üblich ist. Vorzugsweise werden die erhaltenen Reaktionsgemische mit Wasser von 0 bis 30°C vermischt. Da hierbei aus noch vorhandenen Si-Cl-Gruppen Salzsäure gebildet wird und Silanolgruppen entstehen, die zur Kondensation und der Ausbildung von Si-O-Si-Einheiten führen, was beides unerwünscht ist, ist ein möglichst vollständiger Umsatz aller an der Reaktion beteiligten Halogenreste vor der Aufarbeitung sicherzustellen. Das gleiche gilt für während der Wasserzugabe noch vorhandene Sigebundene Alkoxygruppen. Auch diese können hydrolysieren und zur Kondensation fähige Silanolgruppen bilden. Aus diesem Grund wird im Gegensatz zu Grignard analogen Synthesen gemäß Stand der Technik beispielsweise zur Herstellung von Polysilarylensiloxanen gemäß US3350350 A im vorliegenden Fall nicht die Menge Magnesium verwendet, die äquivalent zur Menge eingesetzter Halogenatome und Alkoxygruppen ist, sondern es wird ein Magnesium Überschuss verwendet. Gegebenenfalls kann eine Säure zur Aufarbeitung mit eingesetzt werden, wie etwa Salzsäure, um den pH-Wert einzustellen oder um die Bildung von Magnesiumhalogeniden zu fördern.

Die wasserslöslichen Salzbestandteile werden wässrig extrahiert, Feststoffe wie gegebenenfalls unlösliche Anteile von Magnesium oder Magnesiumsalzen nach Verfahren gemäß Stand der Technik beispielsweise durch Filtrieren oder Zentrifugieren entfernt.

Die flüchtigen Bestandteile der Reaktionsmischung werden mittels Methoden gemäß Stand der Technik, wie beispielsweise kontinuierliche oder diskontinuierliche Destillation, entfernt, um die Reaktionsprodukte in reiner Form zu erhalten. Falls die Reaktionsprodukte als Zubereitung in einem Lösemittel gewünscht werden, können sie nachträglich im Lösemittel der Wahl aufgelöst werden oder durch einen Lösemittelaustausch aus dem Reaktionslösemittel gleich als gewünschte Zubereitung erhalten werden. Auch der Lösemittelaustausch erfolgt nach Methoden gemäß bekanntem Stand der Technik.

Ist es erwünscht die primär aus dem bevorzugten Verfahren erhaltenen Silphenylenpolymere weiter zu modifizieren, beispielsweise durch die Einführung funktioneller Gruppen, die gegenüber den Bedingungen der Grignard Synthese nicht stabil sind, kann es vorteilhaft sein durch in dem Grignard analogen Syntheseschritt geeignete funktionelle Gruppen in das primäre Silphenylenpolymer einzuführen. Es ist hierbei zu beachten, dass die primär erhaltenen Silphenylenpolymeren als solche bereits alle Merkmale der Erfindungsmäßigkeit erfüllen und somit erfindungsgemäß gemäß der vorliegenden Erfindung sind. Aus dem Stand der Technik ist bekannt, dass durch Grignard Reaktionen die Carbonylgruppen von Aldehyden, Ketonen und Carbonsäuren sowie deren Estern zu Alkoholen umgewandelt werden. Sollten also Carbinolgruppen erwünscht sein, um nachträglich funktionelle Gruppen einzuführen, wäre die Verwendung von entsprechend carbinolfunktionellen Ausgangsmaterialien ebenso wie die Verwendung von carbonyl- oder epoxyfunktionellen Ausgangsmaterialien beispielsweise durch die Auswahl einer geeigneten Komponente gemäß Formel (VIII) eine Möglichkeit hierzu. Da sowohl in Gegenwart von Alkohol als auch bei der Umsetzung der Carbonylgruppen Grignard Reagenz verbraucht wird, muss der Mehrbedarf an Grignard Reagenz beachtet werden. Da durch diese Vorgehensweise unter Umständen die Wirtschaftlichkeit des Verfahren in Frage gestellt werden könnte, ist diese Vorgehensweise nicht bevorzugt, wenngleich sie grundsätzlich möglich und daher als erfindungsgemäß miteingeschlossen ist.

Durch die Umsetzung von Acrylsäure-, Methacrylsäure- oder Chlorpropionylchlorid mit einer solchen Carbonylgruppe ist es beispielsweise möglich eine Acrylatgruppe oder eine Methacrylatgruppe in ein erfindungsgemäßes Silphenylenpolymer einzuführen. Im Falle der Umsetzung mit den Säurechloriden der Methaycrylsäure und der Acrylsäure wird nach HCl-Abspaltung, die gegebenenfalls mit einem geeigneten beispielsweise tertiären Amin gefördert werden kann, der entsprechende Methacrylsäure- bzw. Acrylsäureester gebildet. Im Falle von Chlorprioponylchlorid entsteht im ersten Schritt der Ester der Chlorpropionsäure, aus der im zweiten Schritt durch basische Aufarbeitung beispielsweise mit einem tertiären Amin und HCl-Eliminierung aus dem Propionylchloridrest der Acrylsäurerest gebildet wird. Alle Reaktionen sind als solches, Stand der Technik und somit per se nicht neu. Ihre Verwendung zur Herstellung der erfindungsgegenständlichen Silphenylenpolymeren ist allerdings neu, weswegen auch diese Schritte als Bestandteil des bevorzugten Verfahrens zur Herstellung der erfindungsgemäßen Silphenylenpolymeren im erfindungsgemäßen Umfang enthalten sind.

Die Silphenylenpolymere der Formel (I) besitzen alle mindestens olefinisch oder acetylenisch ungesättigte funktionelle Gruppen, über welche sie chemisch vernetzbar sind. Mögliche chemische Vernetzungsreaktionen umfassen dabei die bekannten Reaktionen gemäß Stand der Technik, insbesondere die radikalische Vernetzung, die sowohl unter Verwendung geeigneter Strahlenquellen wie UV-Licht als auch durch instabile zu Radikalen zerfallende chemische Verbindungen initiiert werden kann und die Additionsvernetzung beispielsweise durch eine Hydrosilylierung der olefinisch ungesättigten Gruppe mit einer Si-H Funktion in Gegenwart eines geeigneten Hydrosilylierungskatalysators. Auch die Si-H Funktionen können an den erfindungsgemäßen Silphenylenpolymeren gebunden vorliegen.

Um eine ausreichende Härtung zu erreichen, muss eine ausreichende Menge funktioneller Gruppen vorhanden sein. Mindestens müssen je erfindungsgemäß verwendetem Silphenylenpolymer Molekül durchschnittlich 1,0 funktionelle Gruppen vorhanden sein, um eine ausreichende Härtung zu erreichen, bevorzugt sind durchschnittlich mindestens 1,1 insbesondere durchschnittlich mindestens 1,2 funktionelle Gruppen je erfindungsgemäßem Silphenylenpolymer Molekül vorhanden. Dabei können die funktionellen Gruppen verschieden sein, so dass beispielsweise ein Teil der funktionellen Gruppen eine Si-H-Gruppe ist und ein anderer Teil der funktionellen Gruppen eine olefinisch ungesättigte Gruppe darstellt, die radikalisch härtbar oder hydrosilylierbar ist. Auch weitere Kombinationen komplementärer funktioneller Gruppen sind denkbar, wobei komplementär bedeutet, dass die gewählten Kombinationen funktioneller Gruppen miteinander reagieren können. Falls nur eine Art funktioneller Gruppen vorhanden ist, beispielsweise nur olefinisch oder acetylenisch ungesättigte funktionelle Gruppen, die radikalisch härtbar sind, so muss die entsprechende Anzahl dieser funktionellen Gruppen gegeben sein. Im Sinne einer Copolymerisation zu einer homogenen Matrix ist dabei zu beachten, dass eine ausreichende Copolymerisierbarkeit der gewählten olefinischen und acetylenischen Gruppen gegeben ist. Auch die Kombination nicht miteinander copolymerisierbarer olefinischer Gruppen ist möglich, sofern die erzielte Matrix aus zwei oder gegebenenfalls mehr individuellen Polymeren miteinander verträglich bleibt und keine separaten Phasen bildet, die sich in unterscheidbaren Domänen voneinander trennen.

Als Beispiele für geeignete Initiatoren, um die radikalische Polymerisation zu starten seien hier insbesondere Beispiele aus dem Feld der organische Peroxide genannt, wie Di-tert.-butylperoxid, Dilaurylperoxid, Dibenzoylperoxid, Dicumylperoxid, Cumylperoxyneodecanoat, tert-Butylperoxyneodecanoat, tert-Amylperoxypivalat, tert-Butylperoxypivalat, tert-Butylperoxyisobutyrat, tert-Butylperoxy-3,5,5-trimethylhexanoat, tert-Butylcumylperoxid, tert-Butylperoxyacetat, tert-Butylperoxybenzoat, 1,1-Ditert.-butylperoxycyclohexan, 2,2-Di(tert.-butylperoxy)butan, Bis(4-tert.-butylcyclohexyl)peroxydicarbonat, Hexadecylperoxydicarbonat, Tetradecylperoxydicarbonat, Dibenzylperoxidicarbonat, Diisopropylbenzol, Dihydroperoxid, [1,3-Phenylenbis(1-methylethyliden)]bis[tert-butyl]peroxid, 2,5-Dimethyl-2,5-di-(tert-butylperoxy)hexan, Dicetylperoxydicarbonat, Acetylacetonperoxid, Acetylcyclohexansulfonylperoxid, tert.-Amylhydroperoxid, tert-Amylperoxy-2-ethylhexanoat, tert-Amylperoxy-2-ethylhexylcarbonat, tert-Amylperoxyisopropylcarbonat, tert-Amylperoxyneodecanat, tert-Amylperoxy-3,5,5-trimethylhexanoat, tert-Butylmonoperoxymaleat, wobei diese Aufzählung nur illustrierend ist und nicht beschränkend. Gegebenenfalls können auch Mischungen aus verschiedenen Initiatoren für radikalische Reaktionen verwendet werden.

Die Eignung eines Initiators bzw. Initiatorgemisches für radikalische Reaktionen hängt von dessen Zerfallskinetik und den zu erfüllenden Anforderungsbedingungen ab. Unter ausreichender Beachtung dieser Rahmenbedingungen gelingt dem Fachmann die geeignete Auswahl eines Initiators.

Bei Zubereitungen, die neben olefinisch und acetylenisch ungesättigten Gruppen auch siliziumgebundenen Wasserstoff enthalten, besteht die Möglichkeit der Härtung durch eine Hydrosilylierungsreaktion. Geeignete Katalysatoren zur Förderung der Hydrosilylierungsreaktion sind die bekannten Katalysatoren aus dem Stand der Technik.

Beispiele für solche Katalysatoren sind Verbindungen oder Komplexe der Gruppe der Edelmetalle, enthaltend Platin, Ruthenium, Iridium, Rhodium und Palladium, vorzugsweise Metallkatalysatoren aus der Gruppe der Platinmetalle oder Verbindungen und Komplexe aus der Gruppe der Platinmetalle. Beispiele für solche Katalysatoren sind metallisches und feinverteiltes Platin, das sich auf Trägern wie Siliziumdioxid, Aluminiumoxid oder Aktivkohle befinden kann, Verbindungen oder Komplexe von Platin wie Platinhalogenide, z.B. PtCl₄, H₂PtCl₆x6H₂O, Na₂PtCl₄x4H₂O, Platin-Olefin-Komplexe, Platin-Alkohol-Komplexe, Platin-Alkoholat-Komplexe, Platin-EtherKomplexe, Platin-Aldehyd-Komplexe, Platin-Keton-Komplexe, einschließlich Umsetzungsprodukten aus H₂PtCl₄x6H₂O und Cyclohexanon, Platin-Vinyl-Siloxankomplexe, wie Platin-1,3-Divinyl-1,1,3,3-tetramethyldisiloxan, mit oder ohne Gehalt an nachweisbarem anorganisch gebundenem Halogen, Bis-(gamma-picolin)platinchlorid, Trimethylendipyridinplatinchlorid, Dicyclopentadienplatindichlorid, Dimethylsulfoxyethenylplatin(II)dichlorid, Cyclooctadienplatindichlorid, Norbornadienplatindichlorid, Gammapicolinplatindichlorid, Cyclopentadienplatindichlorid, sowie Umsetzungsprodukte von Platintetrachlorid mit Olefin und primärem oder sekundärem Amin oder primärem und sekundärem Amin wie das Umsetzungsprodukt aus in 1-Octen gelöstem Platintetrachlorid mit sec-Butylamin oder Ammoniumplatinkomplexe. In einer weiteren Ausführungsform des erfindungsgemäßen Verfahrens werden Komplexe des Iridiums mit Cyclooctadiene, wie beispielsweise µ-Dichloro-bis(cyclooctadiene)-diiridium(I), verwendet.

Diese Aufzählung ist nur illustrierend und nicht beschränkend. Die Entwicklung der Hydrosilylierungskatalysatoren ist ein dynamisches Forschungsgebiet, das immer wieder neue wirksame Spezies hervorbringt, die naturgemäß ebenfalls hier eingesetzt werden können.

Vorzugsweise handelt es sich bei dem Hydrosilylierungskatalysator um Verbindungen oder Komplexe des Platins, bevorzugt um Platinchloride und Platinkomplexe, insbesondere um Platin-Olefin-Komplexe und besonders bevorzugt um Platin-Divinyltetramethyldisiloxankomplexe.

Bei dem erfindungsgemäßen Verfahren wird der Hydrosilylierungskatalysator in Mengen von 2 bis 250 Gewichts-ppm eingesetzt, vorzugsweise in Mengen von 3 bis 150 ppm, insbesondere in Mengen von 3 bis 50 ppm.

In einer bevorzugten Ausführungsform werden die Silphenylenpolymeren der Formel (I) in einem dritten Schritt auf ein Metallsubstrat aufgetragen.

Die Silphenylenpolymere der Formel (I) eignen sich besonders gut zum Einsatz als Bindemittel und / oder als Haftvermittler für die Herstellung metallplattierter Schichtstoffe insbesondere für elektronische Anwendungen, insbesondere für metallkaschierte Schichtstoffe und insbesondere für die Verwendung in Hochfrequenzanwendungen, ganz besonders solchen, die bei Frequenzen von 1 GHz und darüber betrieben werden. Besonders bevorzugt ist die Herstellung von metallkaschierten Elektrolaminaten, wie man sie zur Herstellung als Leiterplatten in elektronischen Geräten verwendet, insbesondere für Hochfrequenzanwendungen.

Besagte metallkaschierte Elektrolaminate können Verstärkungsmaterialien enthalten, müssen aber nicht. Das heißt sie können beispielsweise verstärkende Gewebe wie Fasergewebe oder Vliese enthalten oder sie können frei von solchen sein. Falls ein verstärkendes Material enthalten ist, ist dies vorzugsweise in Schichten angeordnet. Eine verstärkende Schicht kann dabei aus einer Vielzahl verschiedener Fasern aufgebaut sein.

Solche verstärkenden Schichten helfen das Schrumpfverhalten zu kontrollieren und geben erhöhte mechanische Festigkeit.

Sofern eine verstärkende Schicht mitverwendet wird, können die diese Schicht bildenden Fasern ausgewählt werden aus einer Vielzahl verschiedener Möglichkeiten. Nicht beschränkende Beispiele für solche Fasern sind Glasfasern, wie beispielsweise E-Glasfasern, S-Glasfasern und D-Glasfasern, Silicafasern, Polymerfasern, wie beispielsweise Polyetherimidfasern, Polysulfonfasern, Polyetherketonfasern, Polyesterfasern, Polycarbonatfasern, aromatische Polyamidfasern oder flüssigkristalline Fasern. Die Fasern können einen Durchmesser von 10 nm bis 10 µm aufweisen. Die Verstärkungsschicht hat eine Stärke von höchstens 200 µm, vorzugsweise höchstens 150 µm.

Eine bevorzugte Anwendungsform ist die Verwendung der Silphenylenpolymere der Formel (I) als Bindemittel oder Co-Bindemittel zusammen mit organischen Bindemitteln zur Herstellung von metallkaschierten Laminaten aus Glasfasercompositen zur weiteren Herstellung von Leiterplatten. Das bevorzugte Metall ist Kupfer.

Für die erfindungsgemäße Verwendung der Silphenylenpolymeren der Formel (I) können diese als alleiniges Bindemittel verwendet werden. Sie können auch abgemischt mit organischen Monomeren, Oligomeren und Polymeren verwendet werden. Typischerweise hierfür verwendete organische Monomere, Oligomere und Polymere umfassen Polyphenylenether, Bismaleimide, Bismaleimid Triazin Copolymere, Kohlenwasserstoffharze, sowohl aliphatische wie beispielsweise Polybutadien, als auch aromatische wie beispielsweise Polystyrol, als auch Hybridsysteme, die sowohl aliphatischen als auch aromatischen Charakter haben wie beispielsweise Styrolpolyolefin Copolymere, wobei die Form der Copolymeren grundsätzlich wiederum nicht eingeschränkt ist, Epoxidharze, Cyanatesterharze und gegebenenfalls andere, wobei die Auswahl illustrierend zu verstehen ist und nicht einschränkend.

Bevorzugte organische Monomere, Oligomere und Polymere sind oligomere und polymere Polyphenylenether, monomere, oligomere und polymere Bismaleimide, oligomere und polymere Kohlenwasserstoffharze sowie Bismaleimid Triazin Copolymere. Dabei können die organischen Monomere, Oligomere und Polymere gegebenenfalls miteinander gemischt eingesetzt werden.

Der Anteil der organischen Monomere, Oligomere und Polymere in den Zubereitungen mit den Silphenylenpolymeren der Formel (I), sofern die organischen Komponenten mitverwendet werden, beträgt zwischen 10 und 90% bezogen auf die Mischung aus den Silphenylenpolymeren der Formel (I) und den organischen Monomeren, Oligomeren und Polymeren als 100%, bevorzugt 20 - 90%, insbesondere 30 - 80%.

Darüber hinaus, können sowohl die Silphenylenpolymere der Formel (I) als auch die Mischungen derselben mit organischen Monomeren, Oligomeren oder Polymeren in weiteren organischen Monomeren gegebenenfalls mit olefinisch oder acetylenisch ungesättigten Gruppen als Reaktivverdünner gelöst werden, wie beispielsweise Styrol, alpha Methylstyrol, para-Methylstyrol und Vinylstyrol, Chlor- und Bromstyrol.

Ebenso können typische nicht reaktive Lösemittel zur Lösung der Silphenylenpolymere der Formel (I) und gegebenenfalls Gemische derselben mit organischen Monomeren, Oligomeren und Polymeren eingesetzt werden, wie beispielsweise aliphatische oder aromatische Lösemittel wie aliphatische Gemische mit bestimmten Siedebereichen, Toluol, Xylol, Ethylbenzol oder Gemische derselben Aromaten, Ketone, wie Aceton, Methylethylketon, Cyclohexanon, Carbonsäureester, wie Ethylacetat, Methylacetat, Ethylformiat, Methylformiat, Propionsäuremethylester, Propionsäureethylester, wobei eine gute Löslichkeit insbesondere der Gemische aus Silphenylenpolymeren der Formel(I) mit organischen Monomeren, Oligomeren und Polymeren am ehesten in aromatischen Lösemitteln wie Toluol, Xylol, Ethylbenzol und Gemischen derselben erreicht wird.

In dem Falle, dass die Silphenylenpolymere der Formel (I) in Kombination mit einem organischen Oligomer oder Polymer oder Gemischen derselben eingesetzt werden, ist es wesentlich, dass Silphenylenpolymere der Formel(I) verwendet werden, die mit den organischen Komponenten der Wahl verträglich sind und nicht zu Phasenseparationen führen. In diesen Fällen sind in der Regel phenylreichere Silphenylenpolymere der Formel (I) einzusetzen, da Phenylgruppen die Verträglichkeit mit den organischen Komponenten erhöhen. Insbesondere mit aromatenreicheren organischen Polymeren wie Polyphenylenethern oder aromatischen Kohlenwasserstoffharzen sind aromatenreichere Silphenylenpolymere der Formel (I) zu verwenden, wobei zur Verträglichkeitseinstellung sowohl die verbrückenden aromatischen Gruppen als auch terminal an Silyleinheiten gebundene aromatische Substituenten beitragen.

Die genaue Menge der aromatischen Gruppen, die notwendig ist, um die Verträglichkeit der Silphenylenpolymere der Formel (I) mit einer bestimmten Auswahl an organischen Bindemitteln einzustellen muss in Abhängigkeit der Auswahl an organischen Bindemitteln ermittelt werden.

Ebenso wie es möglich ist, mehrere organische Polymere zu mischen, die sich gegebenenfalls aus verschiedenen Polymerklassen ausgewählt werden und in der Bindemittelzubereitung zu verwenden. Es ist auch möglich mehrere Silphenylenpolymere der Formel (I) miteinander in Bindemittelzubereitung zu kombinieren. D.h. es ist erfindungsgemäß sowohl nur ein einziges Silphenylenpolymer der Formel (I) als Bindemittel zu verwenden, als auch mehrere Silphenylenpolymere der Formel (I) miteinander zu einer Bindemittelzubereitung zu kombinieren. Ebenso ist es erfindungsgemäß nur ein Silphenylenpolymer der Formel (I) mit einem oder mehreren organischen Polymeren zu einer Bindemittelzubereitung zu kombinieren. Es ist auch erfindungsgemäß mehrere Silphenylenpolymere der Formel (I) mit einem oder mehreren verschiedenen organischen Polymeren zu einer Bindemittelzubereitung zu kombinieren.

Die Feststellung der Verträglichkeit eines oder mehrerer Silphenylenpolymere der Formel (I) mit einem oder mehreren organischen Oligomeren oder Polymeren gelingt leicht, indem man eine Mischung des oder der organischen Bindemittel mit dem oder den Silphenylenpolymeren der Formel (I) vorteilhafter Weise in einem Lösemittel, das alle ausgewählten Komponenten löst, mischt, anschließend das Lösemittel nach Methoden gemäß Stand der Technik, beispielsweise durch Destillation oder Sprühtrocknen entfernt und den erhaltenen Rückstand optisch oder unter Zuhilfenahme mikroskopischer gegebenenfalls elektronenmikroskopischer Methoden bewertet. Verträgliche Mischungen erkennt man daran, dass sich keine Silphenylenpolymer Domänen von den organischen Bestandteilen abtrennen und als eigene Phase erkennbar sind.

Die Verwendung weiterer Formulierungskomponenten, wie Additiven, die gegebenenfalls auch Silane umfassen können, wie beispielsweise Antischaum- und Entlüftungsmitteln, Netz- und Dispergiermitteln, Verlaufsmitteln, Kompatibilisatoren, Haftvermittlern, Härtungsinitiatoren, Katalysatoren, Stabilisatoren, Füllstoffen einschließlich Pigmenten, Farbstoffen, Inhibitoren, Flammschutzmittel, Vernetzungshilfsmitteln, etc. ist erfindungsgemäß und die Auswahl solcher Komponenten grundsätzlich nicht eingeschränkt. Außer Prüfungen der Verträglichkeit im Sinne eines geeigneten Mischbarkeitsverhaltens sind gegebenenfalls auch Prüfungen der Verträglichkeit hinsichtlich der Reaktivität erforderlich, um sowohl ein vorzeitiges Gelieren zu verhindern als auch sicherzustellen, dass während der Härtung eine ausreichend schnelle Polymerisation bzw. Copolymerisation aller Komponenten miteinander erreicht wird, ebenso wie Prüfungen auf ausreichende Benetzung und gegebenenfalls weiterer Eigenschaften. Dies ist im Rahmen der Formulierungserstellung gegebenenfalls zu beachten und zu berücksichtigen.

Beispiele für verwendbare Füllstoffe sind keramische Füllstoffe wie etwa Kieselsäuren, beispielsweise Fällungskieselsäuren oder pyrogene Kieselsäuren, die sowohl hydrophil als auch hydrophob sein können und vorzugsweise hydrophob sind und die des Weiteren auch mit organischen Gruppen auf ihrer Oberfläche funktionell und gegebenenfalls reaktiv ausgestattet sein können, Quarz, der gegebenenfalls oberflächenbehandelt oder oberflächenfunktionalisiert sein kann, so dass er reaktive funktionelle Gruppen auf der Oberfläche tragen kann, Aluminiumoxide, Aluminiumhydroxide, Calciumcarbonat, Talk, Glimmer, Ton, Kaolin, Magnesiumsulfat, Ruß, Titandioxid, Zinkoxide, Antimontrioxid, Bariumtitanat, Strontiumtitanat, Korund, Wollastonit, Zirkoniumwolframat, keramische Hohlkugeln, Aluminiumnitrid, Siliziumcarbid, Berylliumoxid, Magnesiumoxid, Magnesiumhydroxid, volle Glaskugeln, hohle Glaskugeln und Bornitrid. Als weitere Füllstoffe können Kern-Hülle-Partikel aus verschiedenen Materialien eingesetzt werden, die etwa oberflächlich kieselsäurebelegte Siliconharzkugeln, polymerbelegte Elastomerpartikel, wobei die Elastomerpartikel gegebenenfalls auch Siliconelastomere sein können und ein typisches Beispiel für eine Oberflächenbelegung eines solchen Elastomerpartikels eine Polymethylmethacrylathülle ist. Die keramischen Füllstoffe haben vorzugsweise Partikelgrößen ausgedrückt als D₉₀ Wert von 0,1 µm bis 10 µm. Füllstoffe sind vorzugsweise vorhanden in Mengen von 0,1 bis 60 Gewichtsprozent, bevorzugt von 0,5 bis 60 Gewichtsprozent, insbesondere von 1 bis 60 Gewichtsprozent bezogen auf die gesamte Bindemittelformulierung bestehend aus Bindemittel bzw. Bindemitteln, reaktiven Monomeren, Additiven, und Füllstoffen als 100%. D.h. die Menge eines evtl. eingesetzten nicht reaktiven Lösemittels, wird nicht mitgezählt.

Bei den Füllstoffen sind solche besonders hervorzuheben, die thermisch leitfähig sind. Diese sind Aluminiumnitrid, Bornitrid, Siliziumcarbid, Diamant, Graphit, Berylliumoxid, Zinkoxid, Zirkoniumsilikat, Magnesiumoxid, Siliziumoxid und Aluminiumoxid.

Grundsätzlich können die Bindemittelzubereitungen flammhemmende Additive enthalten in einer Menge von üblicherweise 5 bis 25 Gewichtsprozent. Es ist allerdings eine Besonderheit der Silphenylenpolymere der Formel (I), dass sie den Bedarf an flammhemmenden Additiven reduzieren, da die Silphenylenpolymere der Formel (I) selbst bereits flammhemmende Eigenschaften zeigen. Polyorganosiloxane und Siloxane sind bekannt dafür flammhemmende Eigenschaften zu zeigen, die auch bei den erfindungsgemäßen Silphenylenpolymeren wiedergefunden werden, so dass sie selbst als flammhemmende Additive eingesetzt werden können. Es ist daher ein besonderer Vorteil der vorliegenden Erfindung, dass es hier gelingt die Funktion des Bindemittels mit der Funktion der Flammhemmung zu verknüpfen. In Abhängigkeit von der eingesetzten Menge an Silphenylenpolymeren der Formel (I) kann daher die Menge an flammhemmenden Additiven reduziert werden. Bei einer Menge von mindestens 20 Gewichtsprozent bezogen auf die gesamte Mischung aller verwendeten Bindemittel und reaktiven organischen Monomere beträgt die Menge an flammhemmenden Additiven vorzugsweise nur noch 0 bis 10 Gewichtsprozent, besonders bevorzugt 0 bis 8 Gewichtsprozent, insbesondere 0 bis 5 Gewichtsprozent, d.h. es ist möglich, bei Einsatz der Silphenylenpolymere der Formel (I) je nach Auswahl desselben und der eingesetzten Menge auf den Einsatz eines flammhemmenden Additives zu verzichten.

Typische Beispiele für flammhemmende Additive sind Hydrate der Metalle Al, Mg, Ca, Fe, Zn, Ba, Cu oder Ni und Borate des Ba und Zn. Die flammhemmenden Additive können oberflächenbehandelt sein, wobei sie gegebenenfalls reaktive Gruppen auf der Oberfläche besitzen können. Es kann sich bei den flammhemmenden Additiven auch um halogenierte organische flammhemmende Additive handeln, wie beispielsweise Hexachloroendomethylentetrahydrophthalsäure, Tetrabromphthalsäure oder Dibromneopentylglykol. Beispiele für weitere flammhemmende Additive sind Melamincyanurat, Phosphor haltige Komponenten, wie Phosphinate, Diphosphinate, Phopsphazene, Vinylphosphazene, Phosphonate, Phosphaphenantreneoxide, feinkörnige Melaminpolyphosphate.

Weitere Beispiele für bromhaltige flammhemmende Additive sind Bispentabromphenylethan, Ethylenbistetrabromphthalimid, Tetradecabromdiphenoxybenzol, Decabromdiphenyloxid oder bromierte Polysilsesquioxane. Einige flammhemmende Additive verstärken sich in ihrer Wirkung synergistisch. Das ist beispielsweise der Fall für die Kombination von halogenierten Flammschutzadditiven mit Antimontrioxid.

Weitere Beispiele für sonstige Komponenten sind Antioxidationsmittel, Stabilisatoren gegen Abbau durch Bewitterung, Gleitmittel, Weichmacher, farbgebende Mittel, phosphoreszierende oder andere Mittel zum Zwecke der Markierung und Nachverfolgbarkeit und Antistatikmittel.

Vorzugsweise werden die Silphenylenpolymere der Formel (I) im Rahmen der Herstellung von metallkaschierten Laminaten vernetzt.

Als Vernetzungshilfsmittel kommen insbesondere mehrfach ungesättigte radikalisch härtbare oder hydrosilylierbare Monomere und Oligomere zur Anwendung wie sie in nachfolgenden nicht beschränkenden Beispielen illustriert sind. Dazu gehören beispielsweise zweifach olefinisch ungesättigte Komponenten wie beispielsweise symmetrisch olefinisch ungesättigt disubstituierte Disilane, wie 1,1,2,2-Tetramethyl-1,2-divinyldisilan, 1,1,2,2-Tetramethyl-1,2-dipropylmethacryloyldisilan, zweifach olefinisch ungesättigt disubstituierte beispielsweise diallyl- , divinyl-, diacryloyl- oder dimethacryloylsubstiuierte organische Monomere oder Oligomere wie beispielsweise konjugierte und nicht konjugierte Diene, wie 1,9-Decadien, 1,3-Butadien. Ebenso gehören hierzu dreifach olefinisch ungesättigte Monomere oder Oligomere wie 1,2,4-Trivinylcyclohexan, Triallylcyanurate oder Triallylisocyanurate, Tri(meth)acrylate, wie beispielsweise Trimethylolpropantrimethacrylat.

Ebenso gehören hierzu ungesättigt substituierte Monomere und Oligomere wie beispielsweise 2,2-Bis[[(2-methyl-1-oxoallyl)-oxy]methyl]-1,3-propandiylbismethacrylat (*Pentaerythritoltetramethacrylat*), Tetraallyl-cis,cis,cis,cis-1,2,3,4-cyclopentantetracarboxylat, Tetraallylsilane, Glyoxalbis(diallylacetal).

Da neben der radikalischen Härtung auch die Hydrosilylierungshärtung denkbar ist, können auch mehrfach Si-H-funktionelle Komponenten als Vernetzer wirken, wie beispielsweise 1,1,2,2-Tetramethyl-1,2-disilan, 1,4-Bis(dimethylsilyl)benzol oder mehrfach ketten- und/oder endständig Si-H-funktionelle Oligo- und Polyorganosilane.

Als Katalysatoren bzw. Initiatoren kommen für die radikalische Härtung der Bindemittelzubereitungen aus Silphenylenpolymeren der Formel (I) und organischen Monomeren, Oligomeren und Polymeren die gleichen in Frage wie sie bereits weiter oben genannt sind, also insbesondere Peroxide. Darüber hinaus sind zur Initiierung der radikalischen Härtung sowohl der Silphenylenpolymeren der Formel (I) alleine als auch der beschriebenen Bindemittelzubereitungen weitere Radikalstarter geeignet wie beispielsweise Azokomponenten, wie beispielsweise α,α'Azobis(isobutyronitril), Redoxinitiatoren wie zum Beispiel Kombinationen aus Peroxiden wie Wasserstoffperoxid und Eisensalzen oder Azide wie Acetylazid.

Die Silphenylenpolymere der Formel (I) bzw. die Zubereitungen diese enthaltend, können für die erfindungsgemäße Anwendung sowohl lösemittelfrei als auch als lösemittelhaltige Zubereitung eingesetzt werden. In der Regel werden sie als lösemittelhaltige Zubereitung eingesetzt, um die homogene Verteilung aller Komponenten der Formulierung ineinander und die Benetzung und Durchtränkung einer evtl. verwendeten Verstärkungsschicht zu erleichtern. In der Regel wird eine Verstärkungsschicht mit eingesetzt. Bevorzugt handelt es sich dabei um ein Glasfasergewebe. Die Durchtränkung der Verstärkungsschicht kann durch imprägnierenden Auftrag der Zubereitung erfolgen, wobei hierfür verschiedene technische Lösungen zur Verfügung stehen, gegebenenfalls auch kontinuierliche Verfahren und deren Auswahl zur Herstellung der erfindungsgemäßen metallkaschierten Laminate in keiner Weise eingeschränkt ist. Nicht limitierende Beispiele für Auftragstechniken sind das Tauchen, gegebenenfalls von Bahnen des Verstärkungsmaterials über Rollensysteme in kontinuierlichen Prozessen, das Sprühen, Fluten, Rakeln, etc. Es ist ein Vorteil der vorliegenden Erfindung, dass alle zur Verfügung stehenden Technologien ohne Einschränkung und Modifizierung angewendet werden können und kein spezielles neues Verfahren für den Einsatz der Silphenylenpolymere der Formel (I) erforderlich ist. Insofern bewegt sich die vorliegende Erfindung in der Herstellung der metallkaschierten Laminate vollumfänglich im verfügbaren Stand der Technik. Neu ist die Verwendung der Silphenylenpolymere der Formel (I) für die Herstellung der betreffenden metallkaschierten Laminate, die bislang unbekannt ist.

Nach dem Imprägnieren folgt ein Trockenschritt, bei dem gegebenenfalls verwendetes Lösemittel entfernt wird. Auch für den Trocknungsprozess finden Methoden nach Stand der Technik Anwendung. Diese umfassen insbesondere das thermisch induzierte Verdampfen mit oder ohne Vakuum. Durch geeignete Einstellung der Reaktivität und der Klebrigkeit der verwendeten Bindemittelmischung werden nach diesem Schritt unter geeigneten Bedingungen, wie beispielsweise Kühlung, lagerfähige Composite Materialien erhaltenen, die gegebenenfalls zu einem späteren Zeitpunkt weiterverarbeitet werden können.

In einem letzten Schritt des Verfahrens erfolgt die Polymerisation der Bindemittelzubereitung wiederum nach Methoden gemäß Stand der Technik. Gegebenenfalls mitverwendete Initiatoren für die radikalische Polymerisation werden dabei über ihre Zersetzungstemperatur hinaus erhitzt, so dass sie unter Bildung von Radikalen zerfallen und die radikalische Polymerisation der Bindemittelzubereitung initiieren. Grundsätzlich sind auch Methoden der Strahlenhärtung anwendbar.

Wird statt der radikalischen Polymerisation die Hydrosilylierungshärtung verwendet, ist in diesem Schritt eine Temperatur anzuwenden, die geeignet ist, den zum verwendeten Hydrosilylierungskatalysator mitverwendeten Inhibitor zu deaktivieren und die katalytische Aktivität des Hydrosilylierungskatalysators freizusetzen.

Dieser Schritt erfolgt in der Regel bei erhöhter Temperatur von vorzugsweise 100 bis 390°C, besonders bevorzugt von 100 bis 250°C, insbesondere von 130 bis 200°C, wobei die Temperatur für eine Zeit von vorzugsweise 5 bis 180 min wirksam ist, besonders bevorzugt 5 bis 150 min, insbesondere 10 bis 120 min. Außerdem ist es üblich, bei diesem Schritt erhöhten Druck anzuwenden. Übliche Drücke liegen im Bereich von 1 bis 10 MPa, besonders bevorzugt von 1 bis 5 MPa, insbesondere von 1 bis 3 MPa.

Die Laminierung des Composite Materials mit einer leitfähigen Metallschicht erfolgt in diesem zweiten Schritt, indem eine Schicht mindestens eines ausgewählten Metalls auf einer oder auf beiden Seiten des Composite Materials aus Verstärkungsschicht und Bindemittelzubereitung aufgebracht wird, bevor die Härtung stattfindet. D.h. zwischen dem ersten Schritt bestehend aus Imprägnierung und Trocknung und dem zweiten Schritt umfassend die chemische Härtung der Bindemittelzubereitung, erfolgt das Kaschieren des Composites aus dem ersten Schritt mit mindestens einer Sorte eines leitfähigen Metalls.

Als leitfähige Metalle kommen insbesondere mindestens eines aus folgender Auswahl in Frage: Kupfer, Edelstahl, Gold, Aluminium, Silber, Zink, Zinn, Blei und Übergangsmetalle. Die Dicke der leitfähigen Schicht, ihre Form, Größe oder Oberflächentextur sind nicht grundsätzlich eingeschränkt. Die leitfähige Metallschicht hat vorzugsweise eine Dicke von 3 bis 300 µm, besonders bevorzugt von 3 bis 250 µm, insbesondere von 3 bis 200 µm. Dabei kann die Dicke der beiden Schichten mindestens einer Sorte eines leitfähigen Metalls, sofern zwei Schichten verwendet werden, variieren und muss nicht identisch sein. Besonders bevorzugt ist es, dass das leitfähige Metall Kupfer ist und dass in dem Fall, dass zwei leitfähige Schichten aus leitfähigem Metall verwendet werden, beide Schichten Kupfer sind. Das leitfähige Metall wird vorzugsweise in Form einer Folie aus dem betreffenden Metall verwendet. Der Mittenrauwert Ra der eingesetzten Metallfolie beträgt vorzugsweise höchstens 2 µm, besonders bevorzugt höchstens 1 µm, insbesondere höchstens 0,7 µm. Je geringer die Oberflächenrauigkeit ist, desto besser ist die Eignung der jeweiligen Folie für den Einsatz in Hochfrequenzanwendungen, die das bevorzugte Ziel der vorliegenden Erfindung sind. Zur Verbesserung der Haftung zwischen der leitfähigen Metallschicht und dem Composite aus Bindemittelzubereitung und Verstärkungsschicht, können gegebenenfalls verschiedene Methoden gemäß Stand der Technik eingesetzt werden, wie beispielsweise die Verwendung einer haftvermittelnden Schicht, die galvanotechnische Abscheidung der Metallschicht auf dem Composite aus Bindemittelzubereitung und Verstärkungsschicht oder die Gasphasenabscheidung. Die Schicht aus leitfähigem Metall kann direkt auf dem Composite aus Bindemittelzubereitung und Verstärkungsschicht sitzen oder durch eine haftvermittelnde Schicht mit derselben verbunden sein.

Falls keine Verstärkungsschicht mitverwendet wird, erfolgt die Erzeugung einer Schicht aus der Bindemittelzubereitung enthaltend die Silphenylenpolymere der Formel (I) durch Abscheidung einer Schicht aus Bindemittelzubereitung auf einem Träger, wie beispielsweise einer Trennfolie oder Trennplatte, wobei für den Träger grundsätzlich jedes Material geeignet ist, von dem die getrocknete oder gehärtete Bindemittelzubereitung später wieder ablösbar ist, wie beispielsweise Polytetrafluorethylen, Polyester und dergleichen. Die Ablösbarkeit sowie die Filmbildungseigenschaften auf dem jeweiligen Trägermaterial sind in Abhängigkeit von der Bindemittelzusammensetzung individuell zu bestimmen. Die getätigten Aussagen zum Verfahren bleiben für diese verstärkungsfreie Variante in gleicher Weise gültig.

Aus den verstärkten oder unverstärkten Composite Materialien aus dem ersten und den laminierten Composite Materialien aus dem zweiten Schritt lassen sich mehrschichtige Aufbauten erzeugen, indem mehrere Langen der Composite Materialien aus dem ersten Schritt beispielsweise abwechselnd mit den kaschierten Laminaten aus dem zweiten Schritt übereinander gestapelt werden und die noch nicht gehärteten Composite Materialien aus dem ersten Schritt anschließend in einem Prozess, der im Wesentlichen der Vorgehensweise zur Erzeugung der metallkaschierten Laminate entspricht, gehärtet wird. Zur Erzeugung dickerer Schichten können hierbei auch mehrere Lagen aus den verstärkten oder unverstärkten Compositen aus dem ersten Schritt in unmittelbarer Reihenfolge übereinandergestapelt werden.

Die Silphenylenpolymere der Formel (I) können außer für die Herstellung metallkaschierter Laminate des Weiteren in korrosionsschützenden Zubereitungen verwendet werden, insbesondere zur Verwendung zum Zwecke des Korrosionsschutzes bei hoher Temperatur.

Außerdem können die Silphenylenpolymere der Formel (I) und Zubereitungen, die diese enthalten auch zum Korrosionsschutz von Armierungsstahl in Stahlbeton eingesetzt werden. Korrosionsinhibierende Effekte im Stahlbeton werden dabei sowohl dann erreicht, wenn man die Silphenylenpolymere der Formel (I) und Zubereitungen, die diese enthalten in die Betonmischung einbringt, bevor sie in Form gebracht und ausgehärtet werden, als auch wenn man die Silphenylenpolymere der Formel (I) oder Zubereitungen, die diese enthalten auf die Oberfläche des Betons aufbringt, nachdem der Beton ausgehärtet ist.

Außer zum Zwecke des Korrosionsschutzes auf Metallen können die Silphenylenpolymere der Formel (I) auch zur Manipulation von weiteren Eigenschaften von Zubereitungen, die die erfindungsgemäßen Silphenylenpolymere enthalten oder von Festkörpern oder Filmen, die aus Zubereitungen erhalten werden, die die Silphenylenpolymere der Formel (I) enthalten, dienen wie z.B.:
- Steuerung der elektrischen Leitfähigkeit und des elektrischen Widerstandes
- Steuerung der Verlaufseigenschaften einer Zubereitung
- Steuerung des Glanzes eines feuchten oder gehärteten Filmes oder eines Objektes
- Erhöhung der Bewitterungsbeständigkeit
- Erhöhung der Chemikalienresistenz
- Erhöhung der Farbtonstabilität
- Reduzierung der Kreidungsneigung
- Reduzierung oder Erhöhung der Haft- und Gleitreibung auf Festkörpern oder Filmen erhalten aus Zubereitungen, die Polyorganosiloxane der Formel (I) enthaltend
- Stabilisierung oder Destabilisierung von Schaum in der Zubereitung, die die erfindungsgemäßen Silphenylenpolymere enthält
- Verbesserung der Haftung der Zubereitung die die Polyorganosiloxane der Formel (I) enthält zu Substraten
- Steuerung des Füllstoff- und Pigmentnetz- und -dispergierverhaltens,
- Steuerung der rheologischen Eigenschaften der Zubereitung, die die erfindungsgemäßen Silphenylenpolymere enthält,
- Steuerung der mechanischen Eigenschaften, wie z.B. Flexibilität, Kratzfestigkeit, Elastizität, Dehnbarkeit, Biegefähigkeit, Reißverhalten, Rückprallverhalten, Härte, Dichte, Weiterreißfestigkeit, Druckverformungsrest, Verhalten bei verschiedenen Temperaturen, Ausdehnungskoeffizient, Abriebfestigkeit sowie weiterer Eigenschaften wie der Wärmeleitfähigkeit, Brennbarkeit, Gasdurchlässigkeit, Beständigkeit gegen Wasserdampf, Heißluft, Chemikalien, Bewitterung und Strahlung, der Sterilisierbarkeit, von Festkörpern oder Filmen erhältlich, die die Silphenylenpolymere der Formel (I) oder diese enthaltende Zubereitungen enthält,
- Steuerung der elektrischen Eigenschaften, wie z.B. dielelektrischer Verlustfaktor, Durchschlagfestigkeit, Dielektrizitätskonstante, Kriechstromfestigkeit, Lichtbogenbeständigkeit, Oberflächenwiderstand, spezifischer Durchschlagswiderstand,
- Flexibilität, Kratzfestigkeit, Elastizität, Dehnbarkeit, Biegefähigkeit, Reissverhalten, Rückprallverhalten, Härte, Dichte, Weiterreißfestigkeit, Druckverformungsrest, Verhalten bei verschiedenen Temperaturen von Festkörpern oder Filmen erhältlich aus der Zubereitung die die Silphenylenpolymere der Formel (I) enthält.

Beispiele für Anwendungen, in denen die Silphenylenpolymere der Formel (I) eingesetzt werden kann, um die oben bezeichneten Eigenschaften zu manipulieren, sind die Herstellung von Beschichtungsstoffen und Imprägnierungen und daraus zu erhaltenden Beschichtungen und Überzügen auf Substraten, wie Metall, Glas, Holz, mineralisches Substrat, Kunst- und Naturfasern zur Herstellung von Textilien, Teppichen, Bodenbelägen, oder sonstigen aus Fasern herstellbaren Gütern, Leder, Kunststoffe wie Folien, und Formteilen. Die Silphenylenpolymere der Formel (I) können in Zubereitungen bei entsprechender Auswahl der Zubereitungskomponenten außerdem als Additiv zum Zwecke der Entschäumung, der Verlaufsförderung, Hydrophobierung, Hydrophilierung, Füllstoff- und Pigmentdispergierung, Füllstoff-und Pigmentbenetzung, Substratbenetzung, Förderung der Oberflächenglätte, Reduzierung des Haft- und Gleitwiderstandes auf der Oberfläche der aus der additivierten Zubereitung erhältlichen ausgehärteten Masse eingesetzt werden. Die Silphenylenpolymere der Formel (I) können in flüssiger oder in ausgehärteter fester Form in Elastomermassen eingearbeitet werden. Hierbei können sie zum Zwecke der Verstärkung oder zur Verbesserung anderer Gebrauchseigenschaften, wie der Steuerung der Transparenz, der Hitzebeständigkeit, der Vergilbungsneigung, oder der Bewitterungsbeständigkeit, eingesetzt werden.

Alle vorstehenden Symbole der vorstehenden Formeln weisen ihre Bedeutungen jeweils unabhängig voneinander auf. In allen Formeln ist das Siliziumatom vierwertig.

### Beispiele:

Die folgenden Beispiele dienen der weiteren Erläuterung der Erfindung. Sie sind illustrierend zu verstehen, nicht beschränkend.

Falls nicht anders angegeben, werden alle Manipulationen bei Raumtemperatur von 23°C und unter Normaldruck (1,013 bar) ausgeführt.

Falls nicht anders angegeben, gelten alle Daten zur Beschreibung von Produkteigenschaften bei Raumtemperatur von 23°C und unter Normaldruck (1,013 bar).

Bei den Apparaten handelt es sich um handelsübliche Laborgeräte, wie sie von zahlreichen Geräteherstellern käuflich angeboten werden.
Ph bedeutet einen Phenylrest = C₆H₅-
Me bedeutet einen Methylrest = CH₃-. Me₂ bedeutet entsprechend zwei Methylreste.

PPE bedeutet Polyphenylenether.

HCl bedeutet Chlorwasserstoff.

Im vorliegenden Text werden Stoffe durch Angabe von Daten charakterisiert, die mittels instrumenteller Analytik erhalten werden. Die zugrundeliegenden Messungen werden entweder öffentlich zugänglichen Normen folgend durchgeführt oder nach speziell entwickelten Verfahren ermittelt. Um die Klarheit der mitgeteilten Lehre zu gewährleisten, sind die verwendeten Methoden hier nachfolgend angegeben.

In allen Beispielen beziehen sich die Angaben von Teilen und Prozentsätzen auf das Gewicht, falls nicht anders angegeben.

### Viskosität:

Die Viskositäten werden, wenn nicht anders angegeben, durch rotationsviskosimetrische Messung gemäß DIN EN ISO 3219 bestimmt. Falls nicht anders angegeben, gelten alle Viskositätsangaben bei 25°C und Normaldruck von 1013 mbar.

### Brechungsindex:

Die Brechungsindices werden im Wellenlängenbereich des sichtbaren Lichtes bestimmt, falls nicht anders angegeben, bei 589 nm bei 25°C und Normaldruck von 1013 mbar gemäß der Norm DIN 51423.

### Transmission:

Die Transmission wird durch UV VIS Spektroskopie bestimmt. Ein geeignetes Gerät ist beispielsweise das Analytik Jena Specord 200.

Die verwendeten Messparameter sind: Bereich: 190 - 1100 nm Schrittweite: 0,2 nm, Integrationszeit: 0,04 s, Messmodus: Schrittbetrieb. Als erstes erfolgt die Referenzmessung (Background). Eine Quarzplatte, befestigt an einem Probenhalter (Dimension der Quarzplatten: HxB ca. 6 x 7 cm, Dicke ca 2,3 mm), wird in den Probenstrahlengang gegeben und gegen Luft gemessen.

Danach erfolgt die Probenmessung. Eine am Probenhalter befestigte Quarzplatte mit aufgetragener Probe - Schichtdicke aufgetragene Probe ca. 1 mm - wird in den Probenstrahlengang gegeben und gegen Luft gemessen. Die interne Verrechnung gegen das Backgroundspektrum liefert das Transmissionsspektrum der Probe.

### Molekülzusammensetzungen:

Die Molekülzusammensetzungen werden mittels Kernresonanzspektroskopie bestimmt (zu Begrifflichkeiten siehe ASTM E 386: Hochauflösende magnetische Kernresonanzspektroskopie (NMR): Begriffe und Symbole), wobei der ¹H-Kern und der ²⁹Si-Kern vermessen werden.

### Beschreibung ¹H-NMR Messung:

| | |
|---|---|
| Solvent: | CDCl3, 99,8%d |
| Probenkonzentration: | ca. 50 mg / 1 ml CDCl3 in 5 mm NMR-Röhrchen |

Messung ohne Zugabe von TMS, Spektrenreferenzierung von Rest-CHCl3 in CDCl3 auf 7,24 ppm

| | |
|---|---|
| Spektrometer: | Bruker Avance I 500 oder Bruker Avance HD 500 |
| Probenkopf: | 5 mm BBO-Probenkopf oder SMART-Probenkopf (Fa . Bruker) |

Meßparameter:
Pulprog = zg30
TD = 64k
NS = 64 bzw. 128 (abhängig von der Empfindlichkeit des Probenkopfes)
SW = 20,6 ppm
AQ = 3,17 s
D1 = 5 s
SFO1 = 500,13 MHz
O1 = 6,175 ppm

Processing-Parameter:
SI = 32k
WDW = EM
LB = 0,3 Hz

Je nach verwendetem Spektrometertyp sind evtl. individuelle Anpassungen der Messparameter erforderlich.

### Beschreibung ²⁹Si-NMR Messung:

| | |
|---|---|
| Solvent: | C6D6 99,8%d/CCl4 1:1 v/v mit 1Gew% Cr(acac)₃ als Relaxationsreagenz |
| Probenkonzentration: | ca. 2 g / 1,5 ml Solvent in 10 mm NMR-Röhrchen |
| Spektrometer: | Bruker Avance 300 |
| Probenkopf: | 10 mm 1H/13C/15N/29Si glasfreier QNP-Probenkopf (Fa. Bruker) |

Messparameter:
Pulprog = zgig60
TD = 64k
NS = 1024 (abhängig von der Empfindlichkeit des Probenkopfes)
SW = 200 ppm
AQ = 2,75 s
D1 = 4 s
SFO1 = 300,13 MHz
O1 = -50 ppm

Processing-Parameter:
SI = 64k
WDW = EM
LB = 0,3 Hz

Je nach verwendetem Spektrometertyp sind evtl. individuelle Anpassungen der Messparameter erforderlich.

### Molekulargewichtsverteilungen:

Molekulargewichtsverteilungen werden als Gewichtsmittel Mw und als Zahlenmittel Mn bestimmt, wobei die Methode der Gelpermeationschromatographie (GPC bzw. Size Exclusion Chromatographie (SEC)) Anwendung findet mit Polystyrol Standard und Brechnungsindexdetektor (RI-Detektor). Wo nicht anders ausgewiesen, wird THF als Eluent verwendet und DIN 55672-1 angewendet. Die Polydispersität ist der Quotient Mw/Mn.

### Glasübergangstemperaturen:

Die Glasübergangstemperatur wird nach Dynamischer Differenzkalorimetrie (Differential Scanning Calorimetry, DSC) nach DIN 53765, gelochter Tigel, Aufheizrate 10 K/min bestimmt.

### Bestimmung der Teilchengröße:

Die Partikelgrößen wurden nach der Methode der Dynamic Light Scattering (DLS) unter Bestimmung des Zetapotenzials gemessen. Für die Bestimmung wurden folgende Hilfsmittel und Reagenzien verwendet:
Polystyrolküvetten 10 x 10 x 45 mm, Pasteurpipetten für den Einmalgebrauch, ultrareines Wasser.

Die zu vermessende Probe wird homogenisiert und blasenfrei in die Messküvette eingefüllt.

Die Messung erfolgt bei 25°C nach einer Äquilibrierzeit von 300s mit hoher Auflösung und automatischer Messzeiteinstellung.

Die angegebenen Werte beziehen sich immer auf den Wert D(50). D(50) ist als volumengemittelter Partikeldurchmesser zu verstehen, bei dem 50% aller gemessenen Partikel einen volumengemittelten Durchmesser kleiner als der ausgewiesene Wert D(50) aufweisen.

### Bestimmung der dielektrischen Eigenschaften: Df, Dk

Die Bestimmung der dielektrischen Eigenschaften erfolgt gemäß IPC TM 650 2.5.5.13 mit einem Network Analyzer Keysight / Agilent E8361A nach der Split-Cylinder Resonator Methode bei 10 GHz.

### Durchführung der Mikroskopie:

Die Mikro-/Nanostruktur wurde lichtmikroskopisch bzw. mittels Transmissionselektronenmikroskopie charakterisiert.

Lichtmikroskopie:
Probenpräparation: 1 Tropfen Probe (unverdünnt) auf Objektträger; mit Deckglas abgedeckt
Gerät: LEICA DMRXA2 mit CCD-Kamera LEICA DFC420 (2592x1944 Pixel)
Abbildung: Durchlicht - Interferenzkontrast, verschiedene Vergrößerungsstufen

Transmissionselektronenmikroskopie:
Probenpräparation: 1 Tropfen Probe (Verdünnung 1:20, bei Bedarf Anpassung notwendig) auf beschichtetes TEM-Grid; Zugabe eines Kontrastmittels bei Bedarf; Trocknung bei RT
Gerät: ZEISS LIBRA 120 mit CCD-Kamera Sharp Eye (1024x1024 Pixel)
Abbildung: Anregungsspannung 120 kV; TEM-Hellfeld; verschiedene Vergrößerungsstufen

### Haftungsprüfung durch Abzugstest (Peel strength Test):

Die Haftung der auf die Composite Schichten mit oder ohne Verstärkungsmaterial aufkaschierten Metallschichten wurde bestimmt gemäß der Methode IPC-TM 650 2.4.8 "Peel Strength of Metallic Clad Laminates" in der Version "as received", d.h. ohne thermische Belastung oder Exposition.

Eine 35 µm Kupferfolie, Masse 285 ± 10 g/m², Rautiefe Rz ≤ 8 µm, Mittenrauwert Ra ≤ 0,4 µm wurde beiderseits auf einer Compositeschicht von 100 µm Dicke aufkaschiert, wobei zum Härten und Laminieren 180 min lang 200°C, 2,0 MPa, 30 mm Hg Säule wirkten.

### Prüfung der Brennbarkeit:

Die Prüfung wurde gemäß den Vorgaben nach UL 94-V von Underwriters Laboratories als senkrechte Brandprüfung durchgeführt. Die Prüfkörper wurden vor der Prüfung unter folgenden Bedingungen konditioniert: 2 Tage Lagerung bei 23°C 50% relativer Luftfeuchte, danach 7 Tage bei 70°C im Warmluftofen. Die Beflammung erfolgte mit einer Tirillbrennerflamme. Die Beflammungszeit betrug jeweils 2 x 10 s. Die zweite Beflammungszeit beginnt, sobald die entzündete Probe verloschen ist. Bei nicht entzündeten Proben erfolgt die zweite Beflammung im unittelbaren Anschluss an die erste Beflammung. Die Länge des Teststückes betrug 5" (127 mm) und die Breite 0,5" (12,7 mm). Die zu testenden Platten waren 0,4" (10,2 mm) dick. Die Platten wurden am oberen Ende in einer Länge von 1/4" in senkrechter Position befestigt. 12" (305 mm) unter der Testplatte wurde ein mit chirurgischer Baumwolle beschichtetes Netz platziert. Der Brenner wird so eingestellt, dass eine blaue Flamme von einer Länge von 3/4" entsteht. Die Flamme wird aus einer Entfernung von 3/8" (9,5 mm) auf den unteren Rand der Kunststoffplatte gerichtet. Nach 10 Sekunden einwirken wird die Flamme entfernt. Die Entflammungszeit des Versuchsstückes wird notiert. Sobald die Flammenbildung aussetzt, wird die Flamme des Brenners erneut für 10 Sekunden unter dem Versuchsstück platziert. Nach dem Entfernen der Flamme werden die Entflammungszeit und die Glühdauer des Stückes notiert. Der Test wird an 5 verschiedenen Versuchsstücken durchgeführt.

### Synthesebeispiel 1: Herstellung eines Silphenylenpolymers nach dem erfindungsgemäßen Verfahren aus Chlorsilanen:

In eine 2 l Dreihalskolben Glasapparatur mit Kugelkühler und Tropftrichter werden 48 g Magnesiumspäne (2 mol) eingefüllt. Die Apparatur wird anschließend auf 10⁻³ mbar Innendruck evakuiert und die Glaswände gleichzeitig mit einem Heißluftföhn mit 270°C Temperatur beaufschlagt, um Reste von am Magnesium und an der Glaswand anhaftendem Wasser zu entfernen. Anschließend wird das Vakuum mit Argon gebrochen, bis im Inneren der Apparatur ein Druck von 1013 mbar herrscht. Man lässt die Apparatur abkühlen auf Raumtemperatur von 23°C.

In die Apparatur werden 250 ml getrocknetes mit Stickstoff begastes 1,4-Dioxan eingefüllt. Man setzt ein Körnchen Iod, von ca. 50 mg Masse zu und erhitzt auf 60°C Innentemperatur. 118 g (0,5 mol) 1,4-Dibrombenzol werden unter trockener Stickstoffatmosphäre in 400 ml getrocknetem mit Stickstoff begastem 1,4-Dioxan gelöst und die Mischung in den Tropftrichter überführt. Die Mischung wird innerhalb von 3 h gleichmäßig dosiert, wobei gleichzeitig gegen die auftretende exotherme Erwärmung so gegengeheizt wird, dass die Innentemperatur 65°C nicht übersteigt. Anschließend wird 7 h bei 65°C gerührt, um die Reaktion zum 1,4-Dibrombenzol Grignard Reagenz zu vervollständigen. Man erhält eine graue, trübe Zubereitung.

Die Reaktionsmischung wird auf 2°C abgekühlt. Man füllt eine Mischung von 89,8 g einer Mischung aus 0,14 mol Vinyldimethylchlorsilan und 0,57 mol Dimethyldichlorsilan in den Tropftrichter. Auch dieser Schritt erfolgt unter trockenem Stickstoff als Schutzgas. Die Silanmischung wird innerhalb von 3 h gleichmäßig zudosiert, wobei wiederum gekühlt wird, um die Temperatur auf unter 5°C zu halten. Nach beendeter Dosierung rührt man weitere 3 h bei 2°C. Anschließend wird die Reaktionsmischung über eine Filterplatte mit einer Porengröße von 1,2 µm filtriert. Das Filtrat ist klar und niederviskos. Das 1,4-Dioxan wird anschließend bei 120°C und 20 mbar Vakuum abgedampft. Man erhält einen leicht rötlich gelben Feststoff, der anschließend für die weitere Aufarbeitung in Toluol zu einer 50%-igen Lösung aufgelöst wird. Man setzt zu der toluolischen Lösung unter Rühren 200 ml vollentsalztes Wasser zu, stellt den Rührer ab und lässt die Zubereitung zur Ruhe kommen, wobei sich die wässrige und die organische Phase voneinander trennen. Die wässrige Phase wird abgelassen und der Waschvorgang noch dreimal in gleicher Weise wiederholt. Zu der verbliebenen organischen Phase setzt man 30 g Natriumsulfat zu, rührt 5 min und filtriert anschließend über eine 1,2 µm Filterplatte ab. Man destilliert das Toluol anschließend bei 120°C und 20 mbar Vakuum vollständig ab und erhält einen orangefarbenen Feststoff.

SEC: Mw = 1050 g/mol, Mn = 713 g/mol, Polydispersität PD = 1,47.

Silanol- und Alkoxygruppen sind im ¹H-NMR nicht nachweisbar.

Nach ²⁹Si-NMR ist die molare Zusammensetzung des siliziumhaltigen Anteils der Zubereitung:
(CH₂=CH)Me₂Si(C₆H₄)-: 21,8 %
- (C₆H₄)(Me₂)Si(C₆H₄)-: 78,2 %

Dabei wird jeder verbrückende -(C₆H₄)-Rest zur Hälfte zu jedem daran gebundenen Si-Atom gezählt.

Dieses Produkt ist in Toluol gut löslich. Eine 80%-ige toluolische Lösung, bestehend aus 80% des Reaktionsproduktes in 20% Toluol ist problemlos herstellbar. Die %-Angaben beziehen sich auf die Masse. In den Anwendungsbeispielen wird jedoch eine 50%-ige toluolische Lösung verwendet, da die Gegenbeispiele eine geringere Löslichkeit aufweisen und die Vergleichbarkeit auf diese Weise gewährleistet werden soll. Die 50%-ige Zubereitung wird im Folgenden als 1.1 bezeichnet. Das hier hergestellte Silphenylenpolymer ist gemäß EP 0913420 nicht zugänglich, da es nicht durch Hydrosilylierung herstellbar ist.

### Synthesebeispiel 2: Herstellung eines Silphenylenpolymers nach dem erfindungsgemäßen Verfahren aus Alkoxysilanen:

Die Vorgehensweise entspricht der in Synthesebeispiel 1 beschriebenen mit folgenden Unterschieden:
Anstelle von 1,4-Dioxan verwendet man THF als Lösemittel. Anstelle einer Mischung der Chlorsilane verwendet man 84,6 g einer Mischung aus 0,14 mol Vinyldimethylmethoxysilan (116 g/mol) und 0,57 mol Dimethyldimethoxysilan (120 g/mol).

In dem erhaltenen Produkt sind per ¹H-NMR keine Silanolgruppen nachweisbar. Methoxygruppen sind nach ¹H-NMR in einer Menge von ca. 0,1 Gewichtsprozent vorhanden.

Per SEC (Eluent Toluol) wurden folgende Molekulargewichte bestimmt: Mw = 1134 g/mol, Mn = 803 g/mol, Polydispersität PD = 1,41.

Nach ²⁹Si-NMR ist die molare Zusammensetzung des siliziumhaltigen Anteils der Zubereitung:
(CH₂=CH)Me₂Si(C₆H₄)-: 22,1 %
-(C₆H₄)(Me₂)Si(C₆H₄)-: 77,9 %

Dabei wird jeder verbrückende -(C₆H₄)-Rest zur Hälfte zu jedem daran gebundenen Si-Atom gezählt.

Dieses Produkt ist in Toluol gut löslich. Eine 80%-ige toluolische Lösung, bestehend aus 80% des Reaktionsproduktes in 20% Toluol ist problemlos herstellbar. Die %-Angaben beziehen sich auf die Masse. In den Anwendungsbeispielen wird jedoch eine 50%-ige toluolische Lösung verwendet, da die Gegenbeispiele eine geringere Löslichkeit aufweisen und die Vergleichbarkeit auf diese Weise gewährleistet werden soll. Die 50%-ige Zubereitung wird im Folgenden als 2.1 bezeichnet.

Das hier hergestellte Silphenylenpolymer ist gemäß EP 0913420 nicht zugänglich, da es nicht durch Hydrosilylierung herstellbar ist.

### Synthesebeispiel 3: Herstellung eines erfindungsgemäßen Silphenylenpolymers aus Alkoxysilanen unter Verwendung eines multihalogenierten organischen Rohstoffes:

Die Vorgehensweise entspricht der in Synthesebeispiel 1 beschriebenen mit folgenden Unterschieden:
Anstelle von 1,4-Dioxan verwendet man THF als Lösemittel. Anstelle einer Mischung der Chlorsilane verwendet man 67,8 g einer Mischung aus 0,14 mol Vinyldimethylmethoxysilan (116 g/mol) und 0,43 mol Dimethyldimethoxysilan (120 g/mol). Anstelle von 1,4-Dibrombenzol werden 0,25 mol (118 g) 3,3',5,5'-Tetrabromo-1,1'-biphenyl verwendet.

In dem erhaltenen Produkt sind per ¹H-NMR keine Silanolgruppen nachweisbar. Methoxygruppen sind nach ¹H-NMR in einer Menge von < 0,1 Gewichtsprozent vorhanden.

Per SEC (Eluent Toluol) wurden folgende Molekulargewichte bestimmt: Mw = 1347 g/mol, Mn = 941 g/mol, Polydispersität PD = 1,43.

Nach ²⁹Si-NMR ist die molare Zusammensetzung des siliziumhaltigen Anteils der Zubereitung:
(CH₂=CH)Me₂Si(C₁₂H₈)-: 21,3 %
-(C₁₂H₈)(Me₂)Si(C₁₂H₈)-: 78,7 %

Dabei wird jeder verbrückende -(C₁₂H₈)-Rest zu einem Viertel zu jedem daran gebundenen Si-Atom gezählt.

Dieses Produkt ist in Toluol gut löslich. Eine 80%-ige toluolische Lösung, bestehend aus 80% des Reaktionsproduktes in 20% Toluol ist problemlos herstellbar. Die %-Angaben beziehen sich auf die Masse. In den Anwendungsbeispielen wird jedoch eine 50%-ige toluolische Lösung verwendet, da die Gegenbeispiele eine geringere Löslichkeit aufweisen und die Vergleichbarkeit auf diese Weise gewährleistet werden soll. Die 50%-ige Zubereitung wird im Folgenden als 3.1 bezeichnet.

Das hier hergestellte Silphenylenpolymer ist gemäß EP 0913420 nicht zugänglich, da es nicht durch Hydrosilylierung herstellbar ist.

### Synthesebeispiel 4: Herstellung eines Silphenylen-Silalkylen Copolymers nach Stand der Technik gemäß Beispiel 1 in EP 0913420 als nicht erfindungsgemäßes Vergleichsbeispiel.

Die Ausgangsmaterialien 1,4-Bis(phenylmethylvinylsilyl)-phenylen und 1,4-Bis(dimethylsilyl)phenylen wurden durch Grignardsynthese hergestellt. Dafür ist die gleiche Vorgehensweise geeignet, wie sie in Synthesebeispiel 1 beschrieben ist. Im Falle von 1,4-Bis(phenylmethylvinylsilyl)phenylen wurde dabei im ersten Schritt aus der vierfachen molaren Menge Magnesium Spänen bezogen auf die eingesetzte Menge 1,4-Dibrombenzol und dem 1,4-Dibrombenzol ein Di-Gringnard Reagenz in THF erzeugt, das im zweiten Schritt mit der auf das Dibrombenzol bezogen doppelt molaren Menge Phenylmethylvinylmethoxysilan wie in Beispiel beschrieben umgesetzt wurde. Man erhält das gewünschte 1,4-Bis(phenylmethylvinylsilyl)phenylen, dessen Identität analytisch durch ¹H und ²⁹Si-NMR Spektroskopie bestätigt wurde. Die gleiche Vorgehensweise wurde zur Herstellung von 1,4-Bis(dimethylsilyl)phenylen angewandt, wobei anstelle des Phenylmethylvinylmethoxysilans nun die entsprechende Menge Dimethylmethoxysilan verwendet wurde. Auch hier lässt sich der Erhalt der gewünschten chemischen Komponente NMR-spektroskopisch belegen. An dieser Stelle zeigt sich bereits ein ganz wesentlicher Unterschied dieses Standes der Technik gegenüber der hier dargelegten Erfindung, denn der Aufwand nur zur Vorbereitung des Experimentes gemäß Beispiel 1 von EP 0913420 ist bereits doppelt so hoch wie der Aufwand zur Herstellung eines erfindungsgemäßen Silphenylen Polymers. Die weitere Versuchsdurchführung entspricht in allen Details der Beschreibung gemäß Beispiel 1 in EP 0913420. Man erhält als Ergebnis einen Feststoff als Reaktionsprodukt, der laut SEC ein gewichtsmittleres Molekulargewicht von Mw = 19900 g/mol aufweist. EP 0913420 macht keine Angaben zu Mn und PD, so dass hier kein Vergleich möglich ist. Im vorliegenden Falle wurden folgende Werte erhalten: Mn = 3042 g/mol und PD = 6,54. Sowohl im ¹H-NMR als auch im ²⁹Si-NMR werden die erwarten Signale für die Baugruppen gefunden, so dass das hier erhaltene Produkt zweifelsfrei chemisch identisch ist mit dem Produkt gemäß Beispiel 1 in EP 0913420. Das erhaltene Produkt ist in einer Konzentration von bis zu 50% in Toluol und Xylol löslich. Da im Gegensatz zu den erfindungsgemäßen Silphenylen Polymeren keine höhere Löslichkeit erreicht wird, wird dieses Material für den Eigenschaftsvergleich in der Konzentration von 50% in Toluol verwendet.

Diese 50%-ige Zubereitung in Toluol wird im nun folgenden als 4.1 bezeichnet.

### Synthesebeispiel 5: Herstellung eines Silphenylen-Polysiloxan Copolymers nach Stand der Technik gemäß US 6072016 Beispiel 1 als nicht erfindungsgemäßes Vergleichsbeispiel:

Für Beispiel 1 gemäß US 6072016 ist nach Reference Example 1 von US 6072016 ein Ausgangspolymer aus 1,4-Bis(phenylmethyl-vinylsilyl)phenylen und 1,4-Bis(dimethylsilyl)phenylen, den gleichen Ausgangsstoffen wie bereits in Synthesebeispiel 4 beschrieben und zusätzlich Vinyltrimethoxysilan erforderlich. Die Herstellung von 1,4-Bis(phenylmethylvinylsilyl)phenylen und 1,4-Bis(dimethylsilyl)phenylen wurde bereits in Synthesebeispiel 4 beschrieben. Um das Ausgangspolymer für Beispiel 1 gemäß US 6072016 zu erhalten, wurde es gemäß der Beschreibung des Reference Example 1 aus US 6072016 hergestellt. Die relativen Mengen von 1,4-Bis(phenylmethylvinylsilyl)phenylen zu 1,4-Bis(dimethylsilyl)phenylen sind hier verschieden zu Synthesebeispiel 4, bzw. Beispiel 1 gemäß EP 0913420. Daher wird terminal das Vinyltrimethoxysilan an verbliebenes Si-H des im Überschuss eingesetzten 1,4-Bis(dimethylsilyl)phenylen anhydrosilyliert. Auch in diesem Fall kann die chemische Identität des erhaltenen Produktes durch NMR und SEC Analytik aufgeklärt und sichergestellt werden, dass es sich bei dem erhaltenen Produkt, um das gleich wie im Reference Example 1 von US 6072016 beschriebene handelt. Das durch SEC bestimmte gewichtsmittlere Molekulargewicht beträgt für das Produkt im hier nachgestellten Experiment Mw = 9675 g/mol. Zum zahlenmittleren Molekulargewicht Mn und dem Polydispersitätsindex PD macht US 6072016 keine Abgaben. Sie wurden im vorliegenden Fall bestimmt zu Mn = 6365 g/mol und PD = 1,52.

Um weiterhin exakt im Stand der Technik von US 6072016 zu bleiben, wurde die Härtung des erhaltenen Bistrimethoxysilyl terminierten Silphenylens gemäß der Vorgehensweise durchgeführt, wie sie in Beispiel 1 von US 6072016 beschrieben ist, d.h. die Härtung wurde unter Verwendung von Methyltri(methyl-ethylketoxim)silan in Toluol durchgeführt. Dazu wurde eine 50%-ige toluolische Lösung des Bistrimethoxysilyl terminierten Silphenylens gemäß Reference Example 1 von US 6072016 hergestellt, wie in Beispiel 1 von US 6072016 beschrieben. Diese 50%-ige toluolische Lösung aus Toluol und dem Bistrimethoxysilyl terminierten Silphenylens gemäß Reference Example 1 von US 6072016 wird im Folgenden als 5.1 bezeichnet.

### Anwendungsbeispiel 1: Verwendung der erfindungsgemäßen Silphenylenpolymere 1.1, 2.1 und 3.1 und der nicht erfindungsgemäßen Gegenbeispiele 4.1 und 5.1 zur Herstellung von kupferkaschierten Laminaten:

Die gemäß den Synthesebeispielen 1 bis 5 hergestellten erfindungsgemäßen Silphenylen Polymere 1.1, 2.1 und 3.1 und das nicht erfindungsgemäße Silphenylen Silalkylen Copolymer 4.1 und das ebenfalls nicht erfindungsgemäße alkoxysilylterminierte Silphenylen Silalkylen Copolymere 5.1 wurden als Bindemittel verwendet, um kupferkaschierte Laminate mit einer glasfaserverstärkten Composite Schicht herzustellen. Folgende Einsatzstoffe wurden verwendet:

Kupferfolie: 35 µm dicke Kupferfolie (285 ± 10 g/m²) der Firma Jiangtong-yates Copper Foil Co Ltd, mit einer Rautiefe von Rz ≤ 8 µm und einer Mittenrautiefe von Ra ≤ 0,4 µm, Reinheit ≥ 99,8%.

Glasfaser: E-Glasfaser Type 1080 E hergestellt von Changzhou Xingao Insulation Materials Co. Ltd. Dicke 0,055 ± 0,012 mm, 47,5 ± 2,5 g/m².

Um die Vergleichbarkeit der Bindemittel zu gewährleisten, wurden alle Bindemittel in diesem Beispiel als 50%-ige Lösung in Toluol verwendet.

Um die Härtung zu initiieren, wurden die vinylfunktionellen erfindungsgemäßen Silphenylen Polymere 1.1, 2.1 und 3.1 und das nicht erfindungsgemäße Silphenylen Silalkylen Copolymer 4.1 mit jeweils 1 Gewichtsprozent Dicumylperoxid bezogen auf die Menge eingesetztes Silphenylen Polymer 1.1, 2.1 und 3.1, bzw. Silphenylen Silalkylen Copolymer 4.1 versetzt, das durch Rühren gleichmäßig in der Harzmatrix verteilt wurde. 5.1 wurde gehärtet indem Methyltri(methylethylketoxim)silan in einer Menge wie in Beispiel 1 gemäß US 6072016 angegeben zugesetzt wurde.

Laminate wurden hergestellt, indem 30 x 30 cm große Glasfaserschichten lagenweise mit dem jeweiligen Organopolysiloxan gegebenenfalls als toluolische Lösung mithilfe einer Entlüfterrolle blasenfrei imprägniert wurden. Die Glasfaserschichten wurden dabei auf einer formstabilen ebenen Unterlage aus Edelstahl gelagert, auf die eine Lage Kupferfolie aufgebracht wurde, bevor die erste Lage Glasfaser aufgelegt wurde. Insgesamt wurden jeweils 3 Lagen Glasfasergewebe nacheinander imprägniert. Um das Lösemittel gegebenenfalls zu entfernen, wurden die imprägnierten Gewebe bei 60°C in einem Vakuumtrockenschrank bei 10 mbar bis zur Gewichtskonstanz getrocknet. Danach wurde eine zweite Schicht Kupferfolie auf die imprägnierte Glaserfaserschicht oben aufgebracht und eine weitere formstabile Edelstahlplatte aufgelegt. Das Laminat wurde in einer heizbaren Presse bei 2 MPa Druck, 120 min bei 200°C und 30 mbar Unterdruck ausgeheizt. Man erhält kupferkaschierte Laminate mit einer Gesamtdicke von 260 ± 20 µm.

Die dielektrischen Eigenschaften wurden bestimmt gemäß IPC TM 650 2.5.5.13 mit einem Network Analyzer Keysight/Agilent E8361A nach der Split-Cylinder Resonator Methode bei 10 GHz. Folgende Werte wurde erhalten:

| Prüfsubstanz | Dₖ | D_{f} |
|---|---|---|
| 1.1 (erfindungsgemäß) | 3,08 | 0,0019 |
| 2.1 (erfindungsgemäß) | 3,10 | 0,0020 |
| 3.1 (erfindungsgemäß) | 3,10 | 0,0018 |
| 4.1 (nicht erfindungsgemäß) | 3,37 | 0,0033 |
| 5.1 (nicht erfindungsgemäß) | 3,73 | 0,0045 |

Die D_{f}- und die Dₖ-Werte der kupferkaschierten Laminate aus den erfindungsgemäßen Silphenylen Polymeren und dem Silphenylen Silalkylen Copolymer sind deutlich niedriger als die D_{f}-und Dₖ-Werte, die mit den ketoximgehärteten Silphenylen Silalkylen Copolymer gemäß US 6072016 erhalten wurde, das durch das verwendete Ketoximsilan einen deutlichen Organopolysiloxananteil und damit eine höhere Polarität besitzt. Da für Hochfrequenzanwendungen möglichst niedrige dielektrische Verlustfaktoren und Dielektrizitätszahlen angestrebt werden, ist dies nicht erwünscht, und die erfindungsgemäßen Silphenylen Polymeren stellen gegenüber diesem Stand der Technik mit Blick auf die dielektrischen Eigenschaften eine Verbesserung dar. Die nicht erfindungsgemäßen Silphenylen Silalkylen Polymere sind den erfindungsgemäßen Silphenylen Polymeren hinsichtlich der dielektrischen Eigenschaften ähnlicher, allerdings nicht ebenbürtig. Sie sind zu den erfindungsgemäßen Silphenylen Polymeren zwar hinsichtlich des Grades der Vermeidung von polaren Siloxanbindungen vergleichbar, allerdings verbleiben in den nicht erfindungsgemäßen Silphenylen Silaklyen Copolymeren durch die gewählte Art der Darstellung durch Hydrosilylierung Reste von Platin im Produkt, die sich negativ auf die dielektrischen Eigenschaften auswirken und zur Erhöhung des dielektrischen Verlustfaktors führen. Die chemische Zusammensetzung der Silphenylen Silalkylen Copolymeren alleine ist somit zwar grundsätzlich geeignet die erfindungsgemäßen dielektrischen Eigenschaften zu erzielen, allerdings kann dies nur genutzt werden, wenn es gelingt die Platinreste zu entfernen. Das verursacht zusätzlichen Aufwand und reduziert somit die Wirtschaftlichkeit dieser Technologie gegenüber den erfindungsgegenständlichen Silphenylen Polymeren. Zudem wurde im vierten Synthesebeispiel bereits darauf hingewiesen, dass die Ausgangsmaterialien für die Hydrosilylierung nur durch zwei vorgeschaltete Grignardsynthesen zu erhalten sind, wodurch sich der gesamte Aufwand gegenüber der erfindungsgemäßen Technologie vervielfacht, unwirtschaftlich wird und am Markt nicht mehr umsetzbar ist.

### Anwendungsbeispiel 2: Verwendung der erfindungsgemäßen Silphenylenpolymere 1.1, 2.1 und 3.1 und der nicht erfindungsgemäßen Gegenbeispiele 4.1 und 5.1 zur Herstellung metallkaschierter Laminate über Prepregs:

Die gemäß den Synthesebeispielen 1 bis 5 hergestellten erfindungsgemäßen Silphenylen Polymere 1.1, 2.1 und 3.1 und das nicht erfindungsgemäße Silphenylen Silalkylen Copolymer 4.1 und das ebenfalls nicht erfindungsgemäße alkoxysilylterminierte Silphenylen Silalkylen Copolymere 5.1 wurden als Bindemittel verwendet, um kupferkaschierte Laminate mit einer glasfaserverstärkten Composite Schicht herzustellen.

### Anstatt das Laminat ohne eine Prepreg Zwischenstufe direkt aufzubauen, wie in Anwendungsbeispiel 1, wurden diesmal Prepregs hergestellt, indem die Glasfaserlagen als einzelne Lagen jeweils auf einer Polytetrafluorethylenfolie mit der Harzzubereitung imprägniert und anschließend im Vakuumtrockenschrank zur Gewichtskonstanz getrocknet wurden. Jeweils drei auf diese Weise hergestellte Lagen aus imprägniertem Glasfasergewebe wurden anschließend auf eine Kupferfolie übereinander abgelegt und der Stapel mit einer Lage Kupferfolie abgeschlossen. Dieser Mehrschichtaufbau wurde analog zu Anwendungsbeispiel 1 zwischen zwei formstabilen Edelstahlplatten in einer vakuumpresse unter den Bedingungen wie in Beispiel 1 angegeben verpresst und ausgehärtet.

Die erhaltenen Laminate wiesen Dicken von 290 ± 20 µm auf.

An den erhaltenen Laminaten wurden folgende dielektrischen Eigenschaften gemessen:

| Prüfsubstanz | Dₖ | D_{f} |
|---|---|---|
| 1.1 (erfindungsgemäß) | 3,10 | 0,0020 |
| 2.1 (erfindungsgemäß) | 3,09 | 0,0019 |
| 3.1 (erfindungsgemäß) | 3,11 | 0,0019 |
| 4.1 (nicht erfindungsgemäß) | 3,40 | 0,0035 |
| 5.1 (nicht erfindungsgemäß) | 3,87 | 0,0048 |

Die D_{f}- und die Dₖ-Werte der kupferkaschierten Laminate aus den erfindungsgemäßen Silphenylen Polymeren und dem Silphenylen Silalkylen Copolymer sind deutlich niedriger als die D_{f}- und Dₖ-Werte, die mit den ketoximgehärteten Silphenylen Silalkylen Copolymer gemäß US 6072016 gehärtet wurde, das durch das verwendete Ketoximsilan einen deutlichen Organopolysiloxananteil und damit eine höhere Polarität besitzt. Da für Hochfrequenzanwendungen möglichst niedrige dielektrische Verlustfaktoren und Dielektrizitätszahlen angestrebt werden, ist dies nicht erwünscht und die erfindungsgemäßen Silphenylen Polymeren stellen gegenüber diesem Stand der Technik mit Blick auf die dielektrischen Eigenschaften eine Verbesserung dar. Die nicht erfindungsgemäßen Silphenylen Silalkylen Polymere sind den erfindungsgemäßen Silphenylen Polymeren hinsichtlich der dielektrischen Eigenschaften ähnlicher, allerdings nicht ebenbürtig. Sie sind zu den erfindungsgemäßen Silphenylen Polymeren zwar hinsichtlich des Grades der Vermeidung von polaren Siloxanbindungen vergleichbar, allerdings verbleiben in den nicht erfindungsgemäßen Silphenylen Silaklyen Copolymeren durch die gewählte Art der Darstellung durch Hydrosilylierung Reste von Platin im Produkt, die sich negativ auf die dielektrischen Eigenschaften auswirken und zur Erhöhung des dielektrischen Verlustfaktors führen. Die chemische Zusammensetzung der Silphenylen Silalkylen Copolymeren alleine ist somit zwar grundsätzlich geeignet, die erfindungsgemäßen dielektrischen Eigenschaften zu erzielen, allerdings kann dies nur genutzt werden, wenn es gelingt, die Platinreste zu entfernen. Das verursacht zusätzlichen Aufwand und reduziert somit die Wirtschaftlichkeit dieser Technologie gegenüber den erfindungsgegenständlichen Silphenylen Polymeren. Zudem wurde im vierten Synthesebeispiel bereits darauf hingewiesen, dass die Ausgangsmaterialien für die Hydrosilylierung nur durch zwei vorgeschaltete Grignardsynthesen zu erhalten sind, wodurch sich der gesamte Aufwand gegenüber der erfindungsgemäßen Technologie vervielfacht, unwirtschaftlich wird und am Markt nicht mehr umsetzbar ist.

### Anwendungsbeispiel 3: Verwendung der erfindungsgemäßen Silphenylenpolymere 1.1, 2.1 und 3.1 und der nicht erfindungsgemäßen Gegenbeispiele 4.1 und 5.1 im Gemisch mit organischen Polymeren zur Herstellung metallkaschierter Laminate:

Die Vorgehensweise entspricht im Wesentlichen der in Anwendungsbeispiel 2 beschriebenen, nur dass diesmal organische Polymere mit den in den Synthesebeispielen 1 bis 5 hergestellten erfindungsgemäßen Silphenylen Polymere 1.1, 2.1 und 3.1 und dem nicht erfindungsgemäßen Silphenylen Silalkylen Copolymer 4.1 und dem ebenfalls nicht erfindungsgemäßen alkoxysilylterminierten Silphenylen Silalkylen Copolymer 5.1 im Gemisch als Bindemittel verwendet werden, um kupferkaschierte Laminate mit einer glasfaserverstärkten Composite Schicht herzustellen.

Die finalen lösemittelfreien Mischungen enthielten stets 30 Gewichtsprozent der Komponenten 1.1, 2.1, 3.1, 4.1 bzw. 5.1 jeweils gemischt mit 70 Gewichtsprozent organischem Polymer. Als organische Polymere wurden Triallylisocyanurat, NORYL SA 9000, ein alpha omega methacrylatterminierter Polyphenylenether bezogen von der Firma SABIC, Mn = 2500 g/mol, Tg = 160°C und B 3000 der Firma Nippon Soda, ein flüssiges Polybutadien Mn = 3200, Viskosität bei 45°C = 210 Poise mit mehr als 85% 1,2-Vinylstruktur in der Polymerkette.

Die Polymere wurden stets im gleichen Mengenverhältnis verwendet. Sie wurden in Xylol gelöst bzw. dispergiert, wobei 30 Gewichtsteile SA 9000, 25 Gewichtsteile B 3000 und 15 Gewichtsteile Triallylisocyanurat mit 100 Gewichtsteilen Xylol dispergiert wurden.

Die so erhaltene Zubereitung wurde mit den toluolischen Lösungen der Komponenten 1.1, 2.1, 3.1, 4.1 bzw 5.1 gemäß Anwendungsbeispiel 2 so vermischt, dass jeweils das angegebene Mischungsverhältnis aus 30% 1.1, 2.1, 3.1, 4.1 bzw. 5.1 und 70% organische Komponenten in der erhaltenen Lösung vorlag. Diese Lösungen wurden dann verwendet, um wie in Anwendungsbeispiel 2 beschrieben kupferkaschierte Laminate über Prepregs herzustellen.

Die erhaltenen Laminate wiesen Dicken von 290 ± 20 µm auf.

An den erhaltenen Laminaten wurden folgende dielektrischen Eigenschaften gemessen:

| Prüfsubstanz | Dₖ | D_{f} |
|---|---|---|
| 1.1 (erfindungsgemäß) | 3,01 | 0,0019 |
| 2.1 (erfindungsgemäß) | 3,00 | 0,0018 |
| 3.1 (erfindungsgemäß) | 3,00 | 0,0018 |
| 4.1 (nicht erfindungsgemäß) | 3,39 | 0,0034 |
| 5.1 (nicht erfindungsgemäß) | 3, 67 | 0,0041 |

Die erzielten Dₖ und D_{f} Werte der kupferkaschierten Laminate unter Verwendung der erfindungsgemäßen Silphenylen Polymere 1.1, 2.1 und 3.1 sind deutlich niedriger als die D_{f} und Dₖ-Werte, die mit dem nicht erfindungsgemäßen Silphenylen Silalkylen Copolymer 4.1 und dem ebenfalls nicht erfindungsgemäßen alkoxysilylterminierten Silphenylen Silalkylen Copolymer 5.1 erzielten. Da für Hochfrequenzanwendungen möglichst niedrige dielektrische Verlustfaktoren und Dielektrizitätszahlen angestrebt werden, ist der erfindungsgemäße Effekt deutlich zu erkennen.

### Anwendungsbeispiel 4:

Durchführung eines Brandtests nach UL 94 V:
Die Prüfung wurde gemäß den Vorgaben nach UL 94-V von Underwriters Laboratories als senkrechte Brandprüfung durchgeführt. Die Prüfkörper aus den erfindungsgemäßen Silphenylen Polymere 1.1, 2.1 und 3.1 und dem nicht erfindungsgemäßen Silphenylen Silalkylen Copolymer 4.1 wurden aus den toluolischen Lösungen erhalten, in die zur Aushärtung jeweils 2% Dicumylperoxid gemischt wurde, wobei sich Prozentangabe Gewichtsprozent sind und sich auf die Menge gelöstes Produkt als 100% bezieht. In der gesamten 50%-igen Lösung sind somit 1 Gewichtsprozent Dincumylperoxid enthalten. Die Lösungen wurden jeweils in eine geeigneter Größe ausgegossen, das Lösemittel anschließend in einem Umluftofen stufenweise zunächst für 4 Stunden bei 80°C und anschließend bei 120°C für 2 Stunden verdampft, bevor die Härtung der erhaltenen Verdampfungsrückstände bei 200°C für 2 Stunden erfolgte. Die Vorgehensweise zur Härtung des nicht erfindungsgemäßen alkoxysilylterminierten Silphenylen Silalkylen Copolymer 5.1 erfolgte durch Hinzunahme des bereits zuvor beschriebenen Ketoximosilans wie in Beispiel 1 in US 6072016 beschrieben. Ansonsten entspricht die Vorgehensweise zur Erzeugung des Musterkörpers der Vorgehensweise wie für die Probekörper aus 1.1, 2.1, 3.1 und 4.1 beschrieben.

Die erhaltenen Probekörper wurden vor der Prüfung unter folgenden Bedingungen konditioniert: 2 Tage Lagerung bei 23°C 50% relativer Luftfeuchte, danach 7 Tage bei 70°C im Warmluftofen. Die Beflammung erfolgte mit einer Tirillbrennerflamme. Die Beflammungszeit betrug jeweils 2 x 10 s. Die zweite Beflammungszeit beginnt, sobald die entzündete Probe verloschen ist. Bei nicht entzündeten Proben erfolgt die zweite Beflammung im unittelbaren Anschluss an die erste Beflammung. Die Länge des Teststückes betrug 5" (127 mm) und die Breite 0,5" (12,7 mm). Die zu testenden Platten waren 0,4" (10,2 mm) dick. Die Platten wurden am oberen Ende in einer Länge von 1/4" in senkrechter Position befestigt. 12" (305 mm) unter der Testplatte wurde ein mit chirurgischer Baumwolle beschichtetes Netz platziert. Der Brenner wird so eingestellt, dass eine blaue Flamme von einer Länge von 3/4" entsteht. Die Flamme wird aus einer Entfernung von 3/8" (9,5 mm) auf den unteren Rand der Kunststoffplatte gerichtet. Nach 10 Sekunden Einwirken wird die Flamme entfernt. Die Entflammungszeit des Versuchsstückes wird notiert. Sobald die Flammenbildung aussetzt, wird die Flamme des Brenners erneut für 10 Sekunden unter dem Versuchsstück platziert. Nach dem Entfernen der Flamme werden die Entflammungszeit und die Glühdauer des Stückes notiert. Der Test wird an 5 verschiedenen Versuchsstücken durchgeführt.

Folgende Ergebnisse wurden erhalten:

| Prüfkriterium | 1.1 | 2.1 | 3.1 | 4.1* | 5.1* |
|---|---|---|---|---|---|
| Nachbrennzeit nach Beflammung | 3s | 5s | 4s | 25s | 16s |
| Nachbrennen und Nachglühen der Probe nach zweiter Beflammung | 16s | 11s | 14s | 53s | 32s |
| Brennendes Abtropfen (Entzünden der Watte) | Nein | Nein | Nein | Ja | Nein |
| Völliges Abbrennen der Probe | Nein | Nein | Nein | Nein | Nein |
| Brennbarkeitsklasse | V-0 | V-0 | V-0 | V-2 | V-1 |

| | | | | | |
|---|---|---|---|---|---|
| * nicht erfindungsgemäß | | | | | |

Die Brennbarkeitsklasse V-0 ist die höchste Brennbarkeitsklasse gemäß UL94-V. V-0 ist die Anforderung für die Zielanwendung kupferkaschierte Laminate für Hochfrequenzanwendungen. Nur die erfindungsgemäßen Silphenylenpolymere erfüllen diese Anforderung. In Summe belegen sowohl die Synthesebeispiel als auch die Anwendungsbeispiele, dass er angestrebte erfindungsgemäße Effekt erreicht wird und der bestehende Stand der Technik durch die vorliegende Erfindung in der geforderten Weise verbessert wird.

## Patentansprüche

1. Silphenylenpolymere der Formel (I)
RₐR¹_{b}Si[Y[(SiR²_{c}R³_{d})ₑ]_{f}]_{g}YSiRₐR¹_{b} (I),
wobei
R gleiche oder verschiedene Reste sein können und einen Wasserstoffrest oder einen olefinisch oder acetylenisch ungesättigten aliphatischen oder cycloaliphatischen Kohlenwasserstoffrest bedeuten,
R² unabhängig voneinander gleiche oder verschiedene Reste bedeuten, wobei R² einen Wasserstoffrest oder einen gesättigten oder olefinisch oder acetylenisch ungesättigten Si-C gebundenen C₁ - C₁₈ Kohlenwasserstoffrest bedeuten kann, der mit Heteroatomen substituiert sein kann, wobei die mehrere Sauerstoffatome im gleichen Rest R² stets durch Kohlenwasserstoffeinheiten voneinander getrennt vorliegen und Sauerstoffatome und Siliziumatome nicht miteinander zu Si-O-Einheiten verbunden vorliegen sofern beide Heteroatomarten gleichzeitig in einem Rest R² vorliegen, sondern diese sind stets durch Kohlenwasserstoffeinheiten voneinander getrennt sind, wohingegen mehrere Si-Atome im gleichen Reste R² durch direkt Si-Si-Bindungen miteinander verbunden vorliegen können und die Si-Atome stets vierwertig sind und die verbliebenen Valenzen der Si-Atome durch weitere Si-C-gebundene Substituenten abgesättigt sind, wobei diese olefinisch oder acetylenisch ungesättigt sein können,
und R² auch olefinisch oder acetylenisch ungesättigte funktionelle Gruppen umfassen kann, die ebenfalls Heteroatome enthalten können, wobei R² auch ein Hydroxyrest oder ein durch ein Sauerstoffatom an das Siliziumatom gebundener einwertiger aliphatischer, cycloaliphatischer oder aromatischer Si-C gebundener, unsubstituierter oder mit Heteroatomen substituierter organischer Kohlenwasserstoffrest mit 1 bis 18 C-Atomen sein kann,
R¹ und R³ unabhängig voneinander gleiche oder verschiedene Reste sein können und entweder einen Wasserstoffrest oder einen einwertigen aliphatischen, cycloaliphatischen oder aromatischen Si-C gebundenen, unsubstituierten oder mit Heteroatomen substituierten organischen Kohlenwasserstoffrest mit 1 bis 18 C-Atomen bedeuten, der auch ein ungesättigter Kohlenwasserstoffrest sein kann, wobei R¹ und R³ auch ein Hydroxyrest oder ein durch ein Sauerstoffatom an das Siliziumatom gebundener einwertiger aliphatischer, cycloaliphatischer oder aromatischer Si-C gebundener, unsubstituierter oder mit Heteroatomen substituierter organischer Kohlenwasserstoffrest mit 1 bis 18 C-Atomen sein können,
Y eine chemische Bindung oder einen zwei- bis zwölfwertigen aromatischen, alkylaromatischen, cycloalkylaromatischen oder einen zwei- bis zwölfwertigen aliphatischen oder cycloaliphatischen Rest mit 1 bis 48 C-Atomen bedeutet, dessen Hauptkette frei ist von Heteroatomen, wobei der Rest Y, sofern er keine chemische Bindung bedeutet, stets durch Si-C-Verknüpfung an die durch ihn verbrückten Siliziumatome gebunden ist,
a eine Zahl im Wert von 1 oder 2 bedeutet,
b eine Zahl im Wert von 1 oder 2 bedeutet, wobei die Summe a + b = 3 ist,
c eine Zahl im Wert von 0, 1 oder 2 bedeutet,
d eine Zahl im Wert von 0, 1 oder 2 bedeutet, wobei die Summe c + d = 2 ist,
e eine Zahl von 1 bis 12 bedeutet,
f eine Zahl im Wert von 1 bis 12 bedeutet und
g eine Zahl im Wert von 3 bis 250 bedeutet,
mit den Massgaben, dass
mindestens ein olefinisch oder acetylenisch ungesättigter Rest R, R¹, R² oder R³ je Silphenylenpolymer der Formel (I) vorliegen muss,
die Summe aller an Si-Atomen durch ein Sauerstoffatom gebundenen organischen Reste bezogen auf die Summe aller Si-gebundenen Reste R, R¹, R² und R³ als 100 mol% höchstens 10 mol-% betragen darf und
bezogen auf alle verbrückenden Reste Y als 100 mol-% mindestens 55 mol-% Reste Y einen zwei- bis zwölfwertigen aromatischen, alkylaromatischen und cycloalkylaromatischen Rest bedeuten.

2. Silphenylenpolymere nach Anspruch 1, bei denen die Heteroatome in R² ausgewählt werden aus Sauerstoffatomen und Siliziumatomen.

3. Silphenylenpolymere nach einem der vorangehenden Ansprüche, bei denen die olefinisch oder acetylenisch ungesättigten Reste R, R¹, R² oder R³ ausgewählt werden aus Alkenylresten, Acryloyloxy-, und Methacryloyloxyresten von Acrylsäure oder Methacrylsäure sowie Acrylsäureestern oder Methacrylsäureestern von unverzweigten oder verzweigten Alkoholen mit 1 bis 15 C-Atomen.

4. Silphenylenpolymere nach einem der vorangehenden Ansprüche, bei denen Y eine verbrückende aromatische Einheit mit 1 bis 24 C-Atomen zwischen zwei bis zwölf Carbosilyleinheiten ist.

5. Silphenylenpolymere nach einem der vorangehenden Ansprüche, bei denen die verbrückenden aromatischen Reste Y solche der Formel (IVa), (IVb) und (IVc) sind 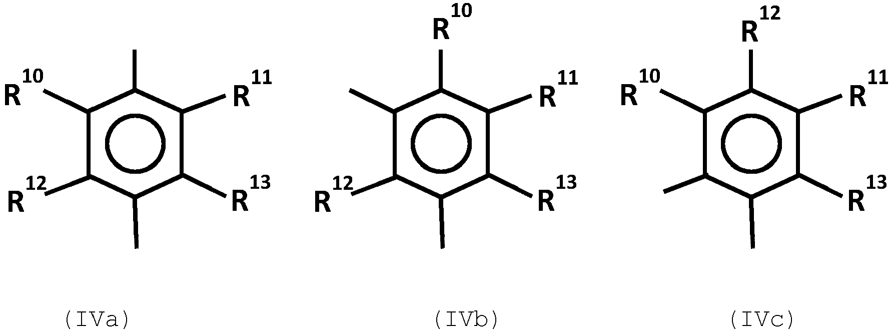 wobei die Reste R¹⁰, R¹¹, R¹² und R¹³ einen Wasserstoffrest bedeuten können oder einen substituierten oder unsubstituierten Kohlenwasserstoffrest oder eine Gruppe der Formel OR¹⁴ wobei R¹⁴ einen Kohlenwasserstoffrest bedeutet, und wobei benachbarte Reste in Formel (IVa) (IVb) und (IVc) miteinander zu cylischen Resten gekoppelt vorliegen können, so dass annelierte Ringsysteme entstehen.

6. Silphenylenpolymere nach einem der vorangehenden Ansprüche, bei denen die Summe aller an Si-Atomen durch ein Sauerstoffatom gebundenen organischen Reste bezogen auf die Summe aller Si-gebundenen Reste R, R¹, R² und R³ als 100 mol% höchstens 1 mol-% beträgt.

7. Silphenylenpolymere nach einem der vorangehenden Ansprüche, die im unvernetzten Zustand flüssig sind und bei 25°C Viskositäten von 20 bis 8 000 000 mPas besitzen, bestimmt durch rotationsviskosimetrische Messung gemäß DIN EN ISO 3219 oder fest sind und Glasübergangstemperaturen im Bereich von 25°C bis 250°C besitzen, bestimmt nach Dynamischer Differenzkalorimetrie (Differential Scanning Calorimetry, DSC) nach DIN 53765, gelochter Tiegel, Aufheizrate 10 K/min.

8. Silphenylenpolymere nach einem der vorangehenden Ansprüche, bei denen g eine Zahl im Wert von mindestens 5 bedeutet.

9. Verfahren zur Herstellung von Silphenylenpolymeren der Formel (I) gemäß einem der vorangehenden Ansprüche
RₐR¹_{b}Si[Y[(SiR²_{c}R³_{d})ₑ]_{f}]_{g}YSiRₐR¹_{b} (I),
bei dem
Verbindungen der Formel (VIII)
[Hal]ₒ-Y (VIII),
wobei
Hal für ein Cl-, Br- oder Iodatom steht,
o eine Zahl von 2 bis 12 bedeutet, und
Y die in Anspruch 1 bis 8 dafür angegebenen Bedeutungen hat,
mit Magnesium und
mit siliziumhaltigen Verbindungen, die ausgewählt werden aus Verbindungen der Formeln (IV), (V) und (VI),
R¹⁵ₕR¹⁶ᵢSi (IV),
R¹⁵ⱼR¹⁶ₖSi[SiRₗ¹⁷Rₘ¹⁸]ₙSiRⱼ¹⁵Rₖ¹⁶ (V),
R¹⁵ⱼR¹⁶ₖSi[SiRₗ¹⁷Rₘ¹⁸]ₙ-X¹-[SiRₗ¹⁷Rₘ¹⁸]ₙSiR¹⁵ⱼR¹⁶ₖ (VI),
wobei
R¹⁵ ein Halogenatom oder eine C1 - C3 Alkoxygruppe bedeutet,
R¹⁶, R¹⁷ und R¹⁸ unabhängig voneinander Reste aus der Gruppe der Reste R, R¹, R² oder R³ bedeuten, jedoch keinen Rest der Formel (II) und R¹⁸ kann zusätzlich einen Halogenrest oder einen C1 - C3 Alkoxyrest bedeuten, die keine funktionelle Gruppen enthalten, die Carbonyl- oder Carboxylgruppen, Hydroxygruppen, doppelt gebundene Stickstoffatome, primäre, sekundäre oder tertiäre Amingruppen oder Thiolgruppen umfassen
X¹ eine chemische Bindung oder einen zweiwertigen verbrückenden aliphatischen, cycloalkylaliphatischen, cycloalkylaromatischen oder einen alkylaromatischen Kohlenwasserstoffrest bedeutet, der keine funktionellen Gruppen enthält, die Carbonyl- oder Carboxylgruppen, Hydroxygruppen, doppelt gebundene Stickstoffatome, primäre, sekundäre oder tertiäre Amingruppen oder Thiolgruppen umfassen der durch Hydrosilylierung einer hydrosilylierbaren olefinisch oder acetylenisch ungesättigten Vorstufe Z der Formel R¹⁹-X²-R¹⁹ entstanden ist, in der R¹⁹ einen olefinisch oder acetylenisch ungesättigten hydrosilylierbaren C2 - C8-Rest bedeutet und X² den beidseitig um den C2 - C8 verkürzten Rest X¹ bedeutet,
h eine ganze Zahl im Wert von 1, 2, 3 oder 4 bedeutet,
i eine ganze Zahl im Wert von 0, 1, 2 oder 3 bedeutet und für die Summe h + i = 4 gilt,
j eine Zahl im Wert von 0, 1, 2 oder 3 ist, wobei j an mindestens einem terminalen Si-Atom des Di-, Oligo- oder Polysilans der Formel (V) den Wert 1 besitzt, so dass stets mindestens ein Rest R¹⁵ je Molekül der Formel (V) vorhanden ist,
k eine ganze Zahl im Wert von 0, 1, 2 oder 3 ist, wobei k + j = 3 ist,
l und m jeweils eine Zahl im Wert von 0, 1 oder 2 bedeuten, wobei gilt l + m = 2,
n eine Zahl im Wert von 0 bis 50 ist, und
Verbindungen der Formel (VIII)
[Hal]ₒ-Y (VIII),
wobei
Hal für ein Cl-, Br- oder Iodatom steht,
o eine Zahl von 2 bis 12 bedeutet, und
Y die in Anspruch 1 bis 7 dafür angegebenen Bedeutungen hat, umgesetzt werden.

10. Verfahren nach Anspruch 9, bei dem die Verbindung der Formel (VIII) ausgewählt wird aus 1,4-Dibrombenzol, 1,4-Dichlorbenzol, 1,2-Dichlorethan und 1,2-Dibromethan.

11. Verfahren nach Anspruch 9 oder 10, bei dem das Verfahren in Ether durchgeführt wird.

12. Verfahren nach Anspruch 9 bis 11, bei dem das Verfahren stufenweise ausgeführt wird, indem zuerst die Komponente der Formel (VIII) mit Magnesium reagiert und im zweiten Schritt die jeweils benötigte Auswahl an Komponenten (IV), (V), (VI) und (VII) zugegeben wird.

13. Verwendung der Copolymere gemäß einem der Ansprüche 1 bis 8 bei der Herstellung von Beschichtungsstoffen und Imprägnierungen und daraus zu erhaltenden Beschichtungen und Überzügen auf Substraten, als Bindemittel oder als Additiv in Zubereitungen.

14. Verwendung der Copolymere gemäß einem der Ansprüche 1 bis 8 zur Herstellung von metallkaschierten Laminaten.

15. Verwendung nach Anspruch 14, bei der das Metall ausgewählt wird aus Kupfer, Edelstahl, Gold, Aluminium, Silber, Zink, Zinn, Blei und Übergangsmetallen.

## Claims

1. Silphenylene polymers of the formula (I)
RₐR¹_{b}Si[Y[(SiR²_{c}R³_{d})ₑ]_{f}]_{g}YSiRₐR¹_{b} (I),
where
R may be identical or different radicals and are a hydrogen radical or an olefinically or acetylenically unsaturated, aliphatic or cycloaliphatic hydrocarbon radical,
R² independently of one another are identical or different radicals, where R² may be a hydrogen radical or
a saturated or olefinically or acetylenically unsaturated, Si-C-bonded C₁ - C₁₈ hydrocarbon radical which may be substituted by heteroatoms, where the two or more oxygen atoms in the same radical R² are always separated from one another by hydrocarbon units and where oxygen atoms and silicon atoms are not joined to one another to form Si-O units if both kinds of heteroatom are present simultaneously in one radical R², but instead are always separated from one another by hydrocarbon units, whereas two or more Si atoms in the same radical R² may be joined to one another by direct Si-Si bonds and the Si atoms are always tetravalent and the remaining valences of the Si atoms are saturated by further Si-C-bonded substituents, it being possible for these to be olefinically or acetylenically unsaturated,
and R² may also comprise olefinically or acetylenically unsaturated functional groups, which may likewise contain heteroatoms, where R² may also be a hydroxyl radical or a monovalent aliphatic, cycloaliphatic or aromatic, SiC-bonded, organic hydrocarbon radical which is bonded to the silicon atom through an oxygen atom, is unsubstituted or substituted by heteroatoms and has 1 to 18 carbon atoms,
R¹ and R³ independently of one another may be identical or different radicals and are either a hydrocarbon radical or a monovalent aliphatic, cycloaliphatic or aromatic, Si-C-bonded, organic hydrocarbon radical which is unsubstituted or substituted by heteroatoms and has 1 to 18 carbon atoms, and which may also be an unsaturated hydrocarbon radical, where R¹ and R³ may also be a hydroxyl radical or a monovalent aliphatic, cycloaliphatic or aromatic, Si-C-bonded, organic hydrocarbon radical which is bonded to the silicon atom through an oxygen atom, is unsubstituted or substituted by heteroatoms and has 1 to 18 carbon atoms,
Y is a chemical bond or a di- to dodecavalent aromatic, alkylaromatic or cycloalkylaromatic or a di-to dodecavalent aliphatic or cycloaliphatic radical having 1 to 48 carbon atoms and a main chain of which is free from heteroatoms, where the radical Y, if it is not a chemical bond, is always bonded by Si-C linkage to the silicon atoms that it bridges,
a is a number with a value of 1 or 2,
b is a number with a value of 1 or 2, where the sum a + b = 3,
c is a number with a value of 0, 1 or 2,
d is a number with a value of 0, 1 or 2, where the sum c + d = 2,
e is a number from 1 to 12,
f is a number with a value of 1 to 12, and
g is a number with a value of 3 to 250,
with the provisos that
at least one olefinically or acetylenically unsaturated radical R, R¹, R² or R³ must be present per silphenylene polymer of the formula (I),
the sum of all organic radicals bonded to Si atoms through an oxygen atom, based on the sum of all Si-bonded radicals R, R¹, R² and R³ as 100 mol%, must not be more than 10 mol%, and
based on all bridging radicals Y as 100 mol%, at least 55 mol% of radicals Y are a di- to dodecavalent aromatic, alkylaromatic and cycloalkylaromatic radical.

2. Silphenylene polymers according to Claim 1, wherein the heteroatoms in R² are selected from oxygen atoms and silicon atoms.

3. Silphenylene polymers according to either of the preceding claims, wherein the olefinically or acetylenically unsaturated radicals R, R¹, R² or R³ are selected from alkenyl radicals, acryloyloxy and methacryloyloxy radicals of acrylic acid or methacrylic acid, and acrylic esters or methacrylic esters of unbranched or branched alcohols having 1 to 15 carbon atoms.

4. Silphenylene polymers according to any of the preceding claims, wherein Y is a bridging aromatic unit having 1 to 24 carbon atoms between two to twelve carbosilyl units.

5. Silphenylene polymers according to any of the preceding claims, wherein the bridging aromatic radicals Y are of the formula (IVa), (IVb) and (IVc) 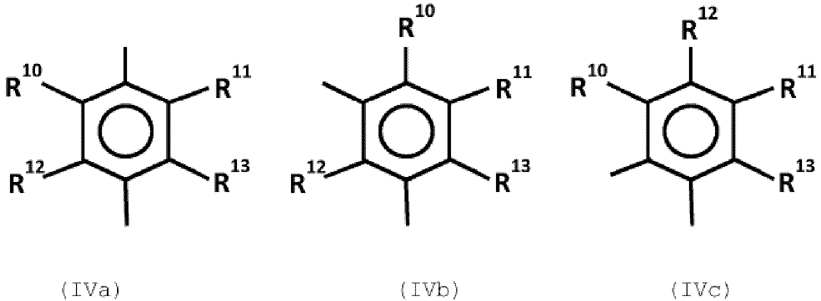 where the radicals R¹⁰, R¹¹, R¹² and R¹³ may be a hydrogen radical or a substituted or unsubstituted hydrocarbon radical or a group of the formula OR¹⁴, where R¹⁴ is a hydrocarbon radical, and where adjacent radicals in formula (IVa), (IVb) and (IVc) may be coupled to one another to form cyclic radicals, to produce fused ring systems.

6. Silphenylene polymers according to any of the preceding claims, wherein the sum of all organic radicals bonded to Si atoms by an oxygen atom, based on the sum of all Si-bonded radicals R, R¹, R² and R³ as 100 mol%, is not more than 1 mol%.

7. Silphenylene polymers according to any of the preceding claims, which in the noncrosslinked state are liquid and at 25°C possess viscosities of 20 to 8 000 000 mPas, determined by rotational viscometry according to DIN EN ISO 3219 or are solid and possess glass transition temperatures in the range from 25°C to 250°C, determined by differential scanning calorimetry (DSC) according to DIN 53765, perforated crucible, heating rate 10 K/min.

8. Silphenylene polymers according to any of the preceding claims,
wherein g is a number with a value of at least 5.

9. Process for preparing silphenylene polymers of the formula (I) according to any of the preceding claims RₐR¹_{b}Si[Y[(SiR²_{c}R³_{d})ₑ]_{f}]_{g}YSiRₐR¹_{b} (I), wherein
compounds of the formula (VIII)
[Hal]ₒ-Y (VIII),
where
Hal is a Cl, Br or iodine atom,
o is a number from 2 to 12, and
Y has the definitions indicated for it in Claim 1 to 8,
are reacted with magnesium and
with silicon-containing compounds which are selected from compounds of the formulae (IV), (V) and (VI),
R¹⁵ₕR¹⁶ᵢSi (IV),
R¹⁵ⱼR¹⁶ₖSi[SiRₗ¹⁷Rₘ¹⁸]ₙSiRⱼ¹⁵Rₖ¹⁶ (V),
R¹⁵ⱼR¹⁶ₖSi[SiRₗ¹⁷Rₘ¹⁸]ₙ-X¹-[SiRₗ¹⁷Rₘ¹⁸]SiR¹⁵ⱼR¹⁶ₖ (VI),
where
R¹⁵ is a halogen atom or a C1 - C3 alkoxy group, R¹⁶, R¹⁷ and R¹⁸ independently of one another are radicals of the group of the radicals R, R¹, R² or R³, but not a radical of the formula (II), and R¹⁸ may additionally be a halogen radical or a C1 - C3 alkoxy radical, which contain no functional groups comprising carbonyl or carboxyl groups, hydroxyl groups, doubly bonded nitrogen atoms, primary, secondary or tertiary amine groups or thiol groups,
X¹ is a chemical bond or a divalent bridging aliphatic, cycloalkylaliphatic, cycloalkylaromatic or an alkylaromatic hydrocarbon radical which contains no functional groups comprising carbonyl or carboxyl groups, hydroxyl groups, doubly bonded nitrogen atoms, primary, secondary or tertiary amine groups or thiol groups and produced by hydrosilylation of a hydrosilylatable, olefinically or acetylenically unsaturated precursor Z of the formula R¹⁹-X²-R¹⁹ in which R¹⁹ is an olefinically or acetylenically unsaturated, hydrosilylatable C2 - C8 radical and X² is the radical X¹ shortened on either side by the C2 - C8,
h is an integer with a value of 1, 2, 3 or 4,
i is an integer with a value of 0, 1, 2 or 3 and the sum h + i = 4,
j is a number with a value of 0, 1, 2 or 3, where j possesses a value of 1 at least at one terminal Si atom of the di-, oligo- or polysilane of the formula (V), so that there is always at least one radical R¹⁵ per molecule of the formula (V),
k is an integer with a value of 0, 1, 2 or 3,
where k + j = 3,
l and m are each a number with a value of 0, 1 or 2, where l + m = 2,
n is a number with a value of 0 to 50, and
compounds of the formula (VIII)
[Hal]ₒ-Y (VIII),
where
Hal is a Cl, Br or iodine atom,
o is a number from 2 to 12, and
Y has the definitions indicated for it in Claim 1 to 7.

10. Process according to Claim 9, wherein the compound of the formula (VIII) is selected from 1,4-dibromobenzene, 1,4-dichlorobenzene, 1,2-dichloroethane and 1,2-dibromoethane.

11. Process according to Claim 9 or 10, wherein the process is carried out in ether.

12. Process according to Claim 9 to 11, wherein the process is performed in stages, by first reacting the component of the formula (VIII) with magnesium and in the second step adding the respectively required selection of components (IV), (V), (VI) and (VII).

13. Use of the copolymers according to any of Claims 1 to 8 in the production of coating materials and impregnation systems and resultant coatings and coverings on substrates, as binders or as additives in preparations.

14. Use of the copolymers according to any of Claims 1 to 8 for producing metal-faced laminates.

15. Use according to Claim 14, wherein the metal is selected from copper, stainless steel, gold, aluminium, silver, zinc, tin, lead and transition metals.

## Revendications

1. Polymères de silphénylène de formule (I)
RₐR¹_{b}Si[Y[(SiR²_{c}R³_{d})ₑ]_{f}]_{g}YSiRₐR¹_{b} (I),
dans laquelle
R peuvent être des radicaux identiques ou différents et représentent un radical hydrogène ou un radical hydrocarboné aliphatique ou cycloaliphatique à insaturation oléfinique ou acétylénique,
R² représentent indépendamment les uns des autres des radicaux identiques ou différents, R² pouvant représenter un radical hydrogène ou un radical hydrocarboné en C₁-C₁₈
à liaison Si-C, à insaturation oléfinique ou acétylénique, qui peut être substitué par des hétéroatomes, les plusieurs atomes d'oxygène dans le même radical R² étant toujours séparés les uns des autres par des unités hydrocarbonées et les atomes d'oxygène et les atomes de silicium ne se trouvant pas liés entre eux en unités Si-O, dans la mesure où les deux types d'hétéroatomes sont présents simultanément dans un radical R², mais ceux-ci sont toujours séparés l'un de l'autre par des unités hydrocarbonées, tandis que plusieurs atomes de Si dans le même radical R² peuvent être liés les uns aux autres directement par des liaisons Si-Si et les atomes de Si sont toujours tétravalents et les valences restantes des atomes de Si sont saturées par d'autres substituants à liaison Si-C, ces derniers pouvant être à insaturation oléfinique ou acétylénique, et R² peut également comprendre des groupes fonctionnels à insaturation oléfinique ou acétylénique, qui peuvent également contenir des hétéroatomes, R² pouvant également être un radical hydroxy ou un radical hydrocarboné organique monovalent ayant de 1 à 18 atomes de carbone, aliphatique, cycloaliphatique ou aromatique, à liaison Si-C, non substitué ou substitué par des hétéroatomes, lié à l'atome de silicium par un atome d'oxygène,
R¹ et R³ peuvent indépendamment l'un de l'autre être des radicaux identiques ou différents et représentent soit un radical hydrogène, soit un radical hydrocarboné organique monovalent aliphatique, cycloaliphatique ou aromatique ayant de 1 à 18 atomes de carbone, à liaison Si-C, non substitué ou substitué par des hétéroatomes, qui peut également être un radical hydrocarboné insaturé, R¹ et R³ pouvant également être un radical hydroxy ou un radical hydrocarboné organique monovalent ayant de 1 à 18 atomes de carbone, lié à l'atome de silicium par un atome d'oxygène, aliphatique, cycloaliphatique ou aromatique à liaison Si-C, non substitué ou substitué par des hétéroatomes,
Y représente une liaison chimique ou un radical aromatique, alkylaromatique, cycloalkylaromatique divalent à dodécavalent ou un radical aliphatique ou cycloaliphatique divalent à dodécavalent ayant de 1 à 48 atomes de carbone, dont la chaîne principale est exempte d'hétéroatomes, le radical Y, dans la mesure où il ne représente pas une liaison chimique, étant toujours lié par une liaison Si-C aux atomes de silicium qu'il relie par pont,
a représente un nombre ayant une valeur de 1 ou 2,
b représente un nombre ayant une valeur de 1 ou 2, la somme a + b étant égale à 3,
c représente un nombre ayant une valeur de 0, 1 ou 2,
d représente un nombre ayant une valeur de 0, 1 ou 2, la somme c + d étant égale à 2,
e représente un nombre valant de 1 à 12,
f représente un nombre ayant une valeur de 1 à 12 et
g représente un nombre ayant une valeur de 3 à 250, étant entendu que
au moins un radical R, R¹, R² ou R³ à insaturation oléfinique ou acétylénique doit être présent par polymère de silphénylène de formule (I),
la somme de tous les radicaux organiques liés à des atomes de Si par un atome d'oxygène, par rapport à la somme de tous les radicaux R, R¹, R² et R³ liés à Si représentant 100 % en moles, doit être au maximum de 10 % en moles, et
par rapport à tous les radicaux Y formant un pont représentant 100 % en moles, au moins 55 % en moles de radicaux Y représentent un radical aromatique, alkylaromatique ou cycloalkylaromatique divalent à dodécavalent.

2. Polymères de silphénylène selon la revendication 1, dans lesquels les hétéroatomes dans R² sont choisis parmi des atomes d'oxygène et des atomes de silicium.

3. Polymères de silphénylène selon l'une quelconque des revendications précédentes, dans lesquels les radicaux R, R¹, R² ou R³ à insaturation oléfinique ou acétylénique sont choisis parmi les radicaux alcényle, les radicaux acryloyloxy et méthacryloyloxy d'acide acrylique ou d'acide méthacrylique ainsi que les esters d'acide acrylique ou esters d'acide méthacrylique avec des alcools ramifiés ou non ramifiés ayant de 1 à 15 atomes de carbone.

4. Polymères de silphénylène selon l'une quelconque des revendications précédentes, dans lesquels Y est une unité aromatique ayant de 1 à 24 atomes de carbone formant pont entre deux à douze unités carbosilyle.

5. Polymères de silphénylène selon l'une quelconque des revendications précédentes, dans lesquels les radicaux aromatiques Y formant pont sont ceux de formules (IVa), (IVb) et (IVc) 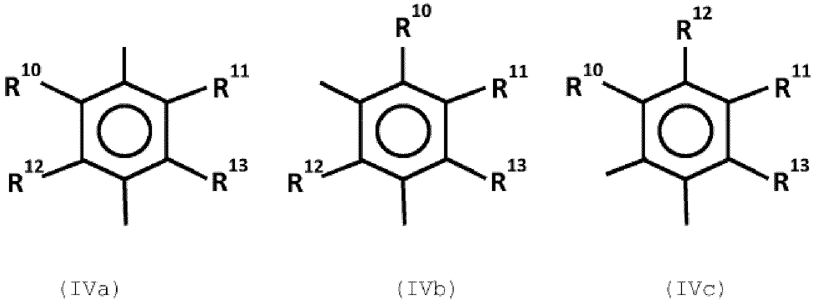 dans lesquelles les radicaux R¹⁰, R¹¹, R¹² et R¹³ peuvent représenter un radical hydrogène ou un radical hydrocarboné substitué ou non substitué ou un groupe de formule OR¹⁴ où R¹⁴ représente un radical hydrocarboné, et des radicaux adjacents dans les formules (IVa) (IVb) et (IVc) pouvant être présents couplés entre eux pour former des radicaux cycliques, de sorte qu'il en résulte des systèmes cycliques condensés.

6. Polymères de silphénylène selon l'une quelconque des revendications précédentes, dans lesquels la somme de tous les radicaux organiques liés à des atomes de Si par un atome d'oxygène, par rapport à la somme de tous les radicaux R, R¹, R² et R³ liés à Si représentant 100 % en moles, est au maximum de 1 % en moles.

7. Polymères de silphénylène selon l'une quelconque des revendications précédentes, qui sont liquides à l'état non réticulé et présentent à 25 °C des viscosités de 20 à 8 000 000 mPa.s, déterminées par mesure par viscosimètre rotatif selon DIN EN ISO 3219 ou sont solides et présentent des températures de transition vitreuse dans la plage de 25 °C à 250 °C, déterminées par calorimétrie différentielle à balayage (Differential Scanning Calorimetry, DSC) selon DIN 53765, godet perforé, vitesse de chauffage 10 /min.

8. Polymères de silphénylène selon l'une quelconque des revendications précédentes, dans lesquels g représente un nombre ayant une valeur d'au moins 5.

9. Procédé pour la préparation de polymères de silphénylène de formule (I) selon l'une quelconque des revendications précédentes
RₐR¹_{b}Si[Y[(SiR²_{c}R³_{d})ₑ]_{g}YSiRₐR¹_{b} (I),
dans lequel sont mis à réagir
des composés de formule (VIII)
[Hal]ₒ-Y (VIII),
dans laquelle
Hal représente un atome de Cl, Br ou d'iode,
o représente un nombre valant de 2 à 12, et
Y a les significations indiquées pour ce symbole dans
la revendication 1 à la revendication 8,
avec du magnésium et
avec des composés contenant du silicium, qui sont choisis parmi les composés de formules (IV), (V) et (VI),
R¹⁵ₕR¹⁶ᵢSi (IV),
R¹⁵ⱼR¹⁶ₖSi[SiRₗ¹⁷Rₘ¹⁸]ₙSiRⱼ¹⁵Rₖ¹⁶ (V),
R¹⁵ⱼR¹⁶ₖSi[SiRₗ¹⁷Rₘ¹⁸]ₙ-X¹-[SiRₗ¹⁷Rₘ¹⁸]ₙSiR¹⁵ⱼR¹⁶ₖ (VI),
dans lesquelles
R¹⁵ représente un atome d'halogène ou un groupe alcoxy en C₁ - C₃,
R¹⁶, R¹⁷ et R¹⁸ représentent indépendamment les uns des autres des radicaux choisis dans le groupe des radicaux R, R¹, R² et R³, mais aucun radical de formule (II) et R¹⁸ peut en outre représenter un radical halogéno ou un radical alcoxy en C₁-C₃, qui ne contiennent pas de groupes fonctionnels qui comprennent des groupes carbonyle ou carboxy, des groupes hydroxy, des atomes d'azote doublement liés, des groupes thiol ou groupes amino primaires, secondaires ou tertiaires
X¹ représente une liaison chimique ou un radical hydrocarboné divalent formant pont, aliphatique, cycloalkylaliphatique, cycloalkylaromatique ou alkylaromatique, qui ne contient pas de groupes fonctionnels comprenant des groupes carbonyle ou carboxy, des groupes hydroxy, des atomes d'azote doublement liés, des groupes thiol ou groupes amino primaires, secondaires ou tertiaires, qui est produit par hydrosilylation d'un précurseur Z hydrosilylable à insaturation oléfinique ou acétylénique de formule R¹⁹-X²-R¹⁹, dans laquelle R¹⁹ représente un radical en C₂-C₈ hydrosilylable à insaturation oléfinique ou acétylénique et X² représente le radical X¹ raccourci des deux côtés par élimination du fragment en C₂-C₈,
h représente un nombre entier ayant une valeur de 1, 2, 3 ou 4,
i représente un nombre entier ayant une valeur de 0, 1, 2 ou 3 et la somme h + i est égale à 4,
j est un nombre ayant une valeur de 0, 1, 2 ou 3, j ayant la valeur 1 sur au moins un atome de Si terminal du disilane, de l'oligosilane ou du polysilane de formule (V), de sorte qu'au moins un radical R¹⁵ est toujours présent par molécule de formule (V),
k représente un nombre entier ayant une valeur de 0, 1, 2 ou 3,
la somme k + j étant égale à 3,
l et m représentent chacun un nombre ayant une valeur de 0, 1 ou 2, la somme 1 + m étant égale à 2,
n est un nombre ayant une valeur de 0 à 50, et
des composés de formule (VIII)
[Hal]ₒ-Y (VIII),
dans lesquelles
Hal représente un atome de Cl, Br ou d'iode,
o représente un nombre valant de 2 à 12, et
Y a les significations indiquées pour ce symbole dans la revendication 1 à la revendication 7.

10. Procédé selon la revendication 9, dans lequel le composé de formule (VIII) est choisi parmi le 1,4-dibromobenzène, le 1,4-dichlorobenzène, le 1,2-dichloréthane et le 1,2-dibromoéthane.

11. Procédé selon la revendication 9 ou 10, dans lequel le procédé est effectué dans de l'éther.

12. Procédé selon les revendications 9 à 11, dans lequel le procédé est exécuté par étapes en faisant d'abord réagir le composant de formule (VIII) avec du magnésium et en ajoutant dans la deuxième étape le choix chaque fois requis de composants (IV), (V), (VI) et (VII).

13. Utilisation des copolymères selon l'une quelconque des revendications 1 à 8 dans la production d'imprégnations et de matières de revêtement et de revêtements et de couches de recouvrement à obtenir à partir de celles-ci sur des subjectiles, en tant que liant ou en tant qu'additif dans des préparations.

14. Utilisation des copolymères selon l'une quelconque des revendications 1 à 8 pour la production de stratifiés doublés de métal.

15. Utilisation selon la revendication 14, dans laquelle le métal est choisi parmi le cuivre, l'acier inoxydable, l'or, l'aluminium, l'argent, le zinc, l'étain, le plomb et les métaux de transition.
